# EUROPÄISCHE PATENTSCHRIFT

(11) **EP 3 583 245 B1**
(45) Veröffentlichungstag und Bekanntmachung des Hinweises auf die Patenterteilung: **19.05.2021**
(21) Anmeldenummer: 18714125.4
(22) Anmeldetag: 15.02.2018
(51) Int. Cl.: C25B 3/04, C25B 1/00, C25B 9/08, C25B 11/03, C25B 11/04

(54) **HERSTELLUNG VON GASDIFFUSIONSELEKTRODEN MIT IONENTRANSPORT-HARZEN ZUR ELEKTROCHEMISCHEN REDUKTION VON CO2 ZU CHEMISCHEN WERTSTOFFEN**
PRODUCTION OF GAS DIFFUSION ELECTRODES COMPRISING ION TRANSPORT RESINS FOR ELCTROCHEMICAL REDUCTION OF CO2 TO AFFORD CHEMICAL PRODUCTS
FABRICATION D'ÉLECTRODES À DIFFUSION GAZEUSE MUNIES DE RÉSINES DE TRANSPORT D'IONS POUR LA RÉDUCTION ÉLECTROCHIMIQUE DE CO2 EN MATIÈRES CHIMIQUES

(30) Priorität: 13.03.2017 DE 102017204096
(43) Veröffentlichungstag der Anmeldung: 25.12.2019
(73) Patentinhaber: Siemens Energy Global GmbH & Co. KG, 81739 München (DE)
(72) Erfinder: KRAUSE, Ralf, 91074 Herzogenaurach (DE); RELLER, Christian, 32425 Minden (DE); SCHMID, Bernhard, 91058 Erlangen (DE); SCHMID, Günter, 91334 Hemhofen (DE); STEINBACHER, Frank, 90542 Eckental (DE)
(86) Internationale Anmeldenummer: PCT/EP2018/053768
(87) Internationale Veröffentlichungsnummer: WO 2018/166739

(56) Entgegenhaltungen:
- US-A1- 2012 171 583
- US-A1- 2017 012 334
- US-A1- 2017 037 522

## Beschreibung

Die vorliegende Erfindung betrifft eine Elektrolysezelle, umfassend eine Gasdiffusionselektrode, umfassend ein Metall M, das ausgewählt ist aus Ag, Au, Cu, Pd und Mischungen und/oder Legierungen und/oder Salzen davon, und mindestens einen Binder, als Kathode, wobei die Gasdiffusionselektrode hydrophile und hydrophobe Poren und/oder Kanäle umfasst, wobei in den Poren und/oder Kanälen der Gasdiffusionselektrode zumindest teilweise ein Ionenaustauschermaterial enthalten ist, ein Verfahren zu ihrer Herstellung, deren Verwendung bei der Reduktion von CO₂ und/oder CO, sowie eine Elektrolyseanlage, welche diese Elektrolysezelle umfasst.

### Stand der Technik

Der hierin beschriebene Stand der Technik basiert auf dem den Erfindern bekannten Wissen und stellt nicht unbedingt den aus der Literatur bekannten Stand der Technik dar, sodass sich in der nachfolgenden Beschreibung des Stands der Technik auch Passagen befinden können, die nicht nur der zitierten Literatur entnommen werden können, sondern auch auf Weiterentwicklungen der Erfinder basieren können und somit nicht zwangsläufig allgemeinen Stand der Technik darstellen.

Heutzutage wird ca. 80 % des weltweiten Energiebedarfs durch die Verbrennung von fossilen Brennstoffen gedeckt, deren Verbrennungsprozesse eine weltweite Emission von etwa 34000 Millionen Tonnen Kohlenstoffdioxid pro Jahr in die Atmosphäre verursacht. Durch diese Freisetzung in die Atmosphäre wird der Großteil an Kohlenstoffdioxid entsorgt, was z.B. bei einem Braunkohlekraftwerk bis zu 50000 Tonnen pro Tag betragen kann.

Kohlenstoffdioxid gehört zu den sogenannten Treibhausgasen, deren negative Auswirkungen auf die Atmosphäre und das Klima diskutiert werden. Eine technische Herausforderung ist es, aus CO₂ Wertprodukte herzustellen. Da Kohlenstoffdioxid thermodynamisch sehr niedrig liegt, kann es nur schwierig zu wiederverwertbaren Produkten reduziert werden, was die tatsächliche Wiederverwertung von Kohlenstoffdioxid bisher in der Theorie beziehungsweise in der akademischen Welt belassen hat.

Ein natürlicher Kohlenstoffdioxid-Abbau erfolgt beispielsweise durch Fotosynthese. Dabei werden in einem zeitlich und auf molekularer Ebene räumlich in viele Teilschritte aufgegliederten Prozess Kohlenstoffdioxid zu Kohlehydraten umgesetzt. Dieser Prozess ist so nicht einfach großtechnisch adaptierbar. Eine Kopie des natürlichen Fotosyntheseprozesses mit großtechnischer Fotokatalyse ist bisher nicht ausreichend effizient.

Eine weitere Methode stellt die elektrochemische Reduktion des Kohlenstoffdioxids dar. Systematische Untersuchungen der elektrochemischen Reduktion von Kohlenstoffdioxid sind noch ein relativ junges Entwicklungsfeld. In den letzten Jahren sind die Forschungsaktivitäten stark angestiegen, weil durch die Verfügbarkeit von elektrischer Überschussenergie aus nicht-fossilien Erzeugungsquellen wie Solar oder Wind die Speicherung/Nutzung dieser Energie unter wirtschaftlichen Gesichtspunkten sinnvoll erscheint.

Erst seit wenigen Jahren gibt es Bemühungen, ein elektrochemisches System zu entwickeln, das eine akzeptable Kohlenstoffdioxidmenge reduzieren kann. Forschungen im Labormaßstab haben gezeigt, dass zur Elektrolyse von Kohlenstoffdioxid bevorzugt Metalle als Katalysatoren einzusetzen sind. Zur Elektrolyse von CO₂ werden folglich in der Regel Metalle als Katalysatoren eingesetzt, von denen einige beispielhaft in Tabelle 1, entnommen aus Y. Hori, Electrochemical CO2 reduction on metal electrodes, in: C. Vayenas, et al. (Eds.), Modern Aspects of Electrochemistry, Springer, New York, 2008, pp. 89-189, gezeigt sind.

**Tabelle 1: Faraday Effizienzen für die Umwandlung von CO₂ in verschiedene Produkte an verschiedenen Metallelektroden**

| Elektrode | CH₄ | C₂H₄ | C₂H₅OH | C₃H₇OH | CO | HCOO⁻ | H₂ | Total |
|---|---|---|---|---|---|---|---|---|
| Cu | 33.3 | 25.5 | 5.7 | 3.0 | 1.3 | 9.4 | 20.5 | 103.5 |
| Au | 0.0 | 0.0 | 0.0 | 0.0 | 87.1 | 0.7 | 10.2 | 98.0 |
| Ag | 0.0 | 0.0 | 0.0 | 0.0 | 81.5 | 0.8 | 12.4 | 94.6 |
| Zn | 0.0 | 0.0 | 0.0 | 0.0 | 79.4 | 6.1 | 9.9 | 95.4 |
| Pd | 2.9 | 0.0 | 0.0 | 0.0 | 28.3 | 2.8 | 26.2 | 60.2 |
| Ga | 0.0 | 0.0 | 0.0 | 0.0 | 23.2 | 0.0 | 79.0 | 102.0 |
| Pb | 0.0 | 0.0 | 0.0 | 0.0 | 0.0 | 97.4 | 5.0 | 102.4 |
| Hg | 0.0 | 0.0 | 0.0 | 0.0 | 0.0 | 99.5 | 0.0 | 99.5 |
| In | 0.0 | 0.0 | 0.0 | 0.0 | 2.1 | 94.9 | 3.3 | 100.3 |
| Sn | 0.0 | 0.0 | 0.0 | 0.0 | 7.1 | 88.4 | 4.6 | 100.1 |
| Cd | 1.3 | 0.0 | 0.0 | 0.0 | 13.9 | 78.4 | 9.4 | 103.0 |
| Tl | 0.0 | 0.0 | 0.0 | 0.0 | 0.0 | 95.1 | 6.2 | 101.3 |
| Ni | 1.8 | 0.1 | 0.0 | 0.0 | 0.0 | 1.4 | 88.9 | 92.4 |
| Fe | 0.0 | 0.0 | 0.0 | 0.0 | 0.0 | 0.0 | 94.8 | 94.8 |
| Pt | 0.0 | 0.0 | 0.0 | 0.0 | 0.0 | 0.1 | 95.7 | 95.8 |
| Ti | 0.0 | 0.0 | 0.0 | 0.0 | 0.0 | 0.0 | 99.7 | 99.7 |

In Tabelle 1 sind Faraday Effizienzen (FE) in [%] von Produkten angegeben, die bei der Kohlenstoffdioxid-Reduktion an verschiedenen Metallelektroden entstehen. Die angegebenen Werte gelten für eine 0,1 M Kaliumhydrogencarbonatlösung als Elektrolyten.

Wird Kohlenstoffdioxid beispielsweise an Silber-, Gold-, Zink-, Palladium- und Galliumkathoden nahezu ausschließlich zu Kohlenstoffmonoxid reduziert, entstehen an einer Kupferkathode eine Vielzahl an Kohlenwasserstoffen als Reaktionsprodukte.

An einer Silberkathode würden jedoch überwiegend Kohlenmonoxid und wenig Wasserstoff entstehen. Die Reaktionen an Anode und Kathode können beispielhaft mit folgenden Reaktionsgleichungen dargestellt werden:

| | |
|---|---|
| Kathode: | 2 CO₂ + 4 e⁻ + 4 H⁺ → 2 CO + 2 H₂O |
| Anode: | 2 H₂O → O₂ + 4 H⁺ + 4 e- |

Von besonderem wirtschaftlichem Interesse ist beispielsweise die elektrochemische Erzeugung von Kohlenstoffmonoxid, Methan oder Ethen (Ethylen), wie auch anderen Stoffen.

**Beispiele:**

| | |
|---|---|
| Kohlenmonoxid: | CO₂ + 2 e- + H₂O → CO + 2 OH⁻ |
| Ethylen: | 2 CO₂ + 12 e⁻ + 8 H₂O → C₂H₄ + 12 OH⁻ |
| Methan: | CO₂ + 8 e- + 6 H₂O → CH₄ + 8 OH⁻ |
| Ethanol: | 2 CO₂ + 12 e- + 9 H₂O → C₂H₅OH + 12 OH⁻ |
| Monoethylenglykol: | 2 CO₂ + 10 e- + 8 H₂O → HOC₂H₄OH + 10 OH- |

Erst in den letzten Jahren kam es vermehrt zu systematischen Untersuchungen der elektrochemischen Reduktion von CO₂. Trotz vieler Bemühungen ist es bisher nicht gelungen, ein elektrochemisches System zu entwickeln, mit dem bei hinreichend hoher Stromdichte und akzeptabler Ausbeute CO₂ langzeitstabil und energetisch günstig zu konkurrenzfähigen Energieträgern reduziert werden konnte. Aufgrund der wachsenden Ressourcenknappheit an fossilen Brennstoffen und der volatilen Verfügbarkeit von regenerativen Energiequellen rückt die Forschung der CO₂-Reduktion immer stärker in den Fokus des Interesses. Hierbei würden CO₂-Emissionen verringert und das CO₂ könnte als kostengünstige Kohlenstoffquelle genutzt werden.

Zur Gewährleistung einer hohen Stromdichte oder bei Versuchen, diese noch weiter zu erhöhen, wurde bisher lediglich die an der katalytisch aktiven Kathodenoberfläche erfolgende Kohlenstoffdioxid-Reduktion betrachtet. Elektrolysezellen, die zur elektrochemischen Reduktion von Kohlenstoffdioxid geeignet sind, bestehen üblicherweise mindestens aus einem Kathoden- und einem Anodenraum, wobei beispielsweise auch ein Gasraum, etc., vorhanden sein kann. Zum Erreichen einer effektiven Umsetzung des eingesetzten CO₂ ist die Kathode idealer Weise als poröse Gasdiffusionselektrode ausgeführt, die meist aus einer Mischung eines anorganischen Metallkatalysators (z.B. Ag, Au, Cu, Pb, etc.) und einem organischen Binder (z.B. PTFE (Polytetrafluorethylen), PVDF (Polyvinyliendifluorid), PFA (Perfluoralkoxy-Polymere), FEP (fluorierte Ethylen-Propylen-Copolymere), PFSA (Perfluorsulfonsäure-Polymere))besteht. Zur Einstellung der Hydrophilie können auch hydrophile Materialien wie Polysulfone, z.B. Polyphenylsulfone, Polyimide, Polybenzoxazole oder Polyetherketone bzw. allgemein im Elektrolyten elektrochemisch stabile Polymere, wie auch Z.B. polymerisierte "Ionische Flüssigkeiten", oder organische Leiter wie PEDOT:PSS oder PANI (champhersulfonsäuredortiertes Polyanilin eingesetzt werden. Die präparierten Elektroden sind durch eine hohe Konnektivität der Poren und eine breite Porenradienverteilung gekennzeichnet.

Im bisherigen Stand der Technik liegen die Stromdichten bekannter Methoden ohne Gasdiffusionselektroden üblicherweise weit unter den für eine wirtschaftliche Nutzung relevanten Werten <100mA/cm². Technisch relevante Stromdichten können unter Verwendung von Gasdiffusionselektroden erzielt werden. Dies ist aus dem bestehenden Stand der Technik beispielsweise für großtechnisch betriebene Chloralkalielektrolysen bekannt.

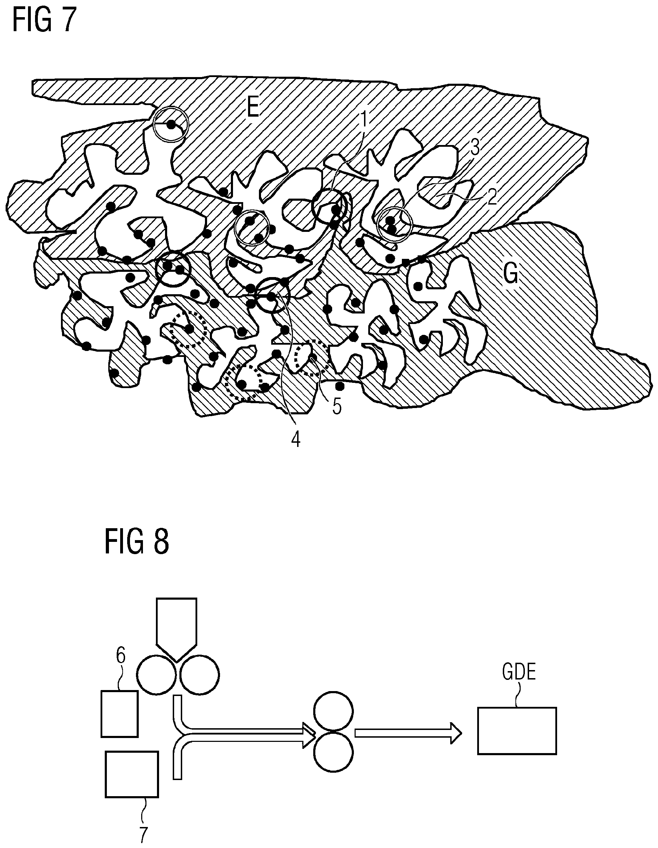

Beispielsweise wurde Silber/ Silberoxid/ PTFE- basierte Gasdiffusionselektroden in jüngster Zeit für die Erzeugung von Natronlauge im bestehenden Chloralkalielektrolyseprozess (Sauerstoffverzehrelektroden) großtechnisch eingesetzt. Die Effizienz des Chloralkalielektrolyseprozesses kann im Gegensatz zur herkömmlichen Elektroden um 30-40% erhöht werden. Die Methodik der Katalysatoreinbettung mit PTFE ist aus einer Vielzahl von Veröffentlichungen und Patenten bekannt. Die Methodik des "Trockenverfahrens" basiert auf einem Walzenkalendrierprozess von PTFE/ Katalysatorpulvern. Die entsprechende Technik ist auf ein Patent von 1988 zurückzuführen, EP0297377A2, wobei Elektroden auf Mn₂O₃-Basis für Batterien hergestellt wurden. In DE 3710168A1 wird erstmalig auf die Anwendung des Trockenprozesses hinsichtlich der Präparation von metallischen Elektrokatalysatorelektroden hingewiesen. Die Technik wurde des Weiteren in Patenten zur Herstellung silberbasierten (Silber (I) oder Silber (II) Oxid) Gasdiffusionselektroden (Sauerstoffverzehrelektroden) eingesetzt. In den Patenten EP2444526A2 bzw. in DE102005023615A1 werden Mischungen erwähnt, die einen Binderanteil von 0.5-7% aufweisen. Als Träger wurden Ag bzw. Nickelnetze mit einem Drahtdurchmesser von 0,1- 0,3mm und einer Maschenbreite von 0,2 - 1,2 mm genannt. Die Aufgabe des Pulvers erfolgt direkt auf das Netz, bevor es dem Walzenkalander zugeführt wird. Die DE10148599 A1 und EP0115845B1 beschreiben einen ähnlichen Prozess, bei dem die Pulvermischung zuerst zu einem Fell bzw. Film extrudiert wird, der in einem weiteren Schritt auf das Netz gepresst wird, wie in beispielsweise Fig. 8 schematisch gezeigt ist, wobei in einem Zweistufenkalendrierprozess das Katalysatormaterial 6 auf das Netz 7 gegeben wird und zur Gasdiffusionselektrode GDE kalandriert wird.

Letztere Methode ist aufgrund der geringeren mechanischen Stabilität weniger geeignet als der Einschrittprozess. Die EP2410079A2 beschreibt das Einstufenverfahren zur Herstellung einer silberbasierten Sauerstoffverzehrelektrode mit der Ergänzung von Metalloxidzuschlägen wie TiO₂, Fe₃O₄, Fe₂O₃, NiO₂, Y₂O₃, Mn₂O₃, Mn₅O₈, WO₃, CeO₂, Spinellen wie CoAl₂O₄, Co(AlCr)₂O₄, inversen Spinellen wie (Co, Ni Zn)₂ (Ti, Al)O₄, sowie Perowskiten wie LaNiO₃, ZnFe₂O₄. Als ebenfalls geeignet wurden Zuschläge an Siliziumnitrid, Bornitrid, TiN, AlN, SiC, TiC, CrC, WC, Cr₃C₂, TiCN bzw. Oxide des Typs ZrO₂, WO₃ identifiziert. Die Materialien werden hierbei als Füller deklariert. Ziel ist hier ausdrücklich die Verringerung des hydrophoben Charakters der Elektrode.

Aus der DE10335184A1 sind Katalysatoren bekannt, die für die Sauerstoffverzehrelektroden alternativ verwendet werden können, wie Edelmetalle, z.B. Pt, Rh, Ir, Re, Pd, Edelmetalllegierungen, z.B Pt-Ru, edelmetallhaltige Verbindungen, z.B. edelmetallhaltige Sulfide und Oxide, sowie Chevrelphasen, z.B. Mo₄Ru₂Se₈ oder Mo₄Ru₂S₈, wobei diese auch Pt, Rh, Re, Pd, etc. enthalten können.

Bekannte Cu-basierte Gasdiffusionselektroden zur Erzeugung von Kohlenwasserstoffen auf der Basis von CO₂ sind beispielsweise in den Arbeiten von R. Cook [J. Electrochem.Soc., Vol. 137, No. 2, 1990] erwähnt, wo ein nasschemisches Verfahren basierend auf einer PTFE 30B (Suspension)/Cu(OAc)₂/ Vulkan XC 72 Mischung erwähnt wird. Die Methode beschreibt, wie anhand von drei Beschichtungszyklen eine hydrophobe leitfähige Gastransportschicht und anhand von drei weiteren Beschichtungen eine katalysatorbeinhaltende Schicht aufgetragen wird. Nach jedem Schichtauftrag erfolgt eine Trocknungsphase (325°C) mit anschließendem statischen Pressvorgang (1000-5000 Psi). Für die erhaltenen Elektrode wurde eine Faraday-Effizienz von >60% und eine Stromdichte von >400 mA/cm² angegeben. Reproduktionsexperimente belegen, dass das beschriebene statische Pressverfahren nicht zu stabilen Elektroden führt. Es wurde ebenfalls ein nachteiliger Einfluss des zugemischten Vulkan XC 72 festgestellt, sodass ebenfalls keine Kohlenwasserstoffe erhalten wurden.

Die beschrieben Kalendriermethoden führen zu hochporösen einschichtigen Elektroden, die durch geringe Strömungswiderstände bzw. niedrige Blasenbildungspunkte von ca. 5-20mbar gekennzeichnet sind. Durch die hohe Porösität (50-70%) bzw. durch große Porenöffnungsradien, die durch derartige Herstellungsweise bedingt sind, haben die entsprechend präparierten Elektroden innerhalb der CO₂ Elektrolyse in wässrigen Elektrolyten sehr enge Betriebsfester. Dies ist meist dadurch gekennzeichnet, dass Kationen wie z.B. Li⁺, K⁺, Na⁺, Cs⁺ des Elektrolyten durch das elektrische Anziehung der Kathode in die poröse Struktur eindringen und dort nach der folgenden Reaktionsgleichung mit gebildeten OH⁻ Ionen und absorbiertes CO₂ Hydrogencarbonate bilden können, die aufgrund des hohen Salzgehalts des Elektrolyten bei höhere Stromdichte oft ausfallen.

M⁺+CO₂+OH⁻ → MHCO₃ ↓

Als weiterer unerwünschter Folgeeffekt wird das passive Eindringen von Wasser durch Diffusion entlang des Konzentrationsgradienten (Osmose) beobachtet, auch als "Wasser-Einlassdruck" Effekt bekannt. Als Folge der beschriebenen Versalzung kann je nach Salzmenge und Feuchtigkeitsgehalt ein vollständiges Vorstopfen der Porenstruktur erfolgen, indem Anionen erzeugt werden und langsamer aus den Poren heraus diffundieren als Kationen elektrostatisch hineingezogen werden. Neben der vollständigen Verstopfung durch Salzkristalle besteht die Möglichkeit der vollständigen Durchflutung mit Elektrolyt, sodass dieser an der Rückseite kontinuierlich austreten kann. Beide Grenzzustände führen zum Zusammenbruch des stabilen Betriebes und wirken sich direkt auf die ermittelten Produkt-Faraday-Effizienzen bzw. auf die erreichbare Stromdichte aus. Letzteres Phänomen ist auch aus dem Bereich der Chloralkalielektrolyse bekannt und wurde in der DE102010054643A1 sowie in der EP2398101A1 als kritisch betrachtet, da die durchtretende Flüssigkeit einen kontinuierlichen Film an der Rückseite ausbilden kann, der einen weiteren Gaszutritt in das Porensystem verhindern kann.

Im idealen Betriebszustand der Gasdiffusionselektrode sollte jedoch eine stabile Ausbildung der Dreiphasengrenze Katalysator/Elektrolyt/Gas gewährleistet sein. Ein weiteres Kriterium ist der Blasenbildungspunkt der Gasdiffusionselektrode, der aufgrund der hohen Porosität bei kalandrierten Elektroden sehr gering ist im Bereich von 5-20mbar.

Elektroden mit geringen Blasenbildungspunkten reagieren relativ stark auf Druckschwankungen, sodass eine Regelung des Differenzdruckes (Staudruck des CO₂ hinter der Elektrode) durch einen Differenzdruckregler in einer technischen Anwendung kompliziert ist, wie beispielsweise in DE102013011298A1 zu sehen, wobei eine kompliziertere Regelschleife mit den Regelparametern: Gaszusammensetzung, Druck und Volumenstrom erforderlich werden kann.

Aus dem Forschungsfeld der elektrochemischen Reduktion von CO₂ sind Arbeiten bekannt, die eine MEA (Membrane Electrode Assembly) verwenden und den Konzepten zur elektrochemischen Reduktion von CO₂ in Ionenaustauschelektrolyseuren mit festem Elektrolyt ähneln:
In der US 9481939B2 und der US 2016/0251766A1 wird beispielsweise ein Verfahren für die elektrochemische Reduktion von CO₂ beschrieben, welches CO als Zielprodukt verfolgt und bei dem ein mit Imidazoliumgruppen modifiziertes Vinylbenzen-Ionomer eingesetzt wird, Poly 1-(p-vinylbenzyl)-3-methyl-imidazolium. Als weitere funktionelle Anionenaustauscher-Gruppen werden 1-(2-hydroxyethyl)imidazolium-Gruppierungen beschrieben. Als Polymerbackbone werden hauptsächlich Polyvinylbenzyl-Strukturen verwendet. Es werden ebenfalls CoPolymerisate aus Vinylbenzylchlorid und Styrol beschrieben, Poly(4-VBC-co-St). Darüber hinaus wird auch Poly(2,6-dimethyl-1,4-phenylenoxid) erwähnt. Bei dem beschriebenen Verfahren stehen Anode und Kathode in direktem Kontakt mit der Membran. Die Elektroden sind auf der Basis von katalysatorbeschichteten Kohlepapier (GDL) (Sigracet 35 BC) gefertigt. Es handelt sich um keine Vollkatalysator-Gasdiffusionselektroden. Reproduktionsexperimente führten zu Stabilitätsproblemen des Ionomers auf der Anodenseite.

Für die elektrochemische Reduktion von CO₂ zu Methanol werden in der US7704369B2 zudem Alkylammoniumhalogenide als Elektrolyt in wässrigen Mischungen vorgeschlagen. In Journal of Power Sources 223 (2013), S. 68-73 wird eine Methode beschrieben, in der eine elektrolytfreie Kathode aus Zinn verwendet wird. Das Verfahren beruht auf einer Kationenaustauschermembran mit einer Elektrodenanordnung, die aus dem Bereich der Brennstoffzellen bekannten ist.

In D. Dewolf, Catalysis Letters (1988), (1), S. 73-83 wird eine flüssigkeitsfreie Kupfer/Nafion-basierte Elektrode verwendet, die ebenfalls in einem Elektrolyseur mit Kationenaustauschermembran betrieben wird. Als Zielprodukte werden Methan und Ethylen bei sehr geringen Stromdichten von 1 mA/cm² erwähnt.

L. Aeshala, Separation and Purification Technology 2012 (94), S. 131-137 wird ebenfalls ein Verfahren mit Kupferkatalysator in einer Anordnung mit festem Elektrolyt, z.B Nafion, Speek, alkalidotiertem PVA, beschrieben. In einer weiteren Veröffentlichung dieser Gruppe (L. Aeshala, Journal of CO2 Utilization, 2013 (3), S. 49-55) werden ebenfalls Kupferkatalysatoren mit festen Anion- und Kationenaustauscherelektrolyten als MEA und nicht als Bestandteil der Elektrode selbst beschrieben, nämlich säuredotiertes CMI 7000 und alkalidotiertes AMI 7001. Eine Prozessverbesserung wurde in Phys. Chem. Chem. Phys. 2014, (16), S. 17588-17594 beschrieben, die die Modifikation des festen Elektrolyten mit funktionellen Gruppen beinhaltet (alkalidotiertes PVA/ PEI).

In S. Shironita, J. Power Sources, 2013 (228), S. 68-74 wird eine reversible Methanolbrennstoffzelle zur Herstellung von Methanol durch Elektroreduktion von CO₂ beschrieben. Es wurden Pt-Ru/C Katalysatoren mit einem MEA-Aufbau verwendet.

Die in den beschriebenen Verfahren verwendeten Elektroden basieren ausschließlich auf katalysatorbeschichteten Kohlefaser GDL Strukturen, die aus dem Entwicklungsfeld von Brennstoffzellen stammen und für industriell betriebene Elektrolyseverfahren aufgrund der geringen mechanischen Stabilität üblicherweise nicht geeignet sind. Ein weitere Nachteil ist gewöhnlich der Ruß-bzw. Kohlebestandteil, der meist Verunreinigungen an Übergangsmetallen wie Ni, Fe aufweist, und somit die unerwünschte Bildung von Wasserstoff verstärkt wird. Die Haftung der Katalysatorpartikel auf der GDL Struktur ist üblicherweise ebenfalls nicht ausreichend, sodass bei einem Betrieb über mehrere 100-1000 h ein signifikanter Katalysatorverlust auftritt. Ein ähnliches Problem kann zudem bei der Erneuerung von Membranen beobachtet werden, da bei der Trennung von GDL und Membran ein Großteil des Katalysators verloren gehen kann. Gasdiffusionselektroden, die nach dem Vollkatalysator-Konzept aufgebaut sind, weisen essentielle Vorteile gegenüber diesen Methoden auf. Die Anwendbarkeit der ionischen Anbindung derartiger Elektroden an eine Membran ist bisher nicht bekannt.

Aus anderen Anwendungsfeldern wie z.B. der Elektrodialyse sind Anionenaustauscher-Membranen bekannt, die jedoch nicht katalysatormodifiziert sind. Die Verwendung von Ionenaustauscher-Harzen in Elektrolysezellen ist aus dem Bereich der Austauscherregenerierung mittels Elektrodeionisation (EDI) bekannt. Diese Verfahren unterscheiden sich jedoch grundlegend von der elektrochemischen Reduktion von CO₂.

Die US 2017/012334 A1 offenbart eine Luftelektrode für eine Metall-Luft-Batterie, wobei die Luftelektrode einen Separator aus einem Hydroxid-Ionen leitenden anorganischen Festelektrolyten, welcher ein dichtes Keramikmaterial ist, umfasst.

In der US 2012/171583 A1 sind Verfahren und Systeme zur elektrochemischen Gasphasenreduktion von Kohlendioxid beschrieben.

Aus der US 2017/037522 A1 ist eine Vorrichtung bekannt, welche Kohlendioxid zu einem Ameisensäure-Reaktionsprodukt umsetzt.

Der Einsatz von Gasdiffusionselektroden innerhalb der Elektroreduktion von CO₂ in wässrigen Elektrolytlösungen ist üblicherweise in einem relativ schmalen Prozessfenster über längere Zeit >1000h möglich. Anodenraum und Kathodenraum werden typischerweise in einem CO₂-Elektrolyseur mit einer kationenanionen-selektiven Membran oder einem Diaphragma voneinander getrennt gehalten. Dies verhindert eine Vermischung der an der Kathode und an der Anode gebildeten, gasförmigen Wertstoffe. Obwohl die verwendeten Membranen für Gase praktisch undurchlässig sind, müssen sie durchlässig für ionische Ladungsträger sein. Da die üblicherweise verwendeten Membranen chemisch feste Säuren sind, kann der Ladungstransport gewöhnlich nur durch positiv geladen Spezies wie Protonen oder Elektrolytkationen (z.B. Li⁺, Na⁺; K⁺; Rb⁺; Cs⁺; NRR'R"R'''⁺, wobei R, R', R", R''' gleiche oder verschiedene organische Reste und/oder D, H sein können) erfolgen.

Dies führt dazu, dass während des Elektrolysebetriebs die Kation-Konzentrationen von Anolyt und Katholyt auseinanderlaufen. Im Katholyten wird die Ladung der einströmenden Kationen durch an der Kathode entstehenden Hydroxidionen, die zu Hydrogencarbonat- oder Carbonat-Ionen weiterreagieren können, ausgeglichen. Hierdurch kommt es zu einem steten Anstieg der Konzentration an Carbonaten im Katholyten sowie ggf. einem Anstieg des pH-Werts bis zum HCO₃⁻/CO₂ Gleichgewicht. Im Betrieb könnte es im schlimmsten Fall zu einem Ausfallen von unlöslichen Salzen im Katholyten oder auf bzw. in der Elektrode kommen.

Im Anolyten werden die fehlenden Kationen durch an der Anode generierte Protonen ersetzt. Dies führt gewöhnlich entweder zu einer Entwicklung von Säure im Anolyten, was zu einem Abfall des pH-Werts führt, oder im Fall von z.B. Hydroxid- oder Carbonatelektrolyten zur Neutralisation der Anionen. Im ersteren Fall könnte der Anolyt in reines Wasser umgewandelt werden. Ein weiteres Problem stellt die Migration von Salzen in die poröse Elektrode selbst dar. Ist die Elektrode nicht selbst ionenleitfähig, kann eine Anbindung der elektrochemisch aktiven Zentren an Wasser- und Ionentransport nur durch eine teilweise Durchdringung der Elektrode mit dem flüssigen Elektrolyten erfolgen. Für eine Ladungskompensation an der Kathode sind jedoch üblicherweise zwei Triebkräfte zu beachten; zum einen die elektrostatische Anziehung der ElektrolytKationen, zum anderen werden an der Kathode anionische Spezies i.d.R. Hydrogencarbonat-Ionen erzeugt, die ein Kation zum Ladungsausgleich benötigen. Hierdurch wird ein Konzentrationsgradient geschaffen der ebenfalls zum Eindringen von Kationen in die Elektrode führt.

Häufig geht das Ausmaß dieser Ladungskompensation über das für eine ionische Anbindung nötige Maß hinaus. Aufgrund von Elektro-Osmose kann auch Elektrolyt auf die der Elektrolyt-Kammer abgewandte Seite der Elektrode gelangen. Dies kann in einem Grenzfall zur Porenverstopfung führen, sodass eine unerwünschte Unterversorgung des Katalysators mit CO₂ vorliegen kann. Als weiterer Grenzfall könnte ein starker Durchtritt des wässrigen Mediums durch die Poren beobachtet werden, der zu einer Flutung des Porensystems und ebenfalls zu einer CO₂ Unterversorgung des Katalysators beitragen kann. Diese Problematik wird häufig bei Elektrolyseuraufbauten beobachtet, bei denen die Kathode in direktem Kontakt zu einem flüssigen, salzhaltigen Elektrolyten steht. Ein weiteres mögliches Problem dieser Variante ist die Durchflutung der Poren mit Elektrolyt. Als eine bekannte Ursache für das Eindringen von Elektrolyt in die Poren der Elektrode kann der hydrostatische Druck der Wassersäule im Elektrolytspalt genannt werden, durch den die technische Bauhöhe der Elektrolysezellen begrenzt wird. Im Betrieb kann auch eine zunehmende SalzKristallisation von Hydrogencarbonaten im Bereich der elektrolytabgewandten Seite beobachtet werden, die in einem Grenzfall zur Porenverstopfung führen kann, sodass eine unerwünschte Unterversorgung des Katalysators mit CO₂ erfolgt. Als weiterer Grenzfall kann ein starker Durchtritt des wässrigen Mediums durch die Poren beobachtet werden, der zu einer Flutung des Porensystems und ebenfalls zu einer CO₂ Unterversorgung des Katalysators beiträgt. Ein stabiler Betriebszustand kann unter der Vermeidung der genannten Grenzfälle erreicht werden.

Folglich stellt es sich als technisch erforderlich dar, das stabile Betriebsfenster für eine industrielle Anwendung der Technologie zu verbreitern, um eine effizientere Umsetzung des CO₂ im Langzeitbetrieb großer Zellen zu gewährleisten, um die aus dem Stand der Technik bekannten Nachteile zu vermeiden.

Ein Ziel der vorliegenden Erfindung ist daher die Herstellung von Gasdiffusionselektroden mit erhöhten Blasenbildungspunkten (bubble point) und erhöhten Flutungsdrücken (wetting pressures), um das Betriebsfenster der Gasdiffusionselektroden zu verbreitern und die Versalzung bzw. den Elektrolytdurchtritt zu unterbinden.

Es ist eine weitere Aufgabe der Erfindung, durch eine Alternative bzw. ein verbessertes Verfahren Gasdiffusionselektroden zur Kohlenstoffdioxid-Verwertung anzugeben.

### Zusammenfassung der Erfindung

Die Erfinder haben erstens gefunden, dass bei Zellaufbauten mit Elektrolytspalt zwischen Kathode und Membran/Diaphragma bei CO₂-Betrieb Salzausscheidungen in der Gasdiffusionselektrode insbesondere bei höheren Betriebstemperaturen auftreten, die zum Ausfall der GDE führen.

Die Erfinder haben zweitens gefunden, dass bei Zellaufbauten ohne Elektrolytspalt bzw. bei der Verwendung einer M/DEA (Membran-Elektroden-Anordnung, "membran/diaphragma electrode assembly") mit einer Gasdiffusionselektrode als Kathode es im Elektrolysebetrieb zur starken Salzbildung/-ausscheidung auch im Bereich der Grenzfläche zwischen Gasdiffusionselektrode (Kathode) und der Separatormembran/-diaphragmas kommen kann, sodass kein stabiler Elektrolysebetrieb gewährleistet ist. Die Salzbildung/-ausscheidung ist auch unabhängig davon, ob sich die Anode direkt auf der Membran befindet oder ob ein separater Elektrolytspalt in der Zelle vorgesehen wurde. Ursächlich hierfür ist wohl die zuvor beschriebene Bildung von Hydrogencarbonationen während der Elektrolyse und die daraus resultierende Bildung von Hydrogencaronatsalzen aus den durch die Membran transportierten Kationen. Ohne flüssigen Elektrolyt oder genügend aktiven Anionentransport können diese bzw. ihre Salze üblicherweise nicht abgeführt werden.

Insbesondere bei der M/DEA ist die Anreicherung der Elektrolytkationen im Bereich der Grenzfläche üblicherweise auf die Elektroosmose zurückzuführen. Ein Konzentrationsgradient kann hierbei dann elektrodenseitig nicht einfach abgebaut werden, da eine katalysatorbasierte Gasdiffusionselektrode gewöhnlich nur eine sehr schlechte Anionenleitfähigkeit aufweist bzw. bisher gar nicht vorgesehen wurde. Zur Verbesserung der Betriebsstabilität werden im Rahme der vorliegenden Erfindung Anionenaustauschermaterialien als Bindermaterial bzw. Additiv verwendet, um beispielsweise entstehende OH⁻-Ionen schnell abzuleiten bzw. teilweise abzupuffern, sodass die Reaktion mit CO₂ und die damit verbundene Bildung von Hydrogencarbonaten verringert werden kann bzw. die Anionenaustauscherharze HCO₃⁻ selbst leiten. Da Anionenaustauscher kationische Funktionalitäten enthalten, sind bereits intrinsisch Gegenionen zur Ladungskompensation zu den entstehenden Hydrogencarbonat-Ionen vorhanden, und es ist kein Eindringen von Kationen in die Elektrode mehr erforderlich. Vielmehr kann ein Transport bzw. eine Verdrängung von Anionen aus der Elektrode ermöglicht werden.

Die Anionenaustauscherharze stellen damit gleichzeitig auch einen Pfad zur Verfügung, auf dem beispielsweise Hydroxid- bzw. Hydrogencarbonatanionen aus der Kathode in Richtung des elektrischen Feldes abtransportiert werden können, sodass keine weiteren Kationen aus dem Elektrolyt zur Ladungskompensation herangezogen werden müssen, die wiederum eine Auskristallisation von Salzen und damit eine Blockade der GDE bewirken können.

Des Weiteren stellt speziell ein integrierter Anionenaustauscher eine Blockade für Kationen dar, was einer Salzausscheidung zusätzlich entgegenwirken kann. Dabei ist es unerheblich, ob die Elektrode vollständig mit dem Anionenaustauscher durchsetzt ist. Wichtig ist die Anionentranspotfunktionalität in Richtung des Elektrolyten bzw. im aktiven Bereich der GDE.

In einem ersten Aspekt ist eine Elektrolysezelle offenbart, umfassend eine Gasdiffusionselektrode, umfassend ein Metall M, das ausgewählt ist aus Ag, Au, Cu, Pd, und Mischungen und/oder Legierungen und/oder Salzen davon, und mindestens einen Binder, als Kathode, wobei die Gasdiffusionselektrode hydrophile und hydrophobe Poren und/oder Kanäle umfasst, wobei in den Poren und/oder Kanälen der Gasdiffusionselektrode zumindest teilweise ein Ionenaustauschermaterial enthalten ist, wobei das Ionenaustauschermaterial ein Anionenaustauschermaterial ist, wobei das Anionenaustauschermaterial keine Imidazolium-, Pyridinium- und β-Wasserstoff enthaltenden Gruppen aufweist. In einer Ausgestaltung der Erfindung ist auf der Oberfläche der Gasdiffusionselektrode zumindest teilweise ein Ionentransportmaterial aufgebracht.

Zudem betrifft die vorliegende Erfindung eine Elektrolyseanlage, umfassend die erfindungsgemäße Elektrolysezelle. Ebenfalls offenbart ist ein Verfahren zur Elektrolyse von CO₂ und/oder CO, wobei die erfindungsgemäße Elektrolysezelle verwendet wird, wie auch die Verwendung der erfindungsgemäßen Elektrolysezelle bei der Elektrolyse von CO₂ und/oder CO.

Darüber hinaus betrifft die vorliegende Erfindung ein Verfahren zur Herstellung einer Gasdiffusionselektrode, umfassend ein Metall M, das ausgewählt ist aus Ag, Au, Cu, Pd und Mischungen und/oder Legierungen und/oder Salzen davon, und mindestens einen Binder, wobei die Gasdiffusionselektrode hydrophile und hydrophobe Poren und/oder Kanäle umfasst, wobei in den Poren und/oder Kanälen der Gasdiffusionselektrode zumindest teilweise ein Ionenaustauschermaterial enthalten ist, wobei das Ionenaustauschermaterial ein Anionenaustauschermaterial ist, wobei das Anionenaustauschermaterial keine Imidazolium-, Pyridinium- und β-Wasserstoff enthaltenden Gruppen aufweist; wobei das Verfahren umfasst:
- Herstellung einer ersten Mischung umfassend zumindest das Metall M, das Ionenaustauschermaterial und den mindestens einen Binder,
- Auftragen der ersten Mischung umfassend zumindest das Metall M, das Ionenaustauschermaterial und den mindestens einen Binder auf einen Träger, bevorzugt in Form eines Flächengebildes, und
   - trockenes Aufwalzen der ersten Mischung auf den Träger zum Bilden einer ersten Schicht; oder
   - Herstellung einer ersten Mischung umfassend zumindest das Metall M, das Ionenaustauschermaterial und optional mindestens einen Binder,
   - Herstellen einer zweiten Mischung umfassend zumindest das Metall M und mindestens einen Binder,
   - Auftragen der zweiten Mischung umfassend zumindest das Metall M und den mindestens einem Binder auf einen Träger, bevorzugt in Form eines Flächengebildes,
   - Auftragen der ersten Mischung umfassend zumindest das Metall M, das Ionenaustauschermaterial und optional mindestens einem Binder auf die zweite Mischung,
   - Optional Auftragen weiterer Mischungen auf die erste Mischung, und
   - trockenes Aufwalzen der zweiten und ersten Mischung und ggf. weiterer Mischungen auf den Träger zum Bilden einer zweiten und einer ersten Schicht und ggf. weiterer Schichten; oder
   - Bereitstellen einer Gasdiffusionselektrode, umfassend das Metall M und den mindestens einen Binder, wobei die Gasdiffusionselektrode die hydrophilen und hydrophoben Poren und/oder Kanäle umfasst, und
   - zumindest teilweise Einbringen des Ionenaustauschermaterials in die Poren und/oder Kanälen der Gasdiffusionselektrode.

Weitere Aspekte der vorliegenden Erfindung sind den abhängigen Ansprüchen und der detaillierten Beschreibung zu entnehmen.

### Beschreibung der Figuren

Die beiliegenden Zeichnungen sollen Ausführungsformen der vorliegenden Erfindung veranschaulichen und ein weiteres Verständnis dieser vermitteln. Im Zusammenhang mit der Beschreibung dienen sie der Erklärung von Konzepten und Prinzipien der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander dargestellt. Gleiche, funktionsgleiche und gleich wirkende Elemente, Merkmale und Komponenten sind in den Figuren der Zeichnungen, sofern nichts anderes ausgeführt ist, jeweils mit denselben Bezugszeichen versehen.
Figur 1 zeigt eine exemplarische Darstellung eines möglichen Aufbaus einer Elektrolysezelle gemäß einer Ausführungsform der vorliegenden Erfindung.
Figur 2 zeigt eine weitere exemplarische Darstellung eines möglichen Aufbaus einer Elektrolysezelle gemäß einer Ausführungsform der vorliegenden Erfindung.
Figur 3 zeigt eine dritte exemplarische Darstellung eines möglichen Aufbaus einer Elektrolysezelle gemäß einer Ausführungsform der vorliegenden Erfindung.
Figur 4 zeigt eine vierte exemplarische Darstellung eines möglichen Aufbaus einer Elektrolysezelle gemäß einer Ausführungsform der vorliegenden Erfindung.
Figur 5 zeigt eine Ausgestaltung einer Elektrolyseanlage zur CO₂-Reduktion.
Figur 6 zeigt eine weitere beispielhafte Ausgestaltung einer Elektrolyseanlage zur CO₂-Reduktion.
Figur 7 zeigt eine schematische Darstellung einer bestimmten Ausführungsform einer erfindungsgemäßen Gasdiffusionselektrode.
Fig. 8 zeigt schematisch einen Herstellungsprozess für eine Gasdiffusionselektrode unter Verwendung eines Walzenkalanders.
In Fig. 9 ist schematisch ein Aufbau einer beispielhaften erfindungsgemäßen Gasdiffusionselektrode mit Zuleitung von Elektrolyt und Gas im Betrieb dargestellt.
Fig. 10 zeigt schematisch eine Behandlung einer Gasdiffusionselektrode mit einem Ionenaustauschermaterial durch Aufsprühen.
Den Fig. 11 bis 14 sind beispielhafte Ausführungsformen von erfindungsgemäßen Elektrolysezellen mit einer möglichen Gas-(hier z.B. CO₂) und Elektrolytzufuhr zu entnehmen.
Fig. 15 bis 23 zeigen Ergebnisse, welche unter Verwendung von Gasdiffusionselektroden in den Beispielen der vorliegenden Anmeldung erzielt werden.
Fig. 24 bis 28 zeigen schematisch die Wirkung eines Anionentransportmaterials in einer beispielhaften erfindungsgemäßen Gasdiffusionselektrode während eines Betriebs.
Figur 29 zeigt eine weitere exemplarische Darstellung eines möglichen Aufbaus einer Elektrolysezelle gemäß einer Ausführungsform der vorliegenden Erfindung.
Fig. 30 und 31 zeigen weitere beispielhafte Ausgestaltungen einer erfindungsgemäßen Elektrolyseanlage zur CO₂-Reduktion.

### Detaillierte Beschreibung der Erfindung

### Definitionen

So nicht anderweitig definiert haben hierin verwendete technische und wissenschaftliche Ausdrücke dieselbe Bedeutung, wie sie von einem Fachmann auf dem Fachgebiet der Erfindung gemeinhin verstanden wird.

Als hydrophob wird im Rahmen der vorliegenden Erfindung wasserabweisend verstanden. Hydrophobe Poren und/oder Kanäle sind erfindungsgemäß also solche, welche Wasser abweisen. Insbesondere sind hydrophoben Eigenschaften erfindungsgemäß mit Stoffen bzw. Molekülen mit unpolaren Gruppen assoziiert.

Als hydrophil wird im Gegensatz hierzu die Fähigkeit zur Wechselwirkung mit Wasser und anderen polaren Stoffen verstanden.

In der Anmeldung beziehen sich Mengenangaben auf Gew.%, soweit es nicht anderweitig angegeben oder aus dem Zusammenhang ersichtlich ist. In der erfindungsgemäßen Gasdiffusionselektrode ergänzen sich die Gew.%-Anteile auf 100 Gew.%.

Der Normaldruck ist 101325 Pa = 1,01325 bar.

In einem ersten Aspekt betrifft die vorliegende Erfindung eine Elektrolysezelle, umfassend eine Gasdiffusionselektrode, umfassend ein Metall M, das ausgewählt ist aus Ag, Au, Cu, Pd und Mischungen und/oder Legierungen und/oder Salzen davon, und mindestens einen Binder, als Kathode, wobei die Gasdiffusionselektrode hydrophile und hydrophobe Poren und/oder Kanäle umfasst, wobei in den Poren und/oder Kanälen der Gasdiffusionselektrode zumindest teilweise ein Ionenaustauschermaterial enthalten ist, wobei das Ionenaustauschermaterial ein Anionenaustauschermaterial ist, wobei das Anionenaustauschermaterial keine Imidazolium-, Pyridinium- und β-Wasserstoff enthaltenden Gruppen aufweist. Beschrieben ist eine Gasdiffusionselektrode (GDE), umfassend ein Metall M, das ausgewählt ist aus Ag, Au, Cu, Pd und Mischungen und/oder Legierungen und/oder Salzen davon, und mindestens einen Binder, wobei die Gasdiffusionselektrode hydrophile und hydrophobe Poren und/oder Kanäle umfasst, wobei in den Poren und/oder Kanälen der Gasdiffusionselektrode zumindest teilweise ein Ionentransportmaterial enthalten ist und/oder auf der Oberfläche der Gasdiffusionselektrode zumindest teilweise ein Ionentransportmaterial aufgebracht ist. Das Ionentransportmaterial kann zumindest teilweise in den Poren und/oder Kanälen der Gasdiffusionselektrode enthalten sein. Das Ionenaustauschermaterial kann zumindest teilweise in den Poren und/oder Kanälen der Gasdiffusionselektrode enthalten und auf der Oberfläche der Gasdiffusionselektrode zumindest teilweise aufgebracht sein.

Das Metall M kann in der vorliegenden Erfindung sowohl als Katalysator als auch als Elektronenleiter in der Gasdiffusionselektrode dienen. Das Metall M ist erfindungsgemäß ausgewählt aus Cu, Ag, Au, Pd, sowie Mischungen und/oder Legierungen und/oder Salzen davon. Bevorzugt ist das Metall M ausgewählt aus Cu, Ag sowie Mischungen und/oder Legierungen und/oder Salzen davon, insbesondere Ag und/oder Legierungen und/oder Salzen davon.

Die Salze des Metalls M stellen hierbei beispielsweise geladene Verbindungen des Metalls M dar, in denen das Metall M als Kation vorliegt, bevorzugt als M⁺ und/oder M²⁺ (insbesondere Cu²⁺ und/oder Pd²⁺), insbesondere M⁺, und die zur katalytischen Reduktion beitragen. Die Gegenionen in diesen Salzen sind nicht besonders beschränkt.

Der Anteil an Metall M in der Gasdiffusionselektrode ist nicht besonders beschränkt und kann zwischen 30 und 99,8 Gew.% betragen, bezogen auf das Gewicht der Gasdiffusionselektrode, bevorzugt 40 Gew.% oder mehr und 96 Gew.% oder weniger, weiter bevorzugt 50 Gew.% oder mehr und 92 Gew.% oder weniger, weiter bevorzugt 65 Gew.% oder mehr und 85 Gew.% oder weniger.

Das Metall M in der Gasdiffusionselektrode kann sowohl als elementares Metall M wie auch in kationischer Form, bevorzugt als M⁺ und/oder M²⁺ (insbesondere Cu und/oder Pd), besonders bevorzugt M⁺, vorhanden sein.

Darüber hinaus ist auch der in der Gasdiffusionselektrode enthaltene mindestens eine Binder nicht besonders beschränkt, und es können auch zwei oder mehr verschiedene Binder, auch in verschiedenen Schichten der Elektrode, verwendet werden. Das Bindemittel bzw. der Binder für die Gasdiffusionselektrode, so vorhanden, ist nicht besonders beschränkt, und umfasst beispielsweise ein hydrophiles und/oder hydrophobes Polymer, beispielsweise ein hydrophobes Polymer. Der mindestens eine Binder kann ein organischer Binder sein, z.B. ausgewählt aus PTFE (Polytetrafluorethylen), PVDF (Polyvinyliendifluorid), PFA (Perfluoralkoxy-Polymeren), FEP (fluorierte Ethylen-Propylen-Copolymeren), PFSA (Perfluorsulfonsäure-Polymeren), und Mischungen davon, insbesondere PTFE. Zur Einstellung der Hydrophilie können auch hydrophile Materialien wie Polysulfone, i.e. Polyphenylsulfone, Polyimide, Polybenzoxazole oder Polyetherketone bzw. allgemein im Elektrolyten elektrochemisch stabile Polymere, wie auch Z.B. polymerisierte "Ionische Flüssigkeiten", oder organische leiter wie PEDOT:PSS oder PANI (champhersulfonsäuredortiertes Polyanilin eingesetzt werden. Hierdurch kann eine geeignete Einstellung der hydrophoben Poren bzw. Kanäle erzielt werden. Insbesondere können zur Herstellung der Gasdiffusionselektrode PTFE Partikel mit einem Partikeldurchmesser zwischen 0,01 und 95 µm, bevorzugt zwischen 0,05 und 70 µm, weiter bevorzugt zwischen 0,1 und 40 µm, z.B. 0,3 bis 20 µm, z.B. 0,5 bis 20 µm, z.B. etwa 0,5 µm, verwendet. Geeignete PTFE Pulver umfassen beispielsweise Dyneon® TF 9205 und Dyneon TF 1750. Geeignete Binderpartikel, beispielsweise PTFE Partikel, können beispielsweise annähernd sphärisch sein, beispielsweise sphärisch, und können beispielsweise durch Emulsionspolymerisation hergestellt werden. Gemäß bestimmten Ausführungsformen sind die Binderpartikel frei von oberflächenaktiven Stoffen. Die Partikelgröße kann hierbei beispielsweise gemäß ISO 13321 oder D4894-98a bestimmt werden und kann beispielsweise den Herstellerangaben entsprechen (z.B. TF 9205: mittlere Partikelgrö8e 8µm nach ISO 13321; TF 1750:mittlere Partikelgrö8e 25pm nach ASTM D4894-98a).

Der Binder kann beispielsweise in einem Anteil von 0,1 bis 50 Gew.%, beispielsweise bei Verwendung eines hydrophilen Ionentransportmaterials, z.B. 0,1 bis 30 Gew.%, bevorzugt von 0,1 bis 25 Gew.%, z.B. 0,1 bis 20 Gew.% weiter bevorzugt von 3 bis 20 Gew.%, weiter bevorzugt 3 bis 10 Gew.%, noch weiter bevorzugt 5 bis 10 Gew.%, bezogen auf die Gasdiffusionselektrode, enthalten sein. Gemäß bestimmten Ausführungsformen weist der Binder ein stark ausgeprägtes scherverdünnendes Verhalten auf, sodass eine Faserbildung während des Mischprozesses stattfindet. Idealer Weise sollten sich bei der Herstellung gebildete Fasern um die Partikel wickeln, ohne die Oberfläche vollständig zu umschließen. Die optimale Mischzeit kann beispielsweise durch direkte Visualisierung der Faserbildung im Rasterelektronenmikroskop bestimmt werden.

Gemäß bestimmten Ausführungsführungsformen ist der mindestens eine Binder bei einem pH von 7 und mehr stabil, bevorzugt in stark basischer Umgebung, z.B. bei einem pH von 9 und mehr, z.B. 10 und mehr, stabil.

Zumindest in einem Teilbereich der GDE, beispielsweise auf einer Seite, welche bei einem Betrieb einem Elektrolyten zugewandt ist, können das Metall M, der mindestens eine Binder und das Anionenaustauschermaterial, wie ein Anionenaustauscherharz, im Wesentlichen homogen verteilt sein.

Das Ionenaustauschermaterial ist ein Anionentransportmaterial, beispielsweise ein Anionenaustauscherharz, wobei das Anionenaustauschermaterial keine Imidazolium-, Pyridinium- und β-Wasserstoff enthaltenden Gruppen aufweist. Gemäß bestimmten Ausführungsformen besitzt das Ionenaustauschermaterial auch eine Kationenblockerfunktion, kann also ein Eindringen von Kationen in die Gasdiffusionselektrode verhindern oder zumindest verringern.

Speziell ein Anionenaustauschermaterial mit fest gebundenen Kationen kann hierbei eine Blockade für bewegliche Kationen durch Coulombabstoßung darstellen, was einer Salzausscheidung, insbesondere innerhalb der Gasdiffusionselektrode, zusätzlich entgegenwirken kann. Dabei ist es unerheblich, ob die Gasdiffusionselektrode vollständig mit dem Anionenaustauscher durchsetzt ist. Wichtig ist die Anionentransportfunktionalität in Richtung des Elektrolyten bzw. im aktiven Bereich der GDE. Gemäß bestimmten Ausführungsformen liegt somit das Anionenaustauschermaterial zumindest teilweise auf einer einem Elektrolyten zugewandten Seite des Gasdiffusionselektrode vor, insbesondere zumindest teilweise in den Poren und/oder Kanälen der Gasdiffusionselektrode, welche einem Elektrolyten zugewandt sind, beispielsweise einer Seite, welche gegenüber einer Gasseite der Gasdiffusionselektrode angeordnet ist, auf der ein Gas wie CO₂ und/oder CO zugeführt wird oder vorbeigeführt wird.

Eine Integration eines Kationentransports, z.B. einer Kationaustauscherfunktionalität, kann hier nachteilig sein, da sie einerseits die Wasserstoffbildung fördern kann, andererseits Pfade für Kationen des Elektrolyten liefern kann, die zu einer Salzausscheidung führen können.

Die Vorteile eines Anionentransports mittels eines Anionenaustauschermaterials, insbesondere zumindest teilweise in Poren und/oder Kanälen der Gasdiffusionselektrode, insbesondere auf einer einem Elektrolyten zugewandten Seite der Gasdiffusionselektrode, werden im Folgenden verdeutlicht. Zunächst soll jedoch gezeigt werden, dass für den Betrieb einer GDE, z.B. einer Sauerstoffverzehrkathode, bis zu hohen Stromdichten, beispielsweise oberhalb 500 mA/cm², ein Anionentransportzusatz nicht unbedingt notwendig ist.

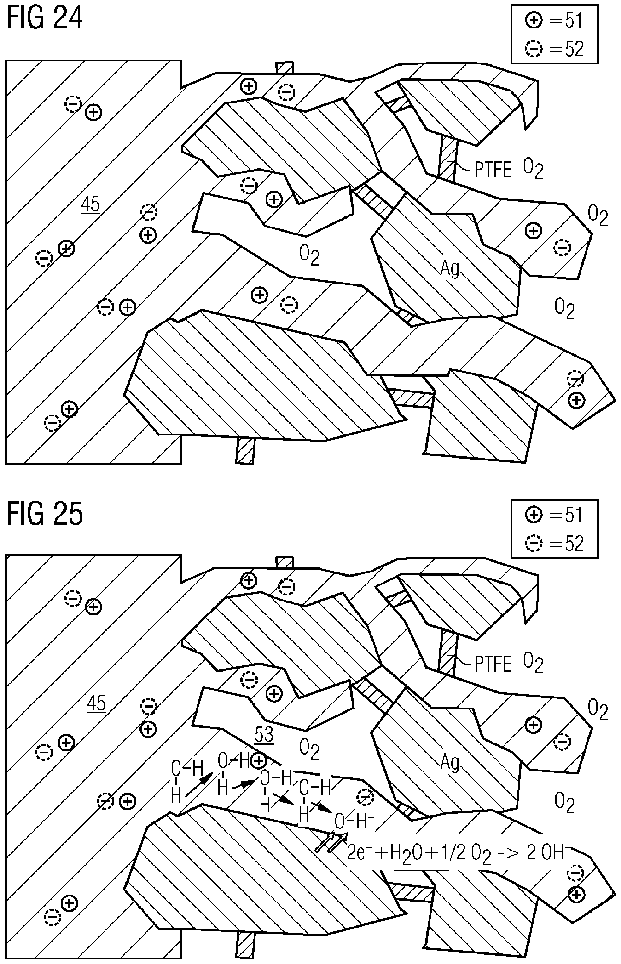

In Fig. 24 ist der Grundzustand einer GDE, beispielsweise einer Sauerstoffverzehrkathode oder einer GDE zur Umsetzung von CO₂ und/oder CO, ohne angelegte Spannung abgebildet. Der Elektrolyt 45 kann hier den porös aufgebauten Katalysator, hier einen beispielhaften Silberkatalysator Ag, durchdringen, wobei hier beispielhaft PTFE als Bindematerial verwendet wird. Alle Kationen (z.B. K⁺) werden durch Anionen (z.B. HCO₃⁻ oder SO₄²⁻) ausgeglichen, wobei hier beispielhaft bewegliche Kationen 51 und bewegliche Anionen 52 dargestellt sind. Wird nun Spannung angelegt kann im Fall einer Sauerstoffverzehrkathode oder generell, wenn O₂ beispielsweise in einem umzusetzenden Gas vorliegt, die folgende Summenreaktion stattfinden:

2 e- + H₂O + % O₂ → 2 OH-

Die beispielhaft entstandenen Hydroxidionen sollen nun aus der Gasdiffusionselektrode heraus diffundieren. Eine Eindiffusion von Kationen sollte unterdrückt werden, da es sonst zur Salzkristallisation kommen kann.

Die Diffusion von Kationen ist gewöhnlich um Größenordnungen langsamer als die Diffusion der Hydroxidionen. Dies liegt daran, dass die Kationen "wandern" müssen, während Hydroxidionen durch den Grotthus-Tunneleffekt bzw. Grotthus-Effekt 53 praktisch ohne Energieaufwand in den Bulkelektrolyt bzw. Elektrolyt 45 transportiert werden können, wie beispielhaft in Fig. 25 gezeigt ist, wobei an der GDE eine Spannung angelegt ist.

Wie oben dargelegt kann die gleiche Elektrode kann auch zur Reduktion von beispielsweise CO₂ zu CO verwendet werden. Analog zur Reduktion von Sauerstoff werden bei der Reduktion von CO₂ zwei Hydroxidionen gebildet.

2e⁻ + CO₂ + H₂O → 2 OH- + CO

Das gebildete CO diffundiert aus der Elektrode und kann mit dem Elektrolyten und/oder dem Gasstrom ausgetragen werden. Die entstandenen Hydroxidionen können ebenfalls durch den Grotthus-Mechanismus aus der Elektrode transportiert werden. Diese Reaktion ist bis zu einer gewissen Stromdichte (z.B. ∼ 150 mA/cm²) und niedriger Temperatur (z.B. < 30°C) ausreichend, um einen stabilen Betrieb zu gewährleisten.

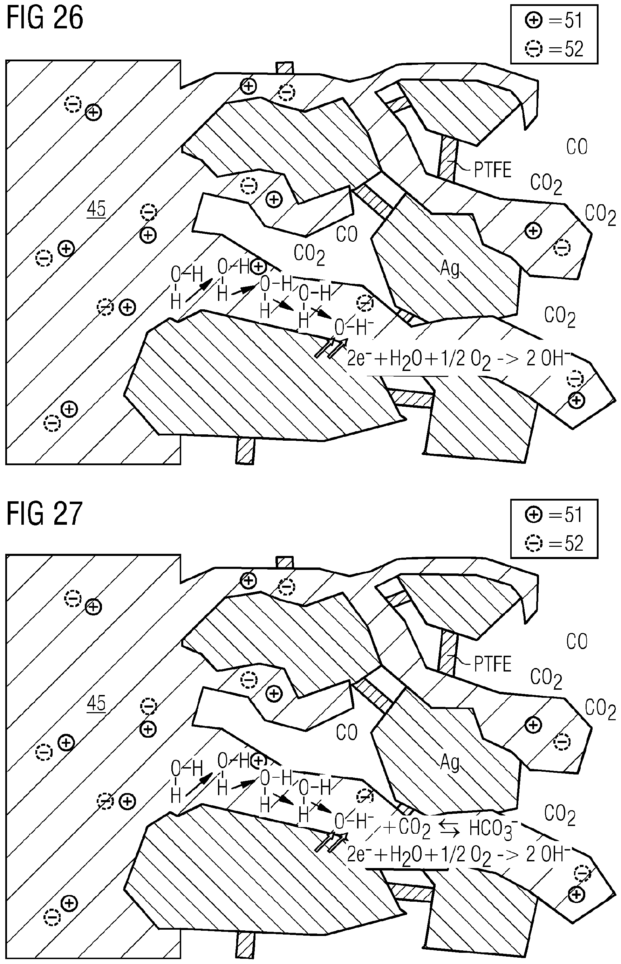

In Fig. 26 ist beispielhaft die elektrochemische Reduktion von CO₂ zu CO bei angelegter Spannung mit dem Hydroxid-Transport durch den Grotthus-Mechanismus gezeigt.

Bei höherer Temperatur von beispielsweise 50°C und mehr, z.B. > 50°C, fängt die Hydrogencarbonatbildung an zu dominieren.

CO₂ + OH⁻ ⇆ HCO₃⁻

Das Gleichgewicht liegt ungünstiger Weise auf Seiten des Hydrogencarbonats, das nicht mehr über Tunnelprozesse werden kann, sondern über echte Transportprozesse aus der Elektrode getragen werden muss, wie in Fig. 27 dargestellt, wo die Zusammenfassung der chemischen Gleichgewichte in der beispielhaften Gasdiffusionselektrode gezeigt sind. Mit dem Hydrogencarbonat kann es aufgrund der Einmigration von Kationen zur Salzausscheidung in der GDE oder mindestens zur Entstehung von Permeat auf der dem Elektrolyt abgewandten Seite der GDE kommen.

Während Hydroxidionen unterstützt durch das angelegte Feld energiearm durch den Grotthus-Tunneleffekt aus der GDE diffundieren können, müssen die Hydrogencarbonation aktiv gegen die hohe Elektrolytkonzentration aus der GDE gefördert werden. Die dazu notwendigen Wege liegen üblicherweise im Bereich von mehreren hundert Mikrometern. Hierbei kann das Anionenaustauschermaterial unterstützend wirken.

Das Anionenaustauschermaterial kann mit jedem beliebigen Anion in die GDE eingeführt werden. Entweder kann es dann beispielsweise vor dem Einbau durch OH⁻ oder HCO₃⁻ getauscht werden, oder ein Austausch kann spontan während des Betriebes schon aufgrund der Konzentrationsunterschiede zum Elektrolyten erfolgen.

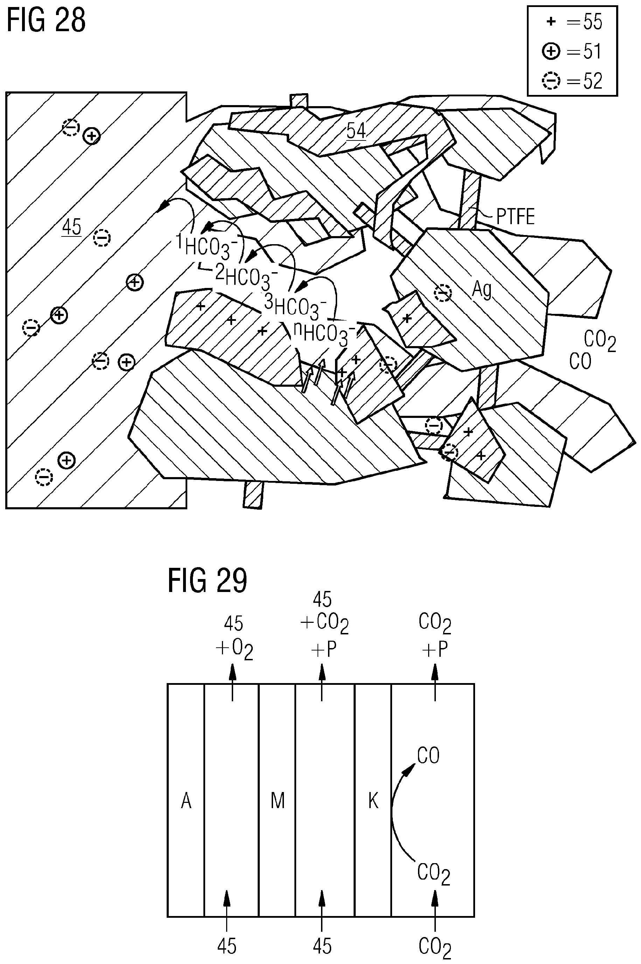

In Fig. 28 ist eine beispielhafte GDE dargestellt, die Anionenaustauschermaterial 54 und Katalysator, z.B. Katalysatorpartikel, z.B. Ag, mit einem vorhandenen Binder (hier beispielhaft PTFE) versehen homogen verteilt zeigt. Das Anionenaustauschermaterial beinhaltet eine Vielzahl von lokalisierten positiven Ladungen 55, die durch Gegenionen, z.B. OH⁻ bzw. HCO₃⁻, kompensiert werden können. So entsteht ein Anionenpfad, entlang dessen sich die Anionen bewegen können. Entsteht an einer Stelle in der GDE durch die Elektroreduktion ein zusätzliches Ion, das zumindest *in statu nascendi* auch nicht kompensiert ist, schiebt dieses durch einen Hüpf-Mechanismus ein Anion an der Phasengrenze der GDE heraus. Dies bedeutet, dass das entstandene OH⁻ bzw. HCO₃⁻ nicht das Gleiche ist, das die GDE verlässt. Entlang des Pfades muss daher nur die Energie für das Hüpfen aufgebracht werden, und nicht das Anion an sich muss aus der GDE geschoben werden. Neben dem Grotthus-Mechanismus wird daher ein zusätzlicher "Hüpfpfad" generiert. Zusätzlich verhindert die positive Aufladung des Anionenaustauscherharzes die Eindiffusion beweglicher positiver Kationen 51 (z.B. Kalium). In Fig. 28 ist der Anionentransport in der GDE beispielhaft folgendermaßen beim Elektrolysebetrieb dargestellt. Durch die Elektroreduktion wird ^{neu}HCO₃⁻ produziert. Aufgrund der fehlenden Ladungskompensationen tauscht dieses zunächst mit ³HCO₃⁻ den Platz, dann ³HCO₃⁻ mit ²HCO₃⁻ und schlussendlich ²HCO₃⁻ mit ¹HCO₃⁻. Da sich ¹HCO₃⁻ an der Elektrolytgrenze befindet, geht dieses in den Elektrolyten über, wo seine Ladung kompensiert wird. Damit kann der Transport abgeschlossen werden.

Das Anionenaustauschermaterial, z.B. ein Anionenaustauscherharz, kann also mehrere Funktionen ausfüllen:
- Es kann einen Transportpfad, zusätzlich zur Diffusion, für Anionen wie HCO₃⁻ bereitstellen.
- Zudem kann es als Blocker für bewegliche Kationen aus dem Elektrolyten aufgrund einer Coulomb-Blockade wirken, wobei Teile der GDE dann positiv geladen sein können durch das Anionenaustauschermaterial, obwohl ein negatives Potential anliegt.
- Wenn bewegliche Kationen geblockt werden, kann auch die Salzausscheidung in der GDE unterdrückt bzw. Permeat durch die GDE unterdrückt werden. Unabhängig vom Elektrolyten kann das Permeat beispielsweise bei der CO₂-Elektrolyse reines Hydrogencarbonat sein - ladungskompensiert durch das Kation im Elektrolyten.

Gemäß bestimmten Ausführungsformen umfasst das Anionenaustauschermaterial polare Gruppen wie R-O-R, RCOO⁻, R-NR₃⁺, R-NH₂, RPO₃²⁻, ROH, wobei R ein beliebiger Rest ist, beispielsweise ein organischer Rest. Die Verwendung von Ionenaustauscherharzen mit polaren Funktionalitäten (R-O-R, RCOO⁻, R-NR₃⁺, R-NH₂, RPO₃²⁻, ROH) erhöht die Anteile der hydrophilen Bereiche der Elektrode, wodurch der Elektrolyttransport durch die Elektrode erhöht werden kann. Der erzielte Verdünnungseffekt kann ebenfalls der Übersättigung bzw. Salzkristallisation entgegen wirken, jedoch sollte vermieden werden, dass die vollständig durchfluten. Bei der Präparation von Gasdiffusionselektroden mit derartigen Ionenaustauschermaterialien ist daher gemäß bestimmten Ausführungsformen ein mehrschichtiger, beispielsweise ein 2-Schichtiger Aufbau, vorteilhaft, bei dem mindestens eine Schicht im Wesentlichen nicht das Ionenaustauschermaterial umfasst, beispielsweise eine solche, welche im Betrieb einem Gas zugewandt ist, beispielsweise sich also auf einem Träger befindet, wobei in dieser Schicht dann bevorzugt keine chemische Reaktion stattfinden soll, was beispielsweise durch eine entsprechende Einstellung des Gasdrucks und/oder der Zufuhr an Elektrolyt im Betrieb sichergestellt werden kann.

Es ist des Weiteren nicht ausgeschlossen, dass die eingesetzten Harze CO₂-bindende Funktionalitäten aufweisen, da OH⁻ mit CO₂ zu Hydrogencarbonat reagieren kann.

Gemäß bestimmten Ausführungsformen ist das Anionenaustauschermaterial bei einem pH von mehr als 7 stabil. Gemäß bestimmten Ausführungsführungsformen ist das Anionenaustauschermaterial in stark basischer Umgebung, z.B. bei einem pH von 9 und mehr, z.B. 10 und mehr, stabil.

Gemäß bestimmten Ausführungsformen ist das Anionenaustauschermaterial in einer Menge von 0,1 bis 50 Gew.%, bevorzugt 0,1 bis 40 Gew.%, bevorzugt 3 bis 35 Gew.%, weiter bevorzugt 5 bis 30 Gew.%, noch weiter bevorzugt 10 bis 25 Gew.%, bezogen auf die Gasdiffusionselektrode und/oder bezogen auf die Schicht, z.B. eine Katalysatorlage, in der es enthalten ist, enthalten. Ein hydrophiles oder vorwiegend hydrophiles (z.B. mehr hydrophile als hydrophobe Bereiche) Anionenaustauschermaterial, beispielsweise Anionenaustauscherharz, ist bevorzugt in einer Menge von 0,1 bis 20 Gew.%, bevorzugt 1 bis 18 Gew.%, bezogen auf die Gasdiffusionselektrode und/oder bezogen auf die Schicht, z.B. eine Katalysatorlage, in der es enthalten ist, enthalten. Der Grund für eine solche "niedrigere" obere Grenze liegt darin, dass übliche Anionenaustauscherharze für einen Einsatz in wässriger Umgebung hergestellt werden und daher vorwiegend hydrophil sind. Wenn jetzt zuviel dieser Anionenaustauscherharze eingemischt werden, wird die GDE so stark hydrophil, dass diese mit Wasser vollständig durchdrängt werden kann und damit die Funktion einer GDE verloren gehen kann.

Entsprechend umfassen aber Anionenaustauschermaterialien auch hydrophobe Varianten von "Anionenaustauscherharzen", die als solche üblicherweise gar nicht mehr in wässrigen Medien verwendet werden können. Für solche ist entsprechend eine höhere Menge in der Gasdiffusionselektrode möglich, wie oben angegeben. Wenn das Anionenaustauschermaterial ausreichend hydrophob ist, kann es auch gleichzeitig als Binder fungieren, was bevorzugt ist. Entsprechend kann dann auch der Binderanteil verringert werden.

Gemäß bestimmten Ausführungsformen ist eine Menge an einem hydrophilen oder vorwiegend hydrophilem Ionenaustauschermaterial in einer Gasdiffusionselektrode geringer als eine Menge an hydrophoben Binder, und/oder es ist zumindest eine Schicht vorhanden, welche eine größere Menge an hydrophobem Binder als an hydrophilem oder vorwiegend hydrophilem Ionenaustauschermaterial enthält. Eine unerwünschte Durchdringung mit Elektrolyt kann beispielsweise erhalten werden, wenn eine eingesetzte Menge an hydrophilem oder vorwiegend hydrophilem Anionenaustauscherharz die Menge an eingesetztem hydrophoben Binder über die GDE hinweg übersteigt. So wurde beispielsweise ein Verhältnis von mehr als 20 Gew.% hydrophilem oder vorwiegend hydrophilem Harz zu 7 Gew.% PTFE als problematisch identifiziert. Derartig hohe Gehalte an Austauscherharz können beispielsweise innerhalb der Katalysatorschicht bei einer zweischichten GDE mit einer im Wesentlichen hydrophoben Grundschicht aus z.B. > 10 Gew.% PTFE realisiert werden, ohne das eine vollständige Durchflutung erreicht wird.

Gemäß bestimmten Ausführungsformen wird das Anionenaustauschermaterial in Form von Pulver bei der Herstellung zugesetzt, wobei das Pulver beispielsweise Partikel mit einer Partikelgröße von 0,1 bis 100 µm, z.B. 1 bis 50 µm, beispielsweise 1 bis 20 µm oder 1 bis 10 µm, aufweisen kann, wobei das Pulver auch makroporös, d.h. aggregiert aus oben genannten Partikeln, sein kann. Die Partikelgröße kann hierbei beispielsweise mikroskopisch mittels Bildanalyse, durch Laserbeugung und/oder dynamische Lichtstreuung bestimmt werden.

Alternativ kann auch für eine Imprägnierung mit Ionenaustauschermaterial eine Mikroemulsion verwendet werden, in der das Ionenaustauschermaterial Partikelgrößen von 0,01 bis 10 µm, z.B. 0,05 bis 5 µm, z.B. 0,1 bis 1 µm, aufweisen kann. Die Partikelgröße kann hierbei beispielsweise mikroskopisch mittels Bildanalyse, durch Laserbeugung und/oder dynamische Lichtstreuung bestimmt werden.

Das Anionenaustauschermaterial ist bevorzugt ein Ionentransport-Polymer, z.B. auch Ionenaustauscher-Polymer, wobei das Polymergerüst des Anionenaustauschermaterials optional auch teilweise oder vollständig fluoriert sein kann. Das Polymergerüst des Anionenaustauschermaterials ist jedoch nicht besonders beschränkt, und kann beispielsweise basierend auf einem Polymer oder Copolymer sein, das beispielsweise auf Styrol basiert. Das Polymergerüst kann beispielsweise aus Divinylbenzol-Styrol-Copolymerisaten aufgebaut sein, die funktionalisierte Seitenketten aufweisen oder direkt funktionalisiert sind.

Auch sind natürlich als Polymerbackbone des Ionentransportmaterials, z.B. Ionentransport-Polymers, hydrophobe Polymergerüste wie auf Basis von PTFE (Polytetrafluorethylen), PVDF (Polyvinyliendifluorid), PFA (Perfluoralkoxy-Polymeren), FEP (fluorierte Ethylen-Propylen-Copolymeren), PFSA (Perfluorsulfonsäure-Polymeren), und Mischungen davon, insbesondere PTFE, möglich. In solch einen Fall findet dann in erster Linie bzw. auch überhaupt nur ein Ionentransport statt, da ein Elektrolyt nicht mehr in die Gasdiffusionselektrode eindringen kann, und das Ionentransportmaterial ist in diesem Sinne kein Ionenaustauschermaterial mehr.

Das Polymerbackbone des Anionenaustauschermaterials kann zur Einstellung der hydrophilen/hydrophoben Eigenschaften der Gasdiffusionselektrode dienen. Zur Einstellung der Hydrophilie können auch hydrophile Materialien wie Polysulfone, z.B. Polyphenylsulfone, Polyimide, Polybenzoxazole oder Polyetherketone bzw. allgemein im Elektrolyten elektrochemisch stabile Polymere, wie auch Z.B. polymerisierte "Ionische Flüssigkeiten", verwendet werden. Für alle genannten Polymerbackbones können geeignete funktionelle Gruppen zum Ionentransport eingefügt werden, welche auch nachfolgend beispielhaft beschrieben sind, beispielsweise indem dort vorhandene funktionelle Gruppen durch geeignete Abgangsgruppen ersetzt werden.

Gemäß bestimmten Ausführungsformen ist das Anionenaustauschermaterial, z.B. Ionenaustauscher-Polymer, ein Ionenaustauscherharz, bevorzugt ein unpolares Ionenaustauscherharz, und/oder es wird zumindest ein unpolares Ionenaustauscherharz als Ionenaustauschermaterial in der GDE verwendet. Die Verwendung von polaren Ionenaustauscherharzen in der Katalysatorschicht führt zu einer merklichen Erhöhung der hydrophilen Eigenschaften der Gasdiffusionselektrode, sodass sich die Hydrophilie insgesamt einstellen lässt.

Bei Verwendung von polaren Ionentransportmaterialien in der GDE als Kathode ist diese in einer erfindungsgemäßen Elektrolysezelle bevorzugt auf der zur Anode gerichteten Seite in direktem Kontakt mit einer Anionenaustauschermembran und/oder einem Anionenaustauscherdiaphragma. Vollkatalysatorelektroden mit nur einer Schicht mit ionischer Leitfähigkeit werden vorzugsweise in direktem Kontakt zu einer Anionenaustauschermembran und/oder einem Anionenaustauscherdiaphragma verwendet. Es ist aber auch möglich, dass hier kein Kontakt mit einer Membran und/oder einem Diaphragma vorgesehen ist, also ein Spalt.

Das Anionenaustauschermaterial, beispielsweise ein Ionenaustauscher-Polymer bzw. Anionenaustauscherharz, kann verschiedene funktionelle Gruppen zum Ionenaustausch umfassen, welche gleich oder verschieden sein können, beispielsweise, tertiäre Amingruppen, Alkylammoniumgruppen und/oder Phosphoniumgruppen. Gemäß bestimmten Ausführungsformen weist das Anionenaustauschermaterial quaternäre Alkylammoniumgruppen auf. Die Alkylreste in den Alkylammoniumgruppen sind hierbei nicht besonders beschränkt und können beispielsweise substituierte und/oder nicht substituierte, lineare und/oder verzweige Alkylreste mit 1 bis 40 C-Atomen, beispielsweise 1 bis 20 C-Atomen sein, beispielsweise substituierte oder nicht substituierte Methyl-, Ethyl-, Propyl-, Isopropyl-, Butyl-, isoButyl-, tert-Butylreste, etc., insbesondere Methylreste. Als Substituenten sind beispielweise F und Cl, bevorzugt F; OH, etc., bevorzugt OH und/oder F, geeignet. Gemäß bestimmten Ausführungsformen weist das Anionenaustauschermaterial quaternäre Alkylammoniumgruppen auf, bevorzugt unsubstituierte Tetraalkylammoniumgruppen, insbesondere Tetramethylammoniumgruppen, und/oder Dialkylethanolammoniumgruppen, bei denen die Alkylgruppen nicht substituiert sind, z.B. Dimethylethanolammoniumgruppen. Gemäß bestimmten Ausführungsformen umfasst das Anionenaustauschermaterial keine Trialkylethanolgruppen.

Das Anionenaustauschermaterial weist keine Imidazolium-, Pyridinium- und/oder β-Wasserstoff enthaltenden Gruppen auf, da die chemische Stabilität unter Elektrolysebedingungen nicht ausreichend sein kann.

Beispiele für geeignete Ionentransport-Polymere, z.B. Ionaustauscher-Polymere umfassen, speziell für die elektrochemische Reduktion von CO₂, basische oder stark basische Ionenaustauscherharze des Typ I (mit Tetraalkylammoniumgruppen) und/oder Typ II (mit Dimethylethanolammoniumgruppen). Kommerziell verfügbare und geeignete Anionenaustauschermaterialien sind beispielhaft in der nachfolgenden Tabelle 2 dargestellt.

**Tabelle 2: Beispiele geeigneter kommerziell erhältlicher Anionenaustauscherharze**

| Austauscherharz | Harztyp | Matrix | funktionelle Gruppe |
|---|---|---|---|
| DOWEX Monosphere 550A | stark basisch | Styrol DVB GEL | Tetraalkylammonium |
| DOWEX Monosphere 700A | stark basisch | Styrol DVB GEL | Tetraalkylammonium |
| DOWEX Monosphere MP-725A | stark basisch | Styrol DVB makroporös | Tetraalkylammonium |
| DOWEX SBR-C | stark basisch | Styrol DVB | Tetraalkylammonium |
| DOWEX SBR-LC NG | stark basisch | Styrol DVB | Tetraalkylammonium |
| Lewatit Monoplus M500 | stark basisch | Styrol DVB GEL | Tetraalkylammonium |
| Lewatit Monoplus Mp500 | stark basisch | Styrol DVB makroporös | Tetraalkylammonium |
| Lewatit Monoplus Mp500 OH | stark basisch | Styrol DVB makroporös | Tetraalkylammonium |
| Lewatit Monoplus Mp500 KR | stark basisch | Styrol DVB makroporös | Tetraalkylammonium |
| Lewatit Monoplus M 500 MB | stark basisch | Styrol DVB makroporös | Tetraalkylammonium |
| Lewatit Monoplus M 500 KR | stark basisch | Styrol DVB GEL | Tetraalkylammonium |
| Lewatit Monoplus Mp600 | stark basisch | Styrol DVB makroporös | Dimethylethanolammonium |
| Lewatit Monoplus Mp64 | schwach basisch | Styrol DVB | Tertiäres Amin |
| Lewatit Monoplus Mp62 | schwach basisch | Styrol DVB | Tertiäres Amin |
| Lewatit Monoplus Mp62 WS | schwach basisch | Styrol DVB makroporös | Tertiäres Amin |
| Lewatit Monoplus SR 7 | stark basisch | Polystyrol | Tetraalkylammonium |
| Lewatit Monoplus M800 | stark basisch | Styrol DVB makroporös | Tetraalkylammonium |
| Lewatit Monoplus M800 OH | stark basisch | Styrol DVB GEL | Tetraalkylammonium |
| Lewatit Monoplus M800 KR I | stark basisch | Styrol DVB makroporös | Tetraalkylammonium |
| Lewatit Monoplus MDS 4368 | mittelbasisch | Styrol DVB makroporös | Tertiäre Amin, Tetraalkylammonium |
| Lewatit K1000 USO4 | stark basisch | Styrol DVB makroporös | Tetraalkylammonium |
| Amberlite IRA410 CL | stark basisch | Styrol DVB GEL | Dimethylethanolammonium |
| Amberlite IRA400 CL | stark basisch | Styrol DVB makroporös | Trimethylammonium |
| Amberlite IRA900 | stark basisch | Styrol DVB makroporös | Trimethylammonium |
| Amberlite IRA402 Cl | stark basisch | Styrol DVB makroporös | Trimethylammonium |

Neben den Anionenaustauscherharzen können ebenfalls Ionomere als Anionenaustauschermaterial verwendet werden, die beispielsweise in Form einer Dispersion bei der Herstellung verwendet werden können. Die Ionomere können hierbei gemäß bestimmten Ausführungsformen auch auf quaternären Ammonium-Funktionalitäten beruhen. Bekannte Ionomere sind hier beispielsweise von Tokuyama erhältlich, Typ AS 4, das ebenfalls auf quaternären Ammonium-Funktionalitäten beruht. Die Ionomere haben hier beispielsweise ein geringeres Molekulargewicht als die Harze, sind sich jedoch chemisch im Wesentlichen ähnlich. Durch das geringere Molekulargewicht sind die somit niedermolekulareren Ionomere üblicherweise auch leichter löslich als die entsprechenden Harze.

Gemäß bestimmten Ausführungsformen ist das Anionenaustauschermaterial, wie ein Anionenaustauscherharz, zumindest teilweise fluoriert. Gemäß bestimmten Ausführungsformen weist das Anionenaustauschermaterial Seitenketten auf, welche fluoriert sind, zumindest teilweise fluoriert sind, beispielsweise vollständig fluoriert sind.

Gemäß bestimmten Ausführungsformen weist das Anionenaustauschermaterial weiterhin OH-Gruppen und/oder NH₂-Gruppen auf. Das Ionentransportmaterial, beispielsweise ein Ionenaustauscherharz, kann hierdurch selbst co-katalytisch aktiv sein, indem CO₂ aktiv durch R-NH₂ bzw. R-OH Funktionen gebunden wird.

Gemäß bestimmten Ausführungsformen wird das Anionenaustauschermaterial beim Herstellungsverfahren, beispielsweise durch den Mischprozess und/oder die Anwesenheit des Metalls M, beispielsweise als Katalysator, chemisch nicht verändert. Es kann aber beispielsweise mechanisch verformt werden, beispielsweise zu Fasern.

Die Elektrode ist eine Gasdiffusionselektrode. Die Gasdiffusionselektrode ist hierbei hinsichtlich ihrer Ausgestaltung nicht besonders beschränkt, solange wie bei Gasdiffusionselektroden üblich drei Aggregatzustände - fest, flüssig und gasförmig - miteinander in Kontakt stehen können und der Feststoff der Elektrode zumindest einen Elektronen leitenden Katalysator aufweist, welcher eine elektrochemische Reaktion zwischen der flüssigen und der gasförmigen Phase katalysieren kann. Die Gasdiffusionselektroden können hierbei sowohl in einer Flow-by- wie auch einer Flow-Through-Konfiguration betrieben werden, also von einem Gas hinterströmt oder durchströmt werden, werden bevorzugt jedoch hinterströmt. Es ist auch nicht ausgeschlossen, dass eine Gasdiffusionselektrode nicht komplett porös ist, sondern nur eine Strukturierung an der Oberfläche aufweist, durch die ein Gas diffundieren kann, beispielsweise eine Mikro- und/oder Nanostrukturierung.

Es finden sich beispielsweise gemäß bestimmten Ausführungsformen in der Gasdiffusionselektrode (GDE) auf Elektrolytseite hydrophobe Kanäle und/oder Poren bzw. Bereiche und ggf. hydrophile Kanäle und/oder Poren bzw. Bereiche, wobei sich in den hydrophilen Bereichen Katalysatorzentren befinden können. Auf einer Gasseite der Gasdiffusionselektrode kann diese hydrophobe Kanäle und/oder Poren umfassen. Insofern kann die Gasdiffusionselektrode mindestens zwei Seiten umfassen, eine mit hydrophilen und ggf. hydrophoben Bereichen und einem mit hydrophoben Bereichen.

Besonders aktive Katalysatorzentren liegen in einer GDE im Dreiphasengebiet flüssig, fest, gasförmig. Eine ideale GDE weist somit eine maximale Durchdringung des Bulkmaterials mit hydrophilen und hydrophoben Kanälen und/oder Poren auf, um möglichst viele Dreiphasengebiete für aktive Katalysatorzentren zu erhalten.

Gemäß bestimmten Ausführungsformen umfasst die Gasdiffusionselektrode Metall M, das Anionenaustauschermaterial, und den Binder, oder besteht daraus.

Fig. 7 illustriert die Verhältnisse zwischen hydrophilen und hydrophoben Bereichen einer GDE mit zwei Schichten, die eine gute Dreiphasenbeziehung flüssig, fest, gasförmig erzielen kann. Hierbei finden sich beispielsweise in der Elektrode auf Elektrolytseite E hydrophobe Kanäle bzw. Bereiche 1 und hydrophile Kanäle bzw. Bereiche 2, wobei sich in den hydrophilen Bereichen 2 Katalysatorzentren 3 geringer Aktivität befinden können, welche durch die Verbindung des Metalls M bereitgestellt werden können. Des Weiteren befinden sich inaktive Katalysatorzentren 5 auf Seiten des Gases G, welche keinen Zugang zum Elektrolyt haben.

Besonders aktive Katalysatorzentren 4 liegen im Dreiphasengebiet flüssig, fest, gasförmig. Eine ideale GDE kann somit eine maximale Durchdringung des Bulkmaterials mit hydrophilen und hydrophoben Kanälen aufweisen, um möglichst viele Dreiphasengebiete für aktive Katalysatorzentren zu erhalten.

Es sind aber auch Gasdiffusionselektroden mit nur einer Schicht umfasst, solange die Gasdiffusionselektrode das Metall M, den mindestens einen Binder und das mindestens eine Anionenaustauschermaterial umfasst. In einer solchen einschichtigen Ausführungsform können dann die hydrophilen und hydrophoben Bereiche, z.B. Poren und/oder Kanäle, auch in der einen Schicht vorliegen, sodass sich in der Schicht vorwiegend hydrophile und vorwiegend hydrophobe Bereiche einstellen können. Die Erläuterung der Katalysatorzentren ergibt sich dann hierbei analog dem beispielhaft dargestellten zweischichtigen Aufbau. Das Ionentransportmaterial kann sich in beiden Schichten befinden. Besonders bevorzugt ist jedoch die dem Elektrolyten zugewandte Seite.

In einer Gasdiffusionselektrode findet vorteilhaft durch ein Anionenaustauschermaterial ein Transport von, bevorzugt in der GDE erzeugten, Anionen weg von der Gasseite und in Richtung Elektrolyt statt, während durch das Anionenaustauschermaterial auch die Kationen des Elektrolyten an einem Eindringen in die GDE gehindert werden können.

Gemäß bestimmten Ausführungsformen weist die Gasdiffusionselektrode Poren und/oder Kanäle mit einem Durchmesser von 10 nm bis 100 µm auf, bevorzugt von 50 nm bis 50 µm, weiter bevorzugt von 100 nm bis 10 µm, was beispielsweise durch Rasterelektronenmikroskopie, ggf. nach vorigem Schneiden der GDE, bestimmt werden kann. Auch kann der Katalysator der vorliegenden GDE, welcher das Metall M und Kationen davon, bevorzugt M⁺ und/oder M²⁺ (letzteres insbesondere für Pd und/oder Cu), insbesondere M⁺, umfasst, dendritische Strukturen mit Feinstruktur, beispielsweise einem Abstand zwischen zwei Dendriten, mit einer Größe von 1 bis 100 nm aufweisen, bevorzugt 2 bis 20 nm, weiter bevorzugt 3 bis 10 nm.

Neben dem Metall M und dem Ionenaustauschermaterial und dem Binder kann die erfindungsgemäße Elektrode auch noch weitere Bestandteile umfassen, beispielsweise ein Substrat bzw. einen Träger, auf das das Metall M, der zumindest eine Binder und ggf. das Anionenaustauschermaterial aufgebracht sein können. Bei mehrschichtigen Gasdiffusionselektroden kann es jedoch auch sein, dass eine erste Schicht auf den Träger aufgebracht wird, welche kein Anionenaustauschermaterial aufweist, wobei das Anionenaustauschermaterial dann in einer zweiten, dritten, etc. Schicht enthalten sein kann.

Der Träger ist hierbei nicht besonders beschränkt und kann beispielsweise ein Metall umfassen wie Silber, Platin, Nickel, Blei, Titan, Nickel, Eisen, Mangan, Kupfer oder Chrom oder deren Legierungen, wie Edelstähle, und/oder mindestens ein Nicht-Metall wie Kohlenstoff, Si, Bornitrid (BN), Bordotierten Diamant, etc., und/oder mindestens ein leitfähiges Oxid wie Indiumzinnoxid(ITO), Aluminiumzinkoxid (AZO) oder fluoriertes Zinnoxid (FTO) - beispielsweise zur Herstellung von Photoelektroden, und/oder mindestens ein Polymer basierend auf Polyacetylen, Polyethoxythiophen, Polyanilin oder Polypyrrol, wie beispielsweise in polymerbasierten Elektroden. Nichtleitfähige Träger wie z.B. Polymernetze sind beispielsweise bei einer ausreichenden Leitfähigkeit der Katalysatorlage möglich. Bei ausreichender Leitfähigkeit größer 0,01 m/Ohm·mm² und entsprechend aufgelöster rückseitiger Kontaktierung der Elektrode beispielsweise durch ein Titanstreckmetallgitter sind auch polymere Träger oder Netze möglich.

Gemäß bestimmten Ausführungsformen kann der Träger jedoch im Wesentlichen durch das Metall M gebildet werden, optional mit mindestens einem Bindemittel. Ein bevorzugter Träger ist gemäß bestimmten Ausführungsformen ein Netz mit einer Maschenweite w von 0,3 mm < w < 2,0 mm, bevorzugt 0,5 mm < w < 1,4 mm und einem Drahtdurchmesser x von 0,05 mm < x < 0,5 mm, bevorzug 0,1 mm ≤ x ≤ 0,25 mm.

Daneben kann die erste Schicht auch weitere Promotoren enthalten, die in Zusammenwirkung mit dem Metall M die katalytische Aktivität der GDE verbessern. Gemäß bestimmten Ausführungsformen enthält die erste Schicht mindestens ein Metalloxid, das bevorzugt ein geringeres Reduktionspotential als die Ethylenentwicklung aufweist, bevorzugt ZrO₂, Al₂O₃, CeO₂, Ce₂O₃, ZnO₂, MgO; und/oder mindestens eine metallreiche (bezogen auf M), z.B. kupferreiche und/oder silberreiche, intermetallische Phase, beispielsweise eine Cu-reiche Phase, die ausgewählt ist aus der Gruppe der binären Systeme Cu-Al, Cu-Zr, Cu-Y, Cu-Hf, Cu-Ce, Cu-Mg und der ternäre Systeme Cu-Y-Al, Cu-Hf-Al, Cu-Zr-Al, Cu-Al-Mg, Cu-Al-Ce mit Cu-Gehalten > 60 At.-%, und oder eine entsprechende Ag-reiche Phase wie Ag-Al, Ag-Zr, Ag-Y, Ag-Hf, Ag-Ce, Ag-Mg, Ag-Y-Al, Ag-Hf-Al, Ag-Zr-Al, Ag-Al-Mg, Ag-Al-Ce mit Ag-Gehalten < 60 At.-%; und/oder Metall M enthaltende, beispielsweise silberenthaltende und/oder kupferenthaltende Perowskite und/oder Defekt-Perowskite und/oder Perowskit-verwandte Verbindungen, beispielsweise YBa₂Cu₃O_{7-δ}, YBa₂Ag₃O_{7-δ} wobei 0≤δ≤1 (entsprechend YBa₂Cu₃O_{7-δ}X_{σ}), CaCu₃Ti₄O₁₂, La_{1,85}Sr_{0,15}CuO_{3,930}Cl_{0,053}, (La, Sr)₂CuO₄, AgTaO3 oder lithiummodifiziertes Ag₁₋ₓLiₓNbO₃, etc.

Geeignete Promotoren sind auch Verbindungen des Metalls M, welche eine Löslichkeit in Wasser bei 25°C und Normaldruck von weniger als 0,1 mol/L, bevorzugt von weniger als 0,05 mol/L, weiter bevorzugt von weniger als 0,01 mol/L, noch weiter bevorzugt von weniger als 0,0001 mol/L, insbesondere bevorzugt von weniger als 1*10⁻¹⁰ mol/L, z.B. von weniger als 1*10⁻²⁰ mol/L, aufweisen. Solche Löslichkeiten von Verbindungen der Metall M können beispielsweise aus Produktdatenblättern entnommen werden und/oder auf einfache Weise mit einfachen Versuchen, z.B. Platzieren einer festen Menge der Verbindung des Metalls M in ein bestimmtes Volumen Wasser, z.B. destilliertes, bidestilliertes oder dreifach destilliertes Wasser bei 25°C und Normaldruck und Messen der Konzentration an aus der Verbindung freigesetzten Ionen über die Zeit bis zum Erreichen eines annähernd konstanten Werts, bestimmt werden, und sind folglich für den Fachmann einfach zugänglich.

Die Verbindung des Metalls M, welche eine Löslichkeit in Wasser bei 25°C und Normaldruck von weniger als 0,1 mol/L aufweist, kann eine Formel aufweisen, die ausgewählt ist aus M₁₋ₓX, M_{2-y}Y, M_{2-y}Y'_{w} und M_{3-z}Z, wobei 0≤x≤0,5; 0≤y≤1; 0≤z≤1,5; bevorzugt 0≤x≤0,4; 0≤y≤0,8; 0≤z≤1,2; weiter bevorzugt 0≤x≤0,3; 0≤y≤0, 6; 0≤z≤0,9; X ausgewählt ist aus Cl, Br, Br₃, I, I₃, P₃, As₃, As₅, AS₇, Sb₃, Sb₅, Sb₇, und Mischungen davon, z.B. Cl, Br, Br₃, I, I₃, P₃, und Mischungen davon; Y ausgewählt ist aus S, S, Te und Mischungen davon; Y' ausgewählt ist aus S, Se, Te und Mischungen davon, z.B. S, Se und Mischungen davon, z.B. S, Se; w ≥2, bevorzugt w≤10, z.B. w≤5; und Z ausgewählt ist aus P, As, Sb, Bi, P₃, As₃, As₅, AS₇, Sb₃, Sb₅, Sb₇, und Mischungen davon, z.B. P, As, Sb, Bi, und Mischungen davon; und/oder ausgewählt ist aus Molybdaten, Wolframaten, Selenaten, Arsenaten, Vanadaten, Chromaten, Manganaten, Niobaten des Metalls M sowie thio- und/oder seleno-Derivaten von Molybdaten, Wolframaten, Selenaten, Arsenaten, Vanadaten, Chromaten, Manganaten, Niobaten des Metalls M; und/oder Verbindungen der Formel MₐX_{b}Y_{c}Z_{d}, wobei a≥2, z.B. a≥3; 0≤b≤4, z.B. 0≤b≤3, z.B. 0≤b≤2, z.B. 0≤b≤1; 0≤c≤8, z.B. 0≤c≤6, z.B. 0≤c≤5, z.B. 0≤c≤4, z.B. 0≤c≤3, z.B. 0≤c≤2, z.B. 0≤c≤1; 0≤d≤4, z.B. 0≤d≤3, z.B. 0≤d≤2, z.B. 0<d≤1; X ausgewählt ist aus Cl, Br, Br₃, I, I₃, P₃, As₃, As₅, AS₇, Sb₃, Sb₅, Sb₇, und Mischungen davon, z.B. Cl, Br, Br₃, I, I₃, P₃, und Mischungen davon; Y ausgewählt ist aus S, S, Te und Mischungen davon; und Z ausgewählt ist aus P, As, Sb, Bi, P₃, As₃, As₅, AS₇, Sb₃, Sb₅, Sb₇, und Mischungen davon, wobei mindestens zwei von b und c nicht gleichzeitig 0 sind.

Die Verbindung des Metalls M, welche eine Löslichkeit in Wasser bei 25°C und Normaldruck von weniger als 0,1 mol/L aufweist, muss hierbei also auch nicht stöchiometrisch sein und kann auch Mischphasen aufweisen. Auch sind ternäre, quaternäre, etc. Verbindungen wie beispielsweise Ag₃SbS₃, *Pyrargyrit,* bzw. Ag₃AsS₃, Xanthoconit umfasst.

Gemäß bestimmten Ausführungsformen ist die Verbindung des Metalls M, welche eine Löslichkeit in Wasser bei 25°C und Normaldruck von weniger als 0,1 mol/L aufweist, eine Verbindung der Formel Ia: M₁₋ₓX, wobei 0≤x≤0,5; bevorzugt 0≤x≤0,4; weiter bevorzugt 0≤x≤0,3 und X ausgewählt ist aus Cl, Br, Br₃, I, I₃, P₃, As₃, As₅, AS₇, Sb₃, Sb₅, Sb₇, und Mischungen davon, z.B. Cl, Br, Br₃, I, I₃, P₃, und Mischungen davon, z.B. auch Mischungen von Cl, Br, I, z.B. eine Verbindung der Formel I'a: Ag₁₋ₓX mit X = F, Cl, Br, Br₃, I, I₃, P₃, As₃, As₅, AS₇, Sb₃, Sb₅, Sb₇, oder eine Mischung davon, z.B. X = F, Cl, Br, Br₃, I, I₃, P₃, oder eine Mischung davon, z.B. eine Mischung von Cl, Br, und/oder I. Insbesondere letztere Verbindungen des Silbers sind teilweise photosensitiv. Für den Betrieb ist dies jedoch üblicherweise unerheblich, da die Elektroden im Elektrolyseur keinem Tageslicht ausgesetzt sind. Unterstöchiometrische Verbindungen mit 0 < x ≤ 0,5; bevorzugt 0 < x ≤ 0,4; weiter bevorzugt 0 < x ≤ 0,3; z.B. 0 < x ≤ 0,2; 0 < x ≤ 0,1 sind ebenfalls geeignet. Gemäß bestimmten Ausführungsformen ist x = 0. Beispiele der Verbindung Ia sind z.B. AgCl, AgBr, AgI, AgP₃, CuCl, CuBr, CuI, AuCl, AuBr, AuI.

Gemäß bestimmten Ausführungsformen ist die Verbindung des Metalls M, welche eine Löslichkeit in Wasser bei 25°C und Normaldruck von weniger als 0,1 mol/L aufweist, eine chalkogenbasierte Verbindung der Formel Ib: M_{2-y}Y, bzw. I*: M_{2-y}Y'_{w}, wobei 0≤y≤1; bevorzugt 0≤y≤0,8; weiter bevorzugt 0≤y≤0,6; Y ausgewählt ist aus S, S, Te und Mischungen davon; Y' ausgewählt ist aus S, Se, Te und Mischungen davon, z.B. S, Se und Mischungen davon, z.B. S, Se; und w ≥ 2, bevorzugt w≤10, z.B. w≤5, z.B. eine Verbindung der Formel I'b: Ag_{2-y}Y bzw. I*'b: Ag_{2-y}Y'_{w} mit Y = S, Se, Te oder eine Mischung davon; Y' = S, Se, Te oder einer Mischung davon, z.B. S, Se oder einer Mischung davon, z.B. S, Se; w ≥ 2, bevorzugt w≤10, z.B. w≤5. Im Sinne der Erfindung sind also auch die polymeren bzw. oligomeren Anionen des Schwefels oder Selens Y'_{w}²-. Diese Verbindungen sind teilweise halbleitend, so dass eine elektrische Ankopplung an den Silberkatalysator gewährleistet werden kann. Unterstöchiometrische Verbindungen mit 0 < y ≤ 1; bevorzugt 0 < y ≤ 0,8; weiter bevorzugt 0 < y ≤ 0,6; z.B. 0 < x ≤ 0,4; 0 < x ≤ 0,2; 0 < x ≤ 0,1 sind ebenfalls geeignet. Gemäß bestimmten Ausführungsformen ist y = 0. Beispiele der Verbindung der Formel Ib sind z.B. Ag₂S, Ag₂Se, Ag₂Te, Cu₂S, Cu₂Se, Cu₂Te, Au₂S, und Beispiele der Verbindung der Formel I'b z.B. Ag₂(S₂), Ag₂ (Se₂), Cu₂(S₂), Cu₂(Se₂), etc.

Gemäß bestimmten Ausführungsformen ist die Verbindung des Metalls M, welche eine Löslichkeit in Wasser bei 25°C und Normaldruck von weniger als 0,1 mol/L aufweist, eine Verbindung der Formel Ic: M_{3-z}Z, wobei 0≤z≤1,5; bevorzugt 0≤z≤1,2; weiter bevorzugt 0≤z≤0,9; und Z ausgewählt ist aus P, As, Sb, Bi, P₃, As₃, As₅, AS₇, Sb₃, Sb₅, Sb₇, und Mischungen davon, z.B. eine Verbindung der Formel I'c: Ag_{3-z}Z mit Z = P, As, Sb, Bi, P₃, As₃, As₅, AS₇, Sb₃, Sb₅, Sb₇, oder eine Mischung davon. Diese Verbindungen sind teilweise halbleitend oder metallisch leitend, so dass eine elektrische Ankopplung an den Silberkatalysator gewährleistet werden kann. Unterstöchiometrische Verbindungen mit 0 < z ≤ 1,5; bevorzugt 0 < z ≤ 1,2; weiter bevorzugt 0 < z ≤ 0,9; z.B. 0 < x ≤ 0,6; 0 < x ≤ 0,4; 0 < x ≤ 0,2; 0 < x ≤ 0,1 sind ebenfalls geeignet. Gemäß bestimmten Ausführungsformen ist z = 0. Beispiele der Verbindung der Formel Ic sind z.B. Ag₃P, Ag₃As, Ag₃Sb, Ag₃Bi, Cu₃P, Cu₃As, Cu₃Sb, Cu₃Bi.

Im Sinne der Erfindung sind auch Verbindungen des Metalls M, welche eine Löslichkeit in Wasser bei 25°C und Normaldruck von weniger als 0,1 mol/L aufweisen, mit schweren Anionen wie Molybdat, Wolframat, Arsenat, Selenat, Vanadat, Chromat, Manganat in verschiedenen Oxidationsstufen Niobat bzw. thio- und/oder seleno-Abkömmlinge davon. Diese Anionen können auch polymer in Form von Polyoxometallaten vorliegen. Diese werden dann vornehmlich in Form ihrer Silbersalze eingesetzt. Ebenfalls umfasst sind mineralische Verbindungen des Metalls M, beispielsweise der Formel MₐX_{b}Y_{c}Z_{d}, wobei a≥2, z.B. a≥3; 0≤b≤4, z.B. 0≤b≤3, z.B. 0≤b≤2, z.B. 0≤b≤1; 0≤c≤8, z.B. 0≤c≤6, z.B. 0≤c≤5, z.B. 0≤c≤4, z.B. 0≤c≤3, z.B. 0≤c≤2, z.B. 0≤c≤1; 0≤4, z.B. 0≤d≤3, z.B. 0≤d≤2, z.B. 0<d^1; X ausgewählt ist aus Cl, Br, Br₃, I, I₃, P₃, As₃, As₅, AS₇, Sb₃, Sb₅, Sb₇, und Mischungen davon, z.B. Cl, Br, Br₃, I, I₃, P₃, und Mischungen davon; Y ausgewählt ist aus S, S, Te und Mischungen davon; und Z ausgewählt ist aus P, As, Sb, Bi, P₃, As₃, As₅, AS₇, Sb₃, Sb₅, Sb₇, und Mischungen davon, z.B. P, As, Sb, Bi, und Mischungen davon, wobei mindestens zwei von b und c nicht gleichzeitig 0 sind, z.B. Ag₃SbS₃, *Pyrargyrit,* bzw. Ag₃AsS₃, Xanthoconit.

Die im Rahmen der Erfindung genannten Verbindungen des Metalls M, welche eine Löslichkeit in Wasser bei 25°C und Normaldruck von weniger als 0,1 mol/L aufweist, können in unterschiedlichen Modifikationen auftreten, die sich in ihrer Kristallstruktur unterscheiden können. Neben den beschriebenen Verbindungen sind beispielsweise auch folgende ternäre Verbindungen bekannt: Ag₃SbS₃, *Pyrargyrit,* Ag₃AsS₃, Xanthoconit, die in erfindungsgemäßen Gasdiffusionselektroden verwendet werden können.

Bevorzugt als Promotoren sind hierbei Metalloxide und/oder Verbindungen des Metalls M, welche eine Löslichkeit in Wasser bei 25°C und Normaldruck von weniger als 0,1 mol/L aufweisen.

Das eingesetzte Metalloxid und/oder die Verbindung des Metalls M, welche eine Löslichkeit in Wasser bei 25°C und Normaldruck von weniger als 0,1 mol/L aufweist, ist gemäß bestimmten Ausführungsformen wasserunlöslich, damit wässrige Elektrolyte in einer Elektrolyse unter Verwendung der erfindungsgemäßen Gasdiffusionselektrode verwendet werden können. Zudem kann dadurch, dass das Redoxpotential des Metalloxids geringer als das der Ethylenentwicklung ist, sichergestellt werden, dass Ethylen aus CO₂ mittels der erfindungsgemäßen GDE hergestellt werden kann. Auch sollen die Oxide gemäß bestimmten Ausführungsformen nicht bei einer Kohlendioxidreduktion reduziert werden. Nickel und Eisen sind beispielsweise ungeeignet, da sich hier Wasserstoff bildet. Weiterhin sind die Metalloxide bevorzugt nicht inert, sondern sollen bevorzugt hydrophile Reaktionszentren darstellen, die für die Bereitstellung von Protonen dienen können.

Die Promotoren, insbesondere, das Metalloxid und/oder die Verbindung des Metalls M, welche eine Löslichkeit in Wasser bei 25°C und Normaldruck von weniger als 0,1 mol/L aufweist, können hierbei die Funktion und Herstellung langzeitstabiler Elektrokatalysatoren begünstigen, indem sie katalytisch aktive Metall (M)-Nanostrukturen, z.B. von Cu und/oder Ag, stabilisieren. Die struktureller Promotoren können hierbei die hohen Oberflächenmobilitäten der Nanostrukturen und somit ihre Sinterneigung verringern.

Als Promotoren können für die elektrochemische Reduktion von CO₂ insbesondere folgende Metalloxide verwendet werden, die im elektrochemischen Fenster nicht zu Metallen reduziert werden können: ZrO₂ (E=-2,3V), Al₂O₃ (E=-2,4V), CeO₂ (E=-2,3V), MgO (E=-2,5). Hierbei ist zu beachten, dass die genannten Oxide nicht als Additive zugesetzt werden, sondern Teil des Katalysators selbst sind. Das Oxid erfüllt neben seiner Funktion als Promotor auch noch das Merkmal, das Metall M, z.B. Cu und/oder Ag, in der Oxidationsstufe I und darüber hinaus auch Intermediate bei der Kohlendioxidreduktion wie CO, C₂H₄ (bzw. OH) zu stabilisieren.

Insbesondere bevorzugt sind in Gasdiffusionselektroden Metalloxid-Metall M-Katalysator-Strukturen, die wie folgt hergestellt werden, wobei Metalloxide des Metalls M bei der Herstellung verwendet werden.

Für die Herstellung von Metalloxiden des Metalls M kann die Fällung gemäß bestimmten Ausführungsformen nicht wie häufig beschrieben in einem pH-Regime zwischen pH= 5,5-6,5 erfolgen, sondern in einem Bereich zwischen 8,0-8,5. Ebenfalls sind geschichtete Doppelhydroxide (layered double hydroxides, LDHs) mit einer Zusammensetzung M^{z+}₁₋ₓM³⁺ₓ(OH)₂]^{q+}(Xⁿ⁻)_{q/n}·yH₂O geeignet, wobei M¹⁺ = Ag⁺, Li⁺, Na⁺, K⁺, M²⁺ = Ca²⁺, Mg²⁺, Cᵤ²⁺ und M³⁺= Al,Y,Ti, Hf, Ga. Die entsprechenden Prekursoren können durch Ko-Dosierung einer Metallsalzlösung und einer basischen Carbonatlösung pH kontrolliert gefällt werden. Ein besonderes Merkmal dieser Materialien ist das Vorhandensein besonders feiner Metall M-Kristallite mit einer Größe von 4-10 nm, die durch ein vorhandenes Oxid des Metalls M strukturell stabilisiert werden können.

Es können die folgenden Effekte erzielt werden: Das Metalloxid kann aufgrund seiner hohen spezifischen Oberfläche zur besseren Verteilung des Katalysatormetalls M führen; hochdisperse Metallzentren können durch das Metalloxid stabilisiert werden; eine Gas, z.B. CO₂, Chemisorption kann durch das Metalloxid verbessert werden; Metalloxide des Metalls M, z.B. Cu, Ag, können stabilisiert werden.

Nach der Fällung kann eine Trocknung mit anschließender Kalzinierung im O₂/Ar Gasstrom erfolgen. Die erzeugten Oxidprekursoren können je nach Methode auch im Anschluss direkt in einem H_{2/}Ar Gasstrom reduziert werden. Der Aktivierungsschritt kann auch im Nachhinein elektrochemisch erfolgen. Um die elektrische Leitfähigkeit der aufgebrachten Schicht vor der elektrochemischen Aktivierung zu verbessern, können auch teilweise Oxidprekursoren und aktivierten Prekursoren gemischt werden.

Es ist erfindungsgemäß ebenfalls nicht ausgeschlossen, dass die fertig kalandrierte Elektrode einer nachträglichen Kalzinierung / thermischen Behandlung unterworfen wird, bevor die elektrochemische Aktivierung durchgeführt wird.

Eine weitere Herstellungsmöglichkeit geeigneter Elektrokatalysatoren basiert auf dem Ansatz der Erzeugung von an Metall M reichen intermetallischen Phasen wie z.B. Cu₅Zr, CU₁₀Zr₇, Cu₅₁Zr₁₄, Ag₅Zr, Ag₁₀Zr₇, Ag₅₁Zr₁₄, die aus der Schmelze hergestellt werden können. Entsprechende Ingots können im Nachhinein gemahlen und vollständig bzw. teilweise im O₂/Argon-Gasstrom kalziniert und in die Oxidform überführt werden. Beispielhafte an Metall M reiche Phasen sind binäre Systeme Cu-Al, Cu-Zr, Cu-Y, Cu-Hf, Cu-Ce, Cu-Mg sowie entsprechende ternäre Systeme mit Gehalten an Metall M >60at% : CuYAl, CuHfAl, CuZrAl, CuAlMg, CuAlCe und oder entsprechende Ag-reiche Phasen wie Ag-Al, Ag-Zr, Ag-Y, Ag-Hf, Ag-Ce, Ag-Mg, Ag-Y-Al, Ag-Hf-Al, Ag-Zr-Al, Ag-Al-Mg, Ag-Al-Ce mit Ag-Gehalten < 60 At.-%. Kupferreiche Phasen sind beispielsweise aus E. Kneller, Y. Khan, U. Gorres, The Alloy System Copper-Zirconium, Part I. Phase Diagram and Structural Relations, Zeitschrift für Metallkunde 77 (1), S. 43-48, 1986 für Cu-Zr-Phasen, aus Braunovic, M.; Konchits, V. V.; Myshkin, N.K.: Electrical contacts, fundamentals, applicationsand technology; CRC Press 2007 für Cu-Al-Phasen, aus Petzoldt, F.; Bergmann, J.P.; Schürer, R.; Schneider, 2013, 67 Metall, 504-507 für Cu-Al-Phasen, aus Landolt-Börnstein - Group IV Physical Chemistry Volume 5d, 1994, S. 1-8 für Cu-Ga-Phasen, und aus P.R. Subramanian, D.E. Laughlin, Bulletin of Alloy Phase Diagrams, 1988, 9,1, 51-56 für Cu-Hf-Phasen bekannt, auf die bezüglich dieser Phasen hiermit Bezug genommen wird und deren Inhalt zumindest diesbezüglich hiermit durch Bezug in diese Anmeldung aufgenommen wird.

Bevorzugt ist der Anteil an Metall M, z.B. Cu, Ag, größer als 40 At.%, weiter bevorzugt größer als 50 At.%, besonders bevorzugt größer als 60 At.%.

Hierbei ist jedoch nicht ausgeschlossen, dass die intermetallischen Phasen auch Nichtmetallelemente wie Sauerstoff, Stickstoff, Schwefel, Selen und/oder Phosphor enthält, also beispielsweise Oxide, Sulfide, Selenide, Nitride, und/oder Phosphide, Arsenide, Antimonide, Bismuthide enthalten sind. Gemäß bestimmten Ausführungsformen sind die intermetallischen Phasen teilweise oxididert.

Des Weiteren können folgende kupferenthaltende Perowskit-Strukturen und/oder Defekt-Perowskite und/oder Perowskit-verwandte Verbindungen für Elektrokatalysatoren, insbesondere für die Bildung von CO oder Kohlenwasserstoffen, verwendet werden: YBa₂Cu₃O_{7-,δ}, wobei 0≤δ≤1, CaCu₃Ti₄O₁₂, La₁,₈₅Sr_{0,15},CuO_{3,930}Cl_{0,053}, (La,Sr)₂CuO₄, AgTaO₃ oder lithiummodifiziertes Ag₁₋ₓLiₓNbO₃. Ferner wird nicht ausgeschlossen, dass Mischungen dieser Materialen zur Elektrodenpräparation verwendet werden können bzw. je nach Bedarf nachträgliche Kalzinierungs bzw. Aktivierungsschritte durchgeführt werden.

Bezüglich von Promotoren und geeigneten Metallen M bzw. Metalloxiden und deren Strukturen wird hiermit auch Bezug genommen auf die DE 102015203245.0 bzw. DE 102015215309.6, deren Inhalt zumindest diesbezüglich hiermit durch Bezug in diese Anmeldung aufgenommen wird.

Die Erfinder haben weiterhin herausgefunden, dass besonders aktive und CO bzw.C₂H₄-selektive Gasdiffusionselektroden für eine CO₂ und/oder CO-Elektrolyse eine Vielzahl an Parametern erfüllen sollen, die für eine selektive Produktbildung vorteilhaft sind. Im Folgenden sind erfindungsspezifische Eigenschaften bestimmter Ausführungsformen einer erfindungsgemäßen Elektrode dargestellt. Darüber hinaus haben die Erfinder herausgefunden, dass spezifische Ausführungsformen des Katalysators vorteilhaft sind, damit die Elektrode selektiv Produkte bilden kann.

Es wurden die folgenden wichtigen spezifischen Parameter und Anforderungen für eine kohlenwasserstoffselektive Gasdiffusionselektrode gefunden:
- Zugänglichkeit der Katalysatorpartikel mit Eduktgas, z.B. CO₂ und/oder CO über vorwiegend hydrophobe Poren.
- Vorwiegend hydrophile Bereiche die einen Kontakt zwischen Elektrolyt und Katalysatorpartikel ermöglichen.
- Ausreichend hohe elektrische Leitfähigkeit der Elektrode bzw. des Katalysators sowie eine homogene Potentialverteilung über die gesamte Elektrodenfläche (potentialabhängige Produktselektivität)
- Hohe chemische und mechanische Stabilität im Elektrolysebetrieb (Unterdrückung von Rissbildung und Korrosion)
- Definierte Porosität mit einem geeigneten Verhältnis zwischen hydrophilen und hydrophoben Kanälen bzw. Poren in unmittelbarer Nachbarschaft (Sicherstellung von CO₂-Verfügbarkeit bei gleichzeitigem Vorhandensein von H⁺-Ionen)

Idealer Weise sollten alle enthaltenen Partikel Teil der Dreiphasengrenze sein, um hohe Stromdichten erreichen zu können. Das Porensystem sollte, insbesondere für Kupfer eine ausreichende Absorption von Zwischenprodukten aufweisen, um eine Weiterreaktion bzw. Dimerisierung / Oligomerisierung zu gewährleisten.

Darüber hinaus sind für den Elektrokatalysator aus dem Metall M und einer kationischen Form davon, insbesondere M⁺, für eine elektrochemische Reduktion, insbesondere von CO₂ zu Ethylen, die folgenden Eigenschaften vorteilhaft:
- einheitliche Partikelgröße mit hoher spezifischer Oberfläche.
- dendritische Morphologie, keine isolierten Zentren oder Cluster
- das Metall M, z.B. Ag, Cu, sollte nicht im reinen kubischflächenzentriertem Gitter vorliegen, sondern Strukturdefekte aufweisen
- Das Vorliegen eines einwertigen Oxids, z.B. CU₂O für Cu, Ag₂O für Ag des Metalls M (bzw. PdO für Pd) ist für die Ethylenselektivität vorteilhaft, die Bildung von höherwertigen Oxiden ist vorteilhafterweise zu vermeiden.
- hohe Reinheit ohne Fremdmetallspuren an Übergangsmetallen, sowie Kohlenstoffbestandteile (Ruße, Kohlen).
- zur Stabilisierung von Strukturdefekten können elektrochemisch stabile Oxide verwendet werden.
- hohe Selektivität und Langzeitstabilität
- geringe Überspannung gegenüber der Gasreduktion, z.B. CO₂-Reduktion.

Für CO oder kohlenwasserstoffselektive Gasdiffusionselektroden bei einer Reduktion von CO₂ und/oder CO sind demnach mehr intrinsische Eigenschaften nötig, als bekannte Systeme bieten. Der Elektrokatalysator und die Elektrode sind demnach in einem engen Zusammenspiel.

Gemäß bestimmten Ausführungsformen umfasst die Gasdiffusionselektrode einen Träger, bevorzugt in Form eines Flächengebildes, und
eine Schicht umfassend das Metall M, das Ionenaustauschermaterial und mindestens einen Binder, wobei die Schicht hydrophile und hydrophobe Poren und/oder Kanäle umfasst, wobei der Gewichtsanteil des Ionenaustauschermaterials in der Schicht bevorzugt größer ist als der Gewichtsanteil des Binders.

Gemäß bestimmten Ausführungsformen umfasst die Gasdiffusionselektrode einen Träger, bevorzugt in Form eines Flächengebildes,
eine erste Schicht umfassend das Metall M, das Ionenaustauschermaterial und optional mindestens einen Binder, wobei die erste Schicht hydrophile und optional hydrophobe Poren und/oder Kanäle umfasst, und
weiter eine zweite Schicht umfassend das Metall M und mindestens einen Binder, wobei die zweite Schicht sich auf dem Träger befindet und die erste Schicht auf der zweiten Schicht, wobei der Gehalt an Binder in der ersten Schicht bevorzugt kleiner ist als in der zweiten Schicht, wobei die zweite Schicht hydrophobe Poren und/oder Kanäle umfasst, weiter bevorzugt wobei die zweite Schicht 3 - 30 Gew.% Binder, bevorzugt 4 - 28 Gew.% Binder, weiter bevorzugt 5 - 20 Gew.%, z.B. 10 - 20 Gew.% Binder, bezogen auf die zweite Schicht, und die erste Schicht bevorzugt 0 - 20 Gew.% Binder, weiter bevorzugt 0,1 - 15 Gew.% Binder, weiter bevorzugt 1 - 12 Gew.% Binder, noch weiter bevorzugt 5 - 10 Gew.% Binder (z.B. PTFE), und/oder 0,1 - 40 Gew.% Ionenaustauschermaterial, bevorzugt 1 - 35 Gew.% Ionenaustauschermaterial, weiter bevorzugt 3 - 30 Gew.% Ionenaustauschermaterial, z.B. 10 - 25 Gew.% Ionenaustauschermaterial, bezogen auf die erste Schicht, aufweist. In der ersten und zweiten Schicht kann sich beispielsweise gemäß bestimmten Ausführungsformen der Anteil an Metall M, Binder und Ionenaustauschermaterial auf jeweils 100 Gew.% ergänzen. Es ist hierbei nicht ausgeschlossen, dass die zweite Schicht ein Ionenaustauschermaterial enthält, bevorzugt enthält die zweite Schicht, welche der Gasseite zugewandt ist, jedoch kein Ionenaustauschermaterial, z.B. Anionenaustauschermaterial.

Gemäß bestimmten Ausführungsformen umfasst die erfindungsgemäße Elektrolysezelle weiter eine Anode und mindestens eine Membran und/oder mindestens ein Diaphragma zwischen der Kathode und Anode, beispielsweise mindestens eine Anionenaustauschermembran.

Die weiteren Bestandteile der Elektrolysezelle wie etwa die Anode, ggf. eine Membran und oder ein Diaphragma, Zuleitung(en) und Ableitung(en), die Spannungsquelle, etc., sowie weitere optionale Vorrichtungen wie Kühl- oder Heizeinrichtungen sind erfindungsgemäß nicht besonders beschränkt, wie auch nicht Anolyten und/oder Katholyten, die in einer solchen Elektrolysezelle verwendet werden, wobei die Elektrolysezelle gemäß bestimmten Ausführungsformen auf Kathodenseite zur Reduktion von Kohlendioxid und/oder CO verwendet wird.

Im Rahmen der Erfindung ist ebenso die Ausgestaltung des Anodenraums und des Kathodenraums nicht besonders beschränkt.

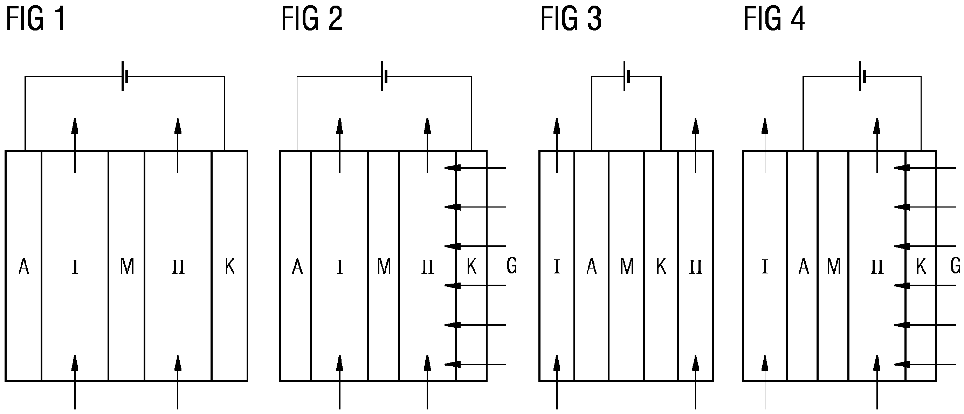

Erste beispielhafte Ausgestaltungen für einen exemplarischen Aufbau von generellen Elektrolysezellen sowie von möglichen Anoden- und Kathodenräumen sind in Figuren 1 bis 4 und 29 dargestellt.

Eine elektrochemische Reduktion von beispielsweise CO₂ und/oder CO findet in einer Elektrolysezelle statt, welche üblicherweise aus einem Anoden und einem Kathodenraum besteht. In den nachfolgenden Figuren 1 bis 4 sind Beispiele einer möglichen Zellanordnung dargestellt. Für jede dieser Zellanordnungen kann eine beschriebene Gasdiffusionselektrode verwendet werden, beispielsweise als Kathode. In Figuren 1 bis 4 wie auch in Figur 29 sind beispielhaft Membranen M zur Trennung von Katholyt und Anolyt dargestellt, welche aber auch beispielsweise durch Diaphragmen ergänzt oder ersetzt werden können.

Beispielhaft ist der Kathodenraum II in Figur 1 so ausgestaltet, dass ein Katholyt von unten zugeführt wird, wobei dieser nach oben den Kathodenraum II verlässt. Alternativ kann der Katholyt aber auch von oben zugeführt werden, wie beispielsweise bei Fallfilmelektroden. Über die Gasdiffusionselektrode K kann beispielsweise CO₂ und/oder CO zugeführt werden. An der Anode A, welche mit der Kathode K mittels einer Stromquelle zur Bereitstellung der Spannung für die Elektrolyse elektrisch verbunden ist, findet im Anodenraum I die Oxidation eines Stoffes statt, der von unten beispielsweise mit einem Anolyt zugeführt wird, und der Anolyt mit dem Produkt der Oxidation dann den Anodenraum verlässt. Dieser 2-Kammer-Aufbau unterscheidet sich vom 3-Kammer-Aufbau in Figur 2 dahingehend, dass ein Reaktionsgas wie beispielsweise Kohlendioxid oder CO durch eine poröse Gasdiffusionselektrode als Kathode in den Kathodenraum II zur Reduktion gefördert werden kann. Obgleich nicht dargestellt sind aber auch Ausführungsformen mit poröser Anode denkbar. Sowohl in Figur 1 wie auch in Figur 2 sind die Räume I und II durch eine Membran M getrennt. Im Gegensatz hierzu liegen im PEM (Protonen- bzw. Ionen- Austauscher-Membran) -Aufbau der Figur 3 eine poröse Kathode K und eine poröse Anode A direkt an der Membran M, wodurch der Anodenraum I vom Kathodenraum II getrennt wird. Der Aufbau in Figur 4 entspricht einer Mischform aus dem Aufbau aus Figur 2 und dem Aufbau aus Figur 3, wobei auf Katholytseite ein Aufbau mit Gasdiffusionselektrode vorgesehen ist, wie in Figur 2 dargestellt, wohingegen auf Anolytseite ein Aufbau wie in Figur 3 vorgesehen ist. Selbstverständlich sind auch Mischformen oder andere Ausgestaltungen der beispielhaft dargestellten Elektrodenräume denkbar. Weiterhin denkbar sind Ausführungsformen ohne Membran. Gemäß bestimmten Ausführungsformen können der kathodenseitige Elektrolyt und der anodenseitige Elektrolyt somit identisch sein, und die Elektrolysezelle/Elektrolyseeinheit kann ohne Membran auskommen. Eine ausreichende Gastrennung kann dann beispielsweise durch entsprechende Konstruktion der Elektrolysezelle erreicht werden. Es ist jedoch nicht ausgeschlossen, dass die Elektrolysezelle in solchen Ausführungsformen eine Membran und/oder ein Diaphragma oder mehrere Membranen und/oder Diaphragmen, z.B. 2, 3, 4, 5, 6 oder mehr Membranen und/oder Diaphragmen, welche gleich oder verschieden sein können, aufweist, jedoch ist dies ggf. mit zusätzlichem Aufwand verbunden hinsichtlich der Membran wie auch der angelegten Spannung. Katholyt und Anolyt können auch außerhalb der Elektrolysezelle optional wieder gemischt werden.

Figuren 1 bis 4 sind schematische Darstellungen. Die Elektrolysezellen aus Figuren 1 bis 4 können auch zu gemischten Varianten zusammengefügt werden. Beispielsweise kann der Anodenraum als PEM-Halbzelle, wie in Figur 3, ausgeführt sein, während der Kathodenraum aus einer Halbzelle besteht, die ein gewisses Elektrolytvolumen zwischen Membran und Elektrode beinhaltet, wie in Figur 1 dargestellt.

Auch ein Flow-by-Betrieb ist in einer erfindungsgemäßen Elektrolysezelle möglich, wobei die erfindungsgemäße Elektrolysezelle dann auch einen wie in Fig. 29 gezeigten Aufbau haben kann. In Figur 29 kann hierbei dann das CO₂ durch die Gasdiffusionselektrode durchdiffundieren und zum Katholyten gelangen.

Gemäß bestimmten Ausführungsformen ist der Abstand zwischen Elektrode und Membran und/oder Diaphragma sehr klein bzw. 0, wenn die Membran und/oder das Diaphragma porös ausgeführt ist und eine Zufuhr des Elektrolyten beinhaltet. Die Membran und/oder das Diaphragma kann auch mehrschichtig ausgeführt sein, sodass getrennte Zuführungen von Anolyt bzw. Katholyt ermöglicht wird. Trenneffekte können bei wässrigen Elektrolyten beispielsweise durch die Hydrophobizität von Zwischenschichten und/oder eine entsprechende Einstellung der vorherrschenden Kapillarkräfte erreicht werden. Leitfähigkeit kann trotzdem gewährleistet werden, wenn leitfähige Gruppen in derartige Trennschichten integriert sind. Die Membran und/oder das Diaphragma kann eine ionenleitende Membran und/oder ein ionenleitendes Diaphragma sein, bzw. ein Separator, der nur eine mechanische Trennung bewirkt und für Kationen und Anionen durchlässig ist.

Die Elektrode ist eine Gasdiffusionselektrode, die es ermöglicht, eine Dreiphasen-Elektrode aufzubauen. Beispielsweise kann ein Gas von hinten an die elektrisch aktive Vorderseite der Elektrode geführt werden, um dort die elektrischchemische Reaktion durchzuführen. Gemäß bestimmten Ausführungsformen kann die Gasdiffusionselektrode auch nur hinterströmt sein, d.h. ein Gas wie CO₂ und/oder CO wird an der Hinterseite der Gasdiffusionselektrode im Verhältnis zum Elektrolyten vorbeigeführt, wobei das Gas dann durch die Poren der Gasdiffusionselektrode dringen kann und das Produkt hinten abgeführt werden kann. Es wurde herausgefunden, dass, obwohl ein Gas wie CO₂ nicht durch den Elektrolyt "blubbert", trotzdem ähnlich hohe Faraday-Effizienzen (FE) an Produkten zu finden sind. Beispielsweise ist der Gasfluss beim Hinterströmen bevorzugt auch umgekehrt zum Fluss des Elektrolyten, damit eventuell durchgedrückte Flüssigkeit abtransportiert werden kann. Auch hierbei ist ein Spalt zwischen der Gasdiffusionselektrode und der Membran als Elektrolytreservoir vorteilhaft.

Die Zufuhr eines Gases lässt sich darüber hinaus auch auf andere Weise für die in Figur 3 dargestellte Gasdiffusionselektrode bewerkstelligen, beispielsweise bei einer Zufuhr von CO₂. Dadurch dass das Gas, z.B. CO₂, gezielt durch die Elektrode geführt wird, können wiederum die Reduktionsprodukte schnell ausgetragen werden.

In bestimmten Ausführungsformen weist die Elektrolysezelle eine Membran und/oder ein Diaphragma auf, welche den Kathodenraum und den Anodenraum der Elektrolysezelle trennt, um eine Vermischung der Elektrolyten zu verhindern. Die Membran und/oder das Diaphragma ist hierbei nicht besonders beschränkt, sofern sie den Kathodenraum und den Anodenraum trennt. Insbesondere verhindert sie im Wesentlichen einen Übertritt der an Kathode und/oder Anode entstehenden Gase zum Anoden- bzw. Kathodenraum. Eine bevorzugte Membran ist eine Ionenaustauschmembran, beispielsweise auf Polymerbasis. Ein bevorzugtes Material einer Ionenaustauschmembran ist ein sulfoniertes Tetrafluorethylen-Polymer wie Nafion®, beispielsweise Nafion® 115. Neben Polymermembranen können auch keramische Membranen Verwendung finden, z.B. die in EP 1685892 A1 erwähnten und/oder mit Zirkoniumoxid beladene Polymere, z.B. Polysulfone.

Gemäß bestimmten Ausführungsformen ist mindestens eine Membran und/oder mindestens ein Diaphragma, insbesondere mindestens eine Anionenaustauschermembran (z.B. Tokuyama A201) und/oder ein Anionenaustauscherdiaphragma, nicht in Kontakt mit der Anode. Gemäß bestimmten Ausführungsformen ist zwischen einer Anionenaustauschermembran und/oder einem Anionenaustauscherdiaphragma und der Anode mindestens eine weitere Membran und/oder ein weiteres Diaphragma vorgesehen, beispielsweise eine Kationenaustauschermembran und/oder ein Kationenaustauscherdiaphragma, z.B. eine Nafion®-basierte Membran, wobei hier bevorzugt dann ein Elektrolytspat dazwischen vorgesehen ist. Gemäß bestimmten Ausführungsformen umfasst die erfindungsgemäße Elektrolysezelle 2 oder mehr, z.B. 3, 4, 5, 6 oder mehr Membranen und/oder Diaphragmen, wobei zwischen den verschiedenen Membranen und/oder Diaphragmen und/oder den Membranen und/oder Diaphragmen und den Elektroden Elektrolyträume vorgesehen sein können. Gemäß bestimmten Ausführungsformen umfasst die erfindungsgemäße Elektrolysezelle mindestens eine Anionenaustauschermembran und/oder ein Anionenaustauscherdiaphragma und mindestens eine Kationenaustauschermembran und/oder ein Kationenaustauscherdiaphragma. Gemäß bestimmten Ausführungsformen ist die Kationenaustauschermembran und/oder das Kationenaustauscherdiaphragma in direktem Kontakt mit der Anode. Gemäß bestimmten Ausführungsformen ist eine Anionenaustauschermembran und/oder ein Anionenaustauscherdiaphragma in direktem Kontakt mit der erfindungsgemäßen Gasdiffusionselektrode, welche als Kathode geschalten ist.

Über die Verwendung von Anionentransportharzen bzw. Ionomeren kann eine ionische Anbindung der GDE zu einer Anionenaustauschermembran und/oder einem Anionenaustauscherdiaphragma in einer Zero-gap Anordnung sichergestellt werden. Dieser Schritt ist für diese Betriebsweise vorteilhaft, da andernfalls eine verstärkte Salzbildung im Bereich der Grenzschicht zwischen GDE und Anionenaustauschermembran beobachtet werden kann, die letztlich zur vollständigen Isolation der GDE führen kann.

Darüber hinaus ist das Material der Anode nicht besonders beschränkt und hängt in erster Linie von der erwünschten Reaktion ab. Beispielhafte Anodenmaterialien umfassen Platin bzw. Platinlegierungen, Palladium bzw. Palladiumlegierungen und Glaskohlenstoff. Weitere Anodenmaterailien sind auch leitfähige Oxide wie dotiertes bzw. undotiertes TiO₂, Indiumzinnoxid (ITO), Fluor dotiertes Zinnoxid (FTO), Aluminium dotiertes Zinkoxid (AZO), Iridiumoxid, etc. Ggf. können diese katalytisch aktiven Verbindungen auch nur in Dünnfilmtechnologie oberflächlich aufgebracht sein, beispielsweise auf einem Titan und/oder Kohlenstoffträger.

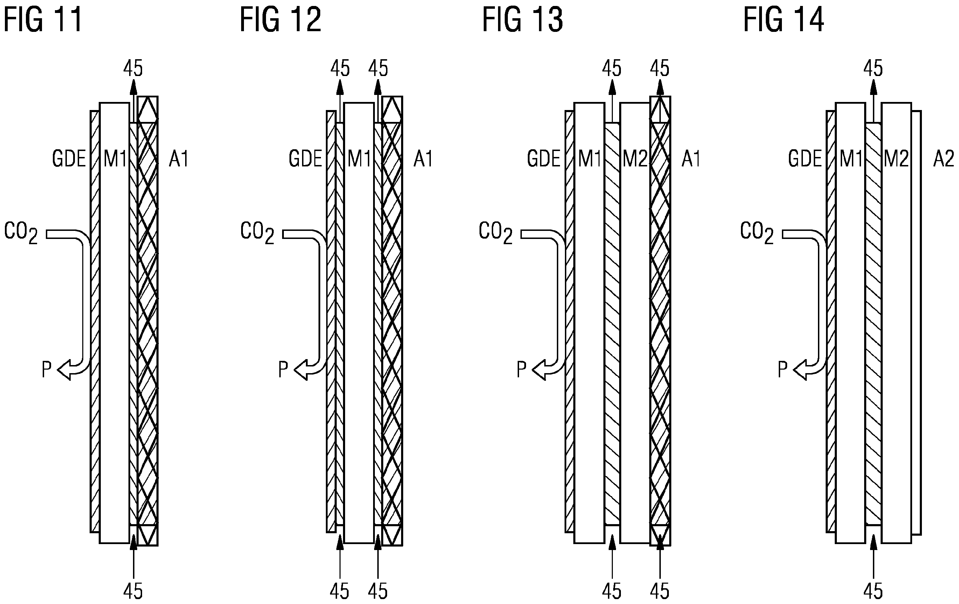

Für den Einsatz von mit Ionenaustauschermaterial, insbesondere mit Anionenaustauscherharz und/oder Ionomer, hergestellten Gasdiffusionselektroden sind beispielhaft auch die in Fig. 11 bis Fig. 14 gezeigten Betriebsmodi möglich, wobei auch hier gemäß bestimmten Ausführungsformen auch anstelle von Membranen Diaphragmen vorgesehen sein können.

In Fig. 11 bis 14 sind prinzipiell zwei Zellvarianten für Elektrolysezellen dargestellt: Alle Zellvarianten verwenden eine Vollkatalysator GDE mit einschichtigem Aufbau, z.B. auf ein Netz aufgewalzt, die mit einem Anionenaustauscherharz bzw. Ionomer als Anionenaustauschermaterial hergestellt bzw. imprägniert wurde und die in direktem Kontakt zur AEM steht. In allen Fällen wird gasförmiges CO₂ von der Rückseite der GDE zugeführt, ohne dass ein vollständiger Durchtritt erfolgt, was auch als flow by Variante zu sehen ist. In den gezeigten Zellen wie auch generell bei einem erfindungsgemäßen Reduktionsverfahren kann ein Gas wie CO₂ und/oder CO angefeuchtet sein, bevor es zur GDE gelangt.

In den in Fig. 11 und 12 gezeigten Varianten befindet sich ein mit Elektrolyt 45 durchfluteter Spalt auf der AnodenSeite mit Anode A1, die als dimensionsstabile Anode ausgebildet ist. In den in Fig. 13 und 14 gezeigten Varianten hat die Anode A1, A2 direkten Kontakt zur Membran M2, wobei in Fig. 14 der Anodenkatalysator der Anode A2 direkt auf die Membran M2, beispielsweise eine Nafion® Membran, aufgepresst wurde (catalyst coated membrane; CCM). Eine weitere Besonderheit der in Fig. 13 und 14 gezeigten Varianten ist, dass das auf der Anodenseite gebildete Produktgas P nicht mit CO₂ verunreinigt ist, da das Hydrogencarbonat nur bis zum mittleren Elektrolytspalt vordringt und dort durch H⁺ zersetzt werden kann.

Bei der Ausführung der Anode ist es vorteilhaft, einen direkten Kontakt zu einer Anionenaustauschermembran M1 aufgrund beobachteter Stabilitätsprobleme zu vermeiden. Dies gilt sowohl für die CCM-Ausführung in Fig. 14, bei der der Anodenkatalysator, z.B. ein IrOx Katalysator, direkt in die Membran M2 gepresst wird, als auch für die Verwendung einer dimensionsstabilen Anode A1, welche zum Beispiel aus einem IrOx beschichteten Titanstreckmetall bestehen kann. Der Spalt zwischen der Anode und der GDE (Kathode) sollte dabei vorteilhaft so klein wie möglich sein, um eine möglichst hohe Effizienz des Systems zu erzielen. Dieser Abstand kann beispielweise durch einen dünnen Spacer (z.B. Kunststoffnetz, Diaphragma, etc.; nicht gezeigt) gewährleistet werden, welcher bevorzugt keine elektrische Leitfähigkeit besitzt, aber eine hohe Ionenleitfähigkeit. In den in Fig. 13 und 14 gezeigten Varianten ist eine direkte Anbindung der Anode zur Membran möglich, da das Nafion-Polymer der Membran M2 gegenüber IrOx stabil ist.

Aufgrund einer elektrophoretischen Auftrennung des Elektrolyten kann im Fall der Verwendung einer Anionenaustauschmembran als Membran M1 in den in Fig. 11 und 12 gezeigten Varianten an der Anode A1 eine verstärkte Bildung von CO₂ festgestellt werden, da hier Hydrogencarbonat (HCO₃⁻) entladen wird, welches ursprünglich auf der Kathode GDE gebildet wurde (z.B. KOH+CO₂=KHCO₃) und über die Anionenaustauschermembran M1 in den Anolyten gelangt. Als Resultat dieses Aufbaus kann an der Anode A1 neben Sauerstoff viel CO₂ gebildet werden, sodass eine unerwünschte Abfallgasmischung entsteht und letztlich CO₂ verloren gehen kann. Dies kann in den in Fig. 13 und 14 gezeigten Varianten durch die Verwendung von zwei Membranen vermieden werden, da hier die CO₂ Bildung aus HCO₃⁻ im innenliegenden Elektrolytspalt nach der folgenden Reaktion stattfinden kann: HCO₃⁻+H⁺=CO₂+H₂O. Durch die entsprechende Anordnung wird eine Gastrennung zwischen CO₂ und O₂ ermöglicht, wodurch CO₂ abgetrennt und wieder der Reaktion zur Verfügung gestellt werden kann. Die dargestellte Betriebsweise beschreibt den Diffusionsbetrieb der Gasdiffusionselektrode, wobei gasförmige Edukte (hier CO₂) und Produkte P über die Rückseite der Elektrode bereitgestellt werden können, ohne dass diese durch die Elektrode hindurch treten. Der verwendete Gasdruck sollte vorteilhaft in Abhängigkeit des "Bubble Points" (z.B. Bereich von 1-50 mbar) der Elektrode GDE so gewählt werden, dass kein Gasdurchtritt erfolgt. Ein Vorteil dieser Betriebsweise ist ein höherer Umsatz des eingesetzten CO₂ im Gegensatz zur Durchströmvariante. Die beschriebene Gasdiffusionselektrode eignet sich im besonderen Maße für diesen Zellbetrieb.

Die beschriebene Herstellungstechnik kann die Grundlage für die Produktion von Elektroden in größerem Maßstab darstellen, die Stromdichten >200mA/cm² je nach Betriebsweise erzielen können. Insbesondere alle bisher bekannten Methoden zur Herstellung ethylenselektiver Cu-Elektroden sind nicht für ein scale-up geeignet bzw. sind nicht formstabil, aber ebenso andere Elektrolysezellen zur Reduktion von CO₂ und/oder CO. Die Verwendung von Ionenaustauschermaterial, beispielsweise Harzen, in der Gasdiffusionselektrode GDE ermöglicht einen langzeitstabilen Elektrolysebetrieb einer katalysatorbasierten GDE in den in Fig. 1 bis 4 und 11 bis 14 dargestellten Zellanordnungen bei hohen Stromdichten in salzhaltigen Elektrolyten.

Die Anodenreaktion in der erfindungsgemäßen Elektrolysezelle ist keineswegs auf eine Sauerstoffproduktion beschränkt. Weitere Beispiele sind die Peroxodisulfatbildung oder die Chlorherstellung. Insbesondere bei der Chlorherstellung ist die Vermeidung einer Salzausscheidung besonders wichtig, da beispielweise NaHCO₃ zu den schwerlöslicheren Carbonaten zählt und für die Natriumionen als beispielhafte Kationen des Elektrolyten 45 den Auslasskanal darstellt. Vorteilhaft für die Leitfähigkeit des Elektrolyten und für eine weitere Aufarbeitung sind daher konzentrierte Lösungen nahe an der Sättigungsgrenze (z.B. für NaHCO₃: 96 g/L (20 °C); 165 g/L (60 °C); 236 g/L (100 °C). Das Anionenaustauschermaterial kann ein zu starkes Eindiffundieren der Natriumionen in die Gasdiffusionselektrode verhindern. Dies ist insbesondere für den Betrieb bei hohen Stromdichten und hohen Betriebstemperaturen wichtig, um die entstehenden Anionen leichter abzutransportieren und einer erhöhten Beweglichkeit von Kationen, z.B. Natriumionen, entgegenzuwirken.

Ebenso wie die in Fig. 1 bis 4 und 29 gezeigten Elektrolysezellen können auch die in Fig. 11 bis 14 dargestellten Elektrolysezellen auch zu gemischten Varianten zusammengefügt werden. Beispielsweise kann wiederum der Anodenraum als PEM-Halbzelle ausgeführt sein, während der Kathodenraum aus einer Halbzelle bestehen kann, die ein gewisses Elektrolytvolumen zwischen Membran M, M1, M2 und Elektrode beinhaltet. Gemäß bestimmten Ausführungsformen ist der Abstand zwischen Elektrode und Membran M, M1, M2 sehr klein bzw. 0, wenn die Membran porös ausgeführt ist und einen Zufuhr des Elektrolyten beinhaltet. Die Membranen M, M1, M2 können auch mehrschichtig ausgeführt sein, sodass getrennte Zuführungen von Anolyt bzw. Katholyt ermöglicht werden. Trenneffekte können beispielsweise bei wässrigen Elektrolyten beispielsweise durch die Hydrophobizität von Zwischenschichten erreicht werden. Eine Leitfähigkeit kann trotzdem gewährleisten werden, wenn beispielsweise ionenleitfähige Gruppen in derartige Trennschichten integriert sind. Die Membran M, M1, M2 kann eine ionenleitende Membran sein, bzw. ein Separator, der nur eine mechanische Trennung bewirkt.

Noch ein weiterer Aspekt der vorliegenden Erfindung betrifft eine Elektrolyseanlage, umfassend die erfindungsgemäße Elektrolysezelle.

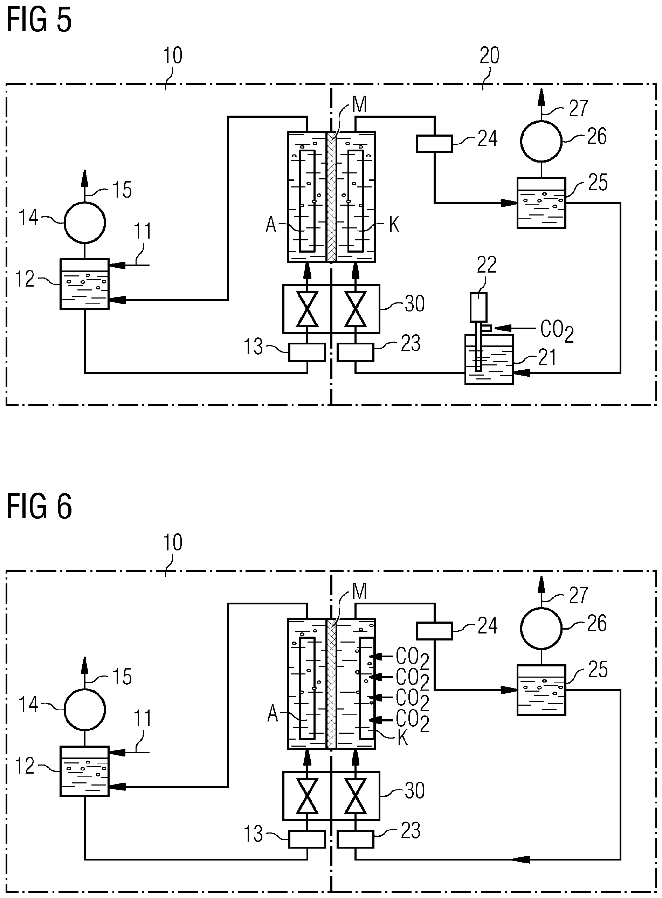

Eine abstrakte Darstellung einer Vorrichtung einer allgemeinen Elektrolyseanlage ist in Figur 5 gezeigt.

In Figur 5 ist beispielhaft eine Elektrolyse dargestellt, bei der auf Seiten der Kathode Kohlendioxid reduziert wird und auf Seiten der Anode A Wasser oxidiert wird, obgleich auch andere Reaktionen ablaufen können, beispielsweise auf Anodenseite. Auf Seiten der Anode könnte gemäß weiteren Beispielen eine Reaktion von Chlorid zu Chlor, Bromid zu Brom, Sulfat zu Peroxodisulfat (mit oder ohne Gasentwicklung), etc. stattfinden. Als Anode A eignet sich beispielsweise Platin oder Iridiumoxid auf einem Titanträger, und als Kathode K eine Elektrode zur Reduktion von CO₂, beispielsweise basierend auf Cu. Die beiden Elektrodenräume der Elektrolysezelle sind durch eine Membran M, beispielsweise aus Nafion®, getrennt. Die Einbindung der Zelle in ein System mit Anolytkreislauf 10 und Katholytkreislauf 20 ist in der Figur 5 schematisch gezeigt.

Anodenseits wird gemäß dieser beispielhaften Ausführungsform in einen Elektrolyt-Vorratsbehälter 12 Wasser mit Elektrolytzusätzen über einen Einlass 11 zugeführt. Es ist jedoch nicht ausgeschlossen, dass Wasser zudem oder anstelle des Einlasses 11 an einer anderen Stelle des Anolytkreislaufs 10 zugeführt wird, da gemäß Figur 5 der Elektrolyt-Vorratsbehälter 12 auch zur Gastrennung verwendet wird. Aus dem Elektrolyt-Vorratsbehälter 12 wird das Wasser mittels der Pumpe 13 in den Anodenraum gepumpt, wo es oxidiert wird. Das Produkt wird dann wieder in den Elektrolyt-Vorratsbehälter 12 gepumpt, wo es in den Produktgasbehälter 14 abgeführt werden kann. Über einen Produktgasauslass 15 kann das Produktgas dem Produktgasbehälter 14 entnommen werden. Selbstverständlich kann die Abtrennung des Produktgases auch an anderer Stelle erfolgen, beispielsweise auch im Anodenraum. Es ergibt sich somit ein Anolytkreislauf 10, da der Elektrolyt anodenseits im Kreis geführt wird.

Auf der Kathodenseite wird im Katholytkreislauf 20 Kohlendioxid über einen CO₂-Einlass 22 in einen Elektrolyt-Vorratsbehälter 21 eingebracht, wo es beispielsweise physikalisch gelöst wird. Mittels einer Pumpe 23 wird diese Lösung in den Kathodenraum gebracht, wo das Kohlendioxid an der Kathode K reduziert wird. Eine optionale weitere Pumpe 24 pumpt dann die an der Kathode K erhaltene Lösung weiter zu einem Behälter zur Gastrennung 25, wo ein Produktgas in einen Produktgasbehälter 26 abgeführt werden kann. Über einen Produktgasauslass 27 kann das Produktgas dem Produktgasbehälter 26 entnommen werden. Der Elektrolyt wird wiederum aus dem Behälter zur Gastrennung zurück zum Elektrolyt-Vorratsbehälter 21 gepumpt, wo erneut Kohlendioxid zugegeben werden kann. Auch hier ist nur eine beispielhafte Anordnung eines Katholytkreislaufs 20 angegeben, wobei die einzelnen Vorrichtungskomponenten des Katholytkreislaufs 20 auch anders angeordnet sein können, beispielsweise indem die Gastrennung bereits im Kathodenraum erfolgt. Bevorzugt erfolgen die Gastrennung und die Gassättigung getrennt d.h. in einem der Behälter wird der Elektrolyt mit CO₂ gesättigt und dann als Lösung ohne Gasblasen durch den Kathodenraum gepumpt. Das Gas, das aus dem Kathodenraum austritt, kann dann gemäß bestimmten Ausführungsformen zu einem überwiegenden Anteil aus Produktgas bestehen, da CO₂ selbst gelöst bleiben kann und/oder da es verbraucht wurde und somit die Konzentration im Elektrolyten etwas geringer ist.

Die Elektrolyse erfolgt in Figur 5 durch Zugabe von Strom über eine nicht dargestellte Stromquelle.

Um den Fluss des Wassers und des im Elektrolyten gelösten CO₂ steuern zu können, können im Anolytkreislauf 10 und Katholytkreislauf 20 optional Ventile 30 eingebracht sein.

Die Ventile 30 sind in der Figur vor dem Einlass in die Elektrolysezelle dargestellt, können aber auch beispielsweise nach dem Auslass der Elektrolysezelle und/oder an anderen Stellen des Anolyt- oder Katholytkreislaufs vorgesehen sein. Auch kann beispielsweise ein Ventil 30 im Anolytkreislauf vor dem Einlass in die Elektrolysezelle liegen, während das Ventil im Katholytkreislauf hinter der Elektrolysezelle liegt, oder umgekehrt.

Eine abstrakte Darstellung einer beispielhaften Vorrichtung einer Elektrolyseanlage ist in Figur 6 gezeigt.

Die Vorrichtung in Figur 6 entspricht hierbei der der Figur 5, wobei die Zugabe des Kohlendioxids nicht über einen CO₂-Einlass 22 in einen Elektrolyt-Vorratsbehälter 21 eingebracht wird, sondern direkt über die Kathode K, die hier als die erfindungsgemäße Gasdiffusionselektrode ausgestaltet ist. Hierbei kann die Zufuhr des CO₂ beispielsweise durch Hinterströmen oder Durchströmen der Gasdiffusionselektrode erfolgen.

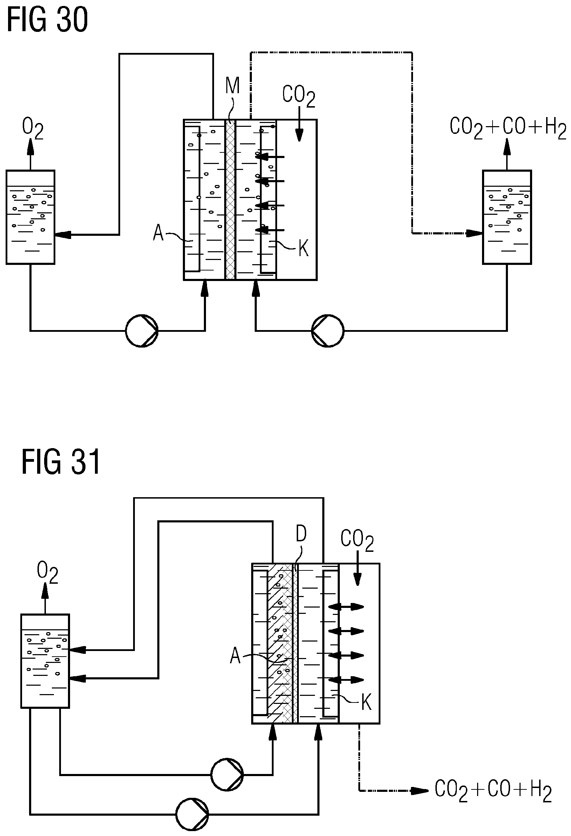

Weitere beispielhafte erfindungsgemäße Vorrichtungen mit durchströmten und hinterströmten Gasdiffusionselektroden als Kathoden sind in Figuren 30 und 31 gezeigt, wobei hier das Kohlenstoffdioxid im Gegenstrom geführt wird. In Figur 31 ist auch anstelle einer Membran ein Diaphragma D vorgesehen.

Auch hier sind Vorrichtungen mit gemischten Anolyten und Katholyten möglich durch Verwendung entsprechender Elektrolysezellen, wie auch beispielhaft oben beschrieben.

Die Zusammensetzung einer Flüssigkeit oder Lösung, beispielsweise einer Elektrolytlösung, die der Elektrolyseeinrichtung zugeführt wird, ist hierbei nicht besonders beschränkt, und kann alle möglichen Flüssigkeiten oder Lösungsmittel umfassen, wie beispielsweise Wasser, in denen ggf. zusätzlich Elektrolyten wie Leitsalze, ionische Flüssigkeiten, Stoffe zur elektrolytischen Umsetzung wie Kohlendioxid, welches beispielsweise in Wasser gelöst sein kann, Additive zur Verbesserung der Löslichkeit und/oder des Benetzungsverhaltens, Entschäumer, etc. enthalten sein können. Im Katholyten kann beispielsweise Kohlendioxid umfasst sein.

Die Flüssigkeiten oder Lösungsmittel, ggf. zusätzliche Elektrolyte wie Leitsalze, ionische Flüssigkeiten, Stoffe zur elektrolytischen Umsetzung, Additive zur Verbesserung der Löslichkeit und/oder des Benetzungsverhaltens, Entschäumer, etc. können zumindest in einem Elektrodenraum oder in beiden Elektrodenräumen vorhanden sein. Es können auch jeweils zwei oder mehr der genannten Stoffe bzw. Gemische davon umfasst sein. Diese sind erfindungsgemäß nicht besonders beschränkt und können anodenseitig und/oder kathodenseitig verwendet werden.

Anstelle des in Figuren 6, 30 und 31 dargestellten Aufbaus einer Elektrolyseanlage mit einer Elektrolysezelle umfassend einen Anodenraum mit Anode A, eine Membran M und einen Kathodenraum mit Gasdiffusionselektrode K können auch beispielsweise die in Fig. 1 - 4 bzw. Fig. 11 - 14 gezeigte Elektrolysezellen in einer erfindungsgemäßen Elektrolyseanlage zur Anwendung kommen.

Die erfindungsgemäße Elektrolysezelle bzw. die erfindungsgemäße Elektrolyseanlage kann beispielsweise bei einer Elektrolyse von Kohlendioxid und/oder CO zum Einsatz kommen.

In noch einem weiteren Aspekt betrifft die vorliegende Erfindung ein Verfahren zur Elektrolyse von CO₂ und/oder CO, wobei die erfindungsgemäße Elektrolysezelle oder die erfindungsgemäße Elektrolyseanlage verwendet wird. Gemäß bestimmten Ausführungsformen findet das Verfahren bei einer Temperatur von 40 °C oder mehr, beispielsweise 50°C oder mehr, statt. Gemäß bestimmten Ausführungsformen wird ein wässriger Elektrolyt verwendet.

Die elektrochemische Reduktion von CO₂ und/oder CO kann in einer Elektrolysezelle stattfinden, welche üblicherweise aus einem Anoden- und einem Kathodenraum besteht. Anodenraum und Kathodenraum werden typischerweise mit mindestens einer Ionen-selektiven Membran oder einem Diaphragma voneinander getrennt gehalten. In den Fig. 1 bis 4 und 11 bis 14 sind Beispiele von möglichen Zellanordnungen von Elektrolysezellen zur erfindungsgemäßen Elektrolyse von CO₂ und/oder CO dargestellt, welche im Detail auch oben beschrieben sind. Mit jeder dieser Zellanordnungen ist das erfindungsgemäße Elektrolyseverfahren durchführbar. Gemäß bestimmten Ausführungsformen erfolgt die elektrochemische Reduktion von CO₂ und/oder CO im Flow-By Modus.

Zudem ist die vorliegende Erfindung auf die Verwendung der erfindungsgemäßen Elektrolysezelle bei der Elektrolyse von CO₂ und/oder CO gerichtet.

Weiterhin offenbart ist ein Verfahren zur Herstellung einer Gasdiffusionselektrode, umfassend ein Metall M, das ausgewählt ist aus Ag, Au, Cu, Pd und Mischungen und/oder Legierungen und/oder Salzen davon, und mindestens einen Binder, wobei die Gasdiffusionselektrode hydrophile und hydrophobe Poren und/oder Kanäle umfasst, wobei in den Poren und/oder Kanälen der Gasdiffusionselektrode zumindest teilweise ein Ionenaustauschermaterial enthalten ist, wobei das Ionenaustauschermaterial ein Anionenaustauschermaterial ist, wobei das Anionenaustauschermaterial keine Imidazolium-, Pyridinium- und β-Wasserstoff enthaltenden Gruppen aufweist; wobei das Verfahren umfasst:
- Herstellung einer Mischung umfassend zumindest das Metall M, das Ionenaustauschermaterial und den mindestens einen Binder,
- Auftragen der Mischung umfassend zumindest das Metall M, das Ionenaustauschermaterial und den mindestens einen Binder auf einen Träger, bevorzugt in Form eines Flächengebildes, und
- trockenes oder angefeuchtetes Aufwalzen der Mischung auf den Träger zum Bilden einer Schicht; oder
- Herstellung einer ersten Mischung umfassend zumindest das Metall M, das Ionenaustauschermaterial und optional mindestens einen Binder,
- Herstellen einer zweiten Mischung umfassend zumindest das Metall M und mindestens einen Binder,
- Auftragen der zweiten Mischung umfassend zumindest das Metall M und den mindestens einem Binder auf einen Träger, bevorzugt in Form eines Flächengebildes,
- Auftragen der ersten Mischung umfassend zumindest das Metall M, das Ionenaustauschermaterial und optional mindestens einem Binder auf die zweite Mischung,
- Optional Auftragen weiterer Mischungen auf die erste Mischung, und
- trockenes oder angefeuchtetes Aufwalzen der zweiten und ersten Mischung und ggf. weiterer Mischungen auf den Träger zum Bilden einer zweiten und einer ersten Schicht und ggf. weiterer Schichten; oder
- Bereitstellen einer Gasdiffusionselektrode, umfassend das Metall M und den mindestens einen Binder, wobei die Gasdiffusionselektrode hydrophile und hydrophobe Poren und/oder Kanäle umfasst, und
- zumindest teilweise Einbringen eines Ionenaustauschermaterials in die Poren und/oder Kanälen der Gasdiffusionselektrode.

Mit diesem erfindungsgemäßen Herstellungsverfahren kann insbesondere die beschriebene Gasdiffusionselektrode hergestellt werden, sodass die entsprechenden Merkmale der Gasdiffusionselektrode auch bei diesem Herstellungsverfahren Anwendung finden können. Insbesondere können auch die Gewichtsanteile der Bestandteile bei der Herstellung entsprechend den Gewichtsanteilen der Gasdiffusionselektrode geeignet eingestellt werden und die entsprechenden Materialien als Metall M, Ionenaustauschermaterial und Binder verwendet werden. Auch können gemäß bestimmten Ausführungsformen die oben beschriebenen Promotoren geeignet zugegeben werden.

Das Herstellen der ersten und zweiten Mischungen bzw. der ersten Mischung ist hierbei nicht besonders beschränkt und kann auf geeignete Weise, beispielsweise durch Rühren, Dispergieren, etc. erfolgen.

Wenn eine zweite Mischung aufgebracht wird, kann die erste Mischung auch 0 Gew.% Binder umfassen, also keinen Binder, da beim Aufwalzen Binder aus der zweiten Mischung in die sich aus der ersten Mischung bildende erste Schicht eingepresst werden kann und somit auch die erste Schicht einen Gehalt an Binder von beispielsweise wenigstens 0,1 Gew.%, beispielsweise 0,5 Gew.% aufweisen kann. Gemäß bestimmten Ausführungsformen enthält die erste Mischung beim Auftragen von 2 oder mehr Mischungen jedoch Binder.

Gemäß bestimmten Ausführungsformen umfasst der Binder ein Polymer, beispielsweise ein hydrophiles und/oder hydrophobes Polymer, beispielsweise ein hydrophobes Polymer, z.B. PTFE. Hierdurch kann eine geeignete Einstellung der vorwiegend hydrophoben Poren bzw. Kanäle erzielt werden.

Gemäß bestimmten Ausführungsformen liegt das Metall M für die Herstellung der Mischung in Form von Partikeln bzw. Katalysatorpartikeln vor, welche beispielsweise eine einheitliche Partikelgröße zwischen 1 und 80 µm, bevorzugt 10 bis 50 µm, weiter bevorzugt zwischen 30 und 50 µm haben. Die Partikelgröße kann hierbei beispielsweise mikroskopisch mittels Bildanalyse, durch Laserbeugung und/oder dynamische Lichtstreuung bestimmt werden. Weiterhin haben die Katalysatorpartikel gemäß bestimmten Ausführungsformen eine hohe Reinheit ohne Fremdmetallspuren. Durch geeignete Strukturierung, ggf. mit Hilfe der Promotoren, wie oben beschrieben, kann eine hohe Selektivität und Langzeitstabilität erzielt werden.

Durch geeignete Einstellung der Partikelgrößen von Metall M, Ionenaustauschermaterial und Binder und ggf. weiterer Zusätze wie Promotoren können die Poren und/oder Kanäle, also die hydrophoben und hydrophilen Poren und/oder Kanäle, der GDE gezielt eingestellt werden für den Durchlass an Gas und/oder Elektrolyt und somit für die katalytische Reaktion.

Das Auftragen einer ersten und weiteren Mischung(en) ist nicht besonders beschränkt und kann beispielsweise durch Aufstreuen, Aufsieben, Rakeln, etc. erfolgen.

Ebenso ist das Aufwalzen nicht besonders beschränkt und kann auf geeignete Weise erfolgen. Ggf. können hierzu die jeweiligen Mischungen angefeuchtet werden, beispielsweise zu einer Feuchte von 20 Gew.% oder weniger, z.B. 5, 4, 3, 2, 1 oder weniger Gew.%, bezogen auf die jeweilige Mischung. Ein Einwalzen der Mischung bzw. Masse (Partikel) in die Struktur des Trägers, beispielsweise eine Netzstruktur, ist gemäß bestimmten Ausführungsformen ausdrücklich erwünscht, um eine hohe mechanische Stabilität der Elektrode zu gewährleisten. Bei einem Zweistufenprozess ist dies nicht der Fall, hier liegt der vorextrudierte Film nur auf dem Netz auf.

Infolge dessen ist es auch bei der Auftragung mehrerer Schichten bevorzugt, dass die Mischungen für die Schichten einzeln auf den Träger aufgetragen werden und dann insgesamt aufgewalzt werden, um eine bessere Haftung zwischen den Schichten zu erzielen.

Die mechanische Beanspruchung des Binders, beispielsweise von Kunststoffpartikeln, durch den Walzprozess führt zur Vernetzung des Pulvers durch die Ausbildung von Binderkanälen, beispielsweise PTFE-Fibrillen. Das Erreichen dieses Zustandes ist besonders wichtig, um eine geeignete Porosität bzw. mechanische Stabilität der Elektrode zu garantieren. Die Hydrophobizität kann über den jeweiligen Gehalt an Polymer und Ionenaustauschermaterial, z.B. Ionenaustauscherharz, bzw. über die physikalischen Eigenschaften des Metalls M bzw. des Katalysatorpulvers eingestellt werden, beispielsweise wie oben in Zusammenhang mit der erfindungsgemäßen Gasdiffusionselektrode diskutiert.

Der Grad der Fibrillierung des Binders, beispielsweise PTFE, (Strukturparameter ζ) korreliert direkt mit der aufgebrachten Scherrate, da sich der Binder, beispielsweise ein Polymer, als scher-verdünnendes (pseudoplastisches) Fluid beim Auswalzen verhält. Nach der Extrusion weist die erhaltene Schicht durch die Fibrillierung einen elastischen Charakter auf. Diese Strukturänderung ist irreversibel, sodass sich dieser Effekt durch weiteres Auswalzen nicht mehr nachträglich verstärken lässt, sondern die Schicht durch das elastische Verhalten bei weiterer Einwirkung von Scherkräften beschädigt wird. Eine besonders starke Fibrillierung kann nachteilig zu einem schichtseitigen Zusammenrollen der Elektrode führen, so dass zu hohe Gehalte an Binder vermieden werden sollten.

Eine Temperierung der Walzen beim Aufwalzen kann den Fließprozess zusätzlich unterstützen. Der bevorzugte Temperaturbereich der Walzen liegt zwischen Raumtemperatur, z.B. 20 - 25°C, und 200°C, z.B. 20 - 200°C, vorzugsweise zwischen 40 und 100°C.

Gemäß bestimmten Ausführungsformen wird das Walzen bzw. Kalandrieren bei einer Walzendrehzahl zwischen 0,3 bis 3 U/min, bevorzugt 0,5-2 U/min durchgeführt. Gemäß bestimmten Ausführungsformen liegt die Flussrate bzw. Vorschubgeschwindigkeit (der GDE in Länge pro Zeit, beispielsweise beim Kalandrieren) Q im Bereich von 0,04 bis 0,4 m/min, bevorzugt 0,07 bis 0,3m/min.

Für ein trockenes Aufwalzen ist es bevorzugt, dass der Wassergehalt beim Walzen beispielsweise maximal der Raumfeuchte entspricht. Beispielsweise ist der Gehalt an Wasser und Lösungsmitteln beim Aufwalzen kleiner als 5 Gew.%, bevorzugt kleiner als 1 Gew.%, und beispielsweise auch 0 Gew.%.

Gemäß bestimmten Ausführungsformen ist der Träger ein Netz, z.B. umfassend das Metall M, mit einer Maschenweite w von 0,3 mm < w < 2,0 mm, bevorzugt 0,5 mm < w < 1,4 mm und einem Drahtdurchmesser x von 0,05 mm < x < 0,5 mm, bevorzug 0,1 mm ≤ x ≤ 0,25 mm.

Gemäß bestimmten Ausführungsformen liegt die Schütthöhe y der ersten Mischung auf dem Träger beim Auftragen im Bereich von 0,3 mm < y < 3,0 mm, bevorzugt 0,5 mm ≤ y ≤ 2,0 mm. Bei mehreren Schichten kann jede Schicht eine entsprechende Schütthöhe y haben, wobei sich die Schütthöhen aller Schichten bevorzugt jedoch zu nicht mehr als 3,0 mm, bevorzugt nicht mehr als 2 mm, weiter bevorzugt zu nicht mehr als 1,5 mm, addieren.

Gemäß bestimmten Ausführungsformen erfolgt das Aufwalzen durch einen Kalander. Gemäß bestimmten Ausführungsformen kann somit das erfindungsgemäße Verfahren durch einen Kalandrierprozess erfolgen, wie er schematisch in Figur 8 gezeigt ist und oben beschrieben ist. Der Walzprozess selbst ist dadurch gekennzeichnet, dass sich vor der Walze ein Reservoir an Material bildet. Gemäß bestimmten Ausführungsformen beträgt die Spaltbreite beim Aufwalzen H₀ die Höhe des Trägers + 40% bis 50% der Gesamtschütthöhe Hf der Mischungen der verschiedenen Schichten, beispielsweise der Schütthöhe y der ersten Mischung, wenn nur diese verwendet wird, oder entspricht nahezu der Dicke des Netzes +0.1-0.2mm Zustellung. Das Verhältnis zwischen Austrittsdicke H und Spaltbreite H₀ sollte bevorzugt im Bereich von 1.2 liegen.

Gemäß bestimmten Ausführungsformen wird beim erfindungsgemäßen Herstellungsverfahren ein Trockenkalandrierverfahren verwendet, bei dem grundsätzlich eine Mischung aus Binder, z.B. einem kaltfließendem Polymer, z.B. vorzugweise PTFE, dem jeweiligen Pulver des Metalls M bzw. des Katalysatorpulvers und ggf. des Pulvers des Ionenaustauschermaterials hergestellt wird, z.B. in einer Intensivmischvorrichtung bzw. im Labormasstab mit einer Messermühle (IKA). Die Mischprozedur kann beispielsweise der folgenden Vorgehensweise folgen: 30sec Mahlen/Mischen und 15sec Pause für insgesamt 6 min, bezogen auf die Messermühle mit 50g Gesamtbeladung. Das gemischte Pulver erreicht nach dem Mischvorgang eine leicht klebrige Konsistenz. Je nach Pulvermenge bzw. gewähltem Polymer bzw. Kettenlänge bzw. Ionenaustauschermaterial kann die Mischdauer auch variieren, bis dieser Zustand erreicht wird. Die erhaltene Pulvermischung kann im Anschluss auf den Träger, z.B. ein Metallnetz, z.B. mit einer Maschenweite von >0.5mm<1.0mm und einem Drahtdurchmesser von 0.1-0.25 mm, in geeigneter Schüttdicke aufgestreut bzw. ausgesiebt. Damit das Pulver nicht durch das Netz rieselt, kann die Rückseite des Netzes mit einer Folie versiegelt werden. Die vorbereitete Schicht kann dann mit Hilfe einer Zweirollenwalzeinrichtung (Kalender) verdichtet werden.

Nachfolgend sind beispielhaft konkrete Verfahren zur Herstellung einer Gasdiffusionselektrode umfassend ein Anionenaustauschermaterial mit zweischichtigem und einschichtigem Aufbau dargelegt.

Herstellung einer Gasdiffusionselektrode mit zweischichtigem Aufbau:
Um eine fortschreitende Durchflutung der für den Gastransport benötigten hydrohoben Bereiche der GDE zu verhindern, die durch ein zusätzliches Beimischen eines hydrophilen Austauscherharzes weiter intensiviert wird, kann für eine GDE mit festem Anionenaustauscherharz ein zweischichtiger Aufbau verwendet werden. Dazu kann beispielsweise auf den Träger als Stromverteiler eine hydrophobe Grundschicht als zweite Schicht, z.B. mit 15 Gew.% PTFE und 85 Gew.% Pulver des Metalls M, z.B. Cu oder Ag, hergestellt werden, auf die eine zweite Schicht mit dem entsprechenden Austauscherharz aufgebracht wird. Die extrudierte Grundschicht sollte dabei bevorzugt eine Dicke von 100 - 500 µm aufweisen, vorzugsweise 250 - 400 µm. Die Grundschicht kann beispielsweise durch eine sehr hohe Leitfähigkeit, z.B. 7 mOhm/cm, gekennzeichnet sein und eine hohe Porosität von z.B. 50-70 % und einen hydrophoben Charakter aufweisen. Die Grundschichtschicht kann im Bereich der Überlappungszone zur Katalysatorschicht, der ersten Schicht, selbst katalytisch aktiv sein. Sie dient zur besseren flächigen elektrischen Anbindung des Elektrokatalysators und kann aufgrund der hohen Porosität die Verfügbarkeit von Gas, z.B. die CO₂-Verfügbarkeit, verbessern. Mit Hilfe dieser Methode kann gemäß bestimmten Ausführungsformen die benötigte Menge an Katalysator um den Faktor 20-30 verringert werden. Eine entsprechende Elektrokatalysator bzw. Metall M/Binder, z.B. PTFE/Ionenaustauscher Mischung kann in einem nachfolgenden Schritt auf die Grundschicht zur Herstellung der ersten Schicht aufgesiebt und ebenfalls kalandriert werden. Die Präparation kann auch mit der Herstellung der Katalysatorschicht beginnen und die Auftragung von Binder, z.B. PTFE, auf der Netz-Rückseite nachträglich erfolgen. Der verwendete Binder, z.B. PTFE, kann ggf. vorher ebenfalls in einer Messermühle vorbehandelt werden, um eine Faserbildung zu erreichen. Eine beispielhafte Herstellung der Gasdiffusionselektrode mit Binder, z.B. P,TFE basierter Diffusionsbarriere basiert auf mehreren Schichten, die nicht isoliert voneinander zu betrachten sind, sondern in den Grenzbereichen eine möglichst breite Überlappungszone, z.B. von 1-20 µm aufweisen. Die Gesamtschichtdicke der Gasdiffusionselektrode kann im Bereich von 200-800 µm, z.B. 450-600 µm, liegen.

Der zweischichte Aufbau ermöglicht die Verwendung hydrophiler Ionenaustauscherharze in der Katalysatorschicht, ohne dass ein Fluten der Gastransportporen eintritt.

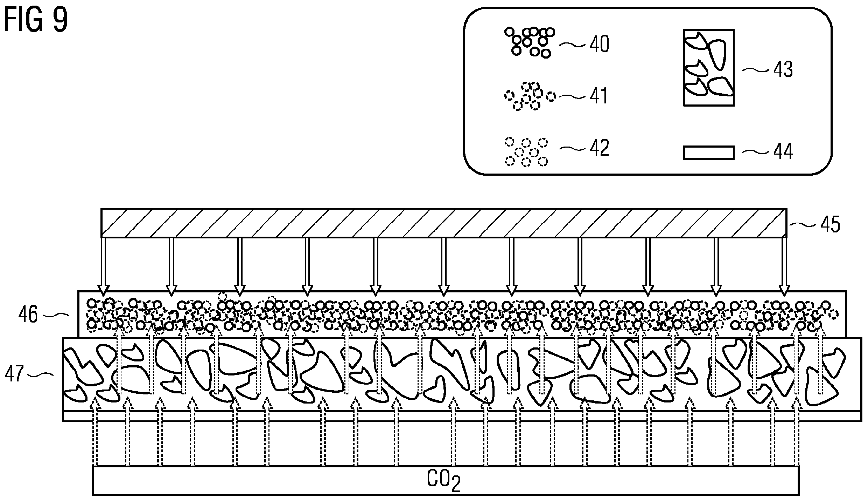

Ein beispielhafter schematischer Aufbau einer zweischichtigen GDE ist in Figur 9 gezeigt, wobei auf den Träger 44 als Stromverteiler eine hydrophobe Schicht 47 umfassend eine Mischung 43 aus Metall M und Binder, z.B. Cu und PTFE aufgetragen ist, und darauf eine hydrophile Schicht 46 als erste Schicht umfassend Katalysatorpartikel 40 des Metalls M, Binderpartikel 41, z.B. PTFE und Ionenaustauscherharz 42. Zur hydrophilen Schicht 46 gelangt Elektrolyt 45, während zur hydrophoben Schicht das Reaktionsgas, z.B. CO₂, gelangt.

Herstellung einer Gasdiffusionselektrode mit einschichtigem Aufbau:
Bei der Herstellung einer einschichtigen katalysatorbasierten Elektrode sollte ein Gehalt an polarem Ionenaustauscherpolymer stark verringert werden, um die Gastransporteigenschaften nicht nachteilig zu beeinflussen bzw. die Durchflutung mit Elektrolyt zu verhindern. Für diese Applikationsweise ist es daher bevorzugt, den Gehalt an polarem Ionenaustauscher auf maximal 1-20 Gew.% zu reduzieren, wenn dieser direkter Bestandteil der Pulvermischung ist. Die Herstellung kann ansonsten analog zur Herstellung einer GDE mit zweischichtigem Aufbau erfolgen.

Das erfindungsgemäße Herstellungsverfahren kann auch die folgenden Schritte umfassen:
- Bereitstellen einer Gasdiffusionselektrode, umfassend ein Metall M, das ausgewählt ist aus Ag, Au, Cu, Pd und Mischungen und/oder Legierungen und/oder Salzen davon, und mindestens einen Binder, wobei die Gasdiffusionselektrode hydrophile und hydrophobe Poren und/oder Kanäle umfasst, und
- zumindest teilweise Einbringen eines Ionenaustauschermaterials in die Poren und/oder Kanälen der Gasdiffusionselektrode.

Es kann also auch eine bestehende GDE, also beispielsweise eine kommerziell erhältliche Silber-Gasdiffusionselektroden aus dem Bereich der Chloralkalielektrolyse (Oxygen Depolarized Cathode, ODC), umfassend Metall M und Binder, z.B. PTFE, nachbehandelt werden, beispielsweise indem diese direkt mit einer Mikroemulsion aus Ionenaustauscherharz bzw. Ionomer imprägniert wird, beispielsweise derart, dass im Wesentlichen ausschließlich die Oberfläche oder ein oberflächennaher Bereich der Elektrode hydrophile Eigenschaften aufweist. Somit kann beispielsweise eine bestehende GDE mit einer potentialfreien Diffusionsbarriere modifiziert werden. Bei dieser Präparationsweise ist es vorteilhaft, eine Mikroemulsion oder Mikrodispersion des Ionenaustauschermaterials, z.B. Anionenaustauschermaterials, in Wasser oder einem weiteren geeigneten Lösungsmittel, z.B. einem Alkohol wie Ethanol, insbesondere Wasser, herzustellen, da hier ein Eindringen in die Porenstruktur und eine nachteilige Veränderung der Gastransporteigenschaften besser verhindert werden kann.

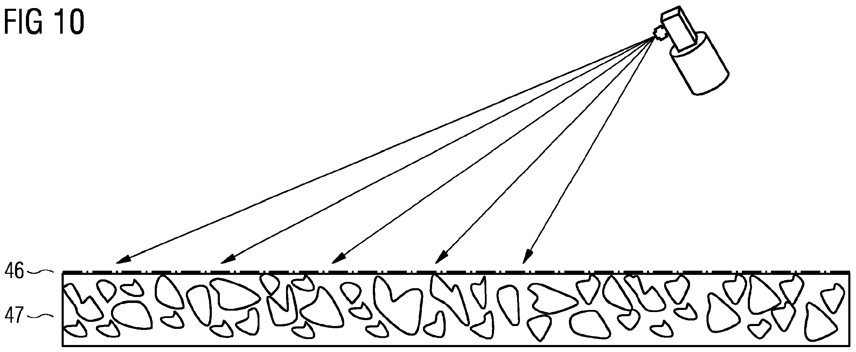

Fig. 10 zeigt dies schematisch, wobei auf der hydrophoben Schicht 47 durch das Aufsprühen eine hydrophile Beschichtung und/oder Schicht 46 gebildet werden kann.

Für den Testmaßstab kann beispielsweise eine Präparation einer Gasdiffusionselektrode auf der Basis einer GDL-Struktur, z.B. Freudenberg C2, Sigracet 25 BC, erfolgen. Zur Präparation der Elektrode kann beispielsweise eine Katalysatorsuspension aus Nanopartikeln und Ionomer in Alkohol verwendet werden.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

Die Erfindung wird im Anschluss mit Bezug auf verschiedene Beispiele davon weiter im Detail erläutert. Die Erfindung ist jedoch nicht auf diese Beispiele beschränkt.

### Beispiele

### Beispiel 1: Herstellung einer einschichtigen Gasdiffusionselektrode (GDE) aus pulverförmigem Kationenaustauscherharz und Katalysatorpulver (Vergleichsbeispiel)

1. 15g Amberlite IRA-900 (21,4 Gew.%) (Chlorid-Form; Rohm & Haas) wird in einer IKA A10 Messermühle für 3 min zerkleinert.
2. Es erfolgt die weitere Zugabe von 5g (7,2 Gew.%) PTFE Pulver (Dyneon TF 1750) unter Wiederholung einer 3 min andauernden Mischperiode.
3. Danach erfolgt die Zugabe von 50g (71,4 Gew.%) Kupferpulver mit einer Partikelgröße von 100-150 µm, und es wird erneut 3 min gemischt.
4. Die Mischung wird auf ein Kupfernetz (LxB=10cmx4cm) mittels einer 0.5mm dicken Schablone aufgesiebt und das überschüssige Material mit einem Spachtel oder Rakel entfernt, sodass eine einheitlich dicke Pulverschicht entsteht.
5. Das Netz mit der aufgesiebten Pulverschicht wird in einem 2-Walzen Kalander auf eine Dicke von 500 µm gewalzt. Vorzugweise werden die Walzen in diesem Schritt auf eine Temperatur von 60-80°C temperiert.

Zur elektrochemischen Charakterisierung wurde ein Versuchsaufbau verwendet, der im Wesentlichen dem der oben beschriebenen Elektrolysezelle bzw. einer entsprechenden Anlage der Figur 12 mit Durchflusszellen für die Elektrolyse entspricht.

In der Flusszelle wurde als Kathode die jeweilige Gasdiffusionselektrode (GDE) mit einer aktiven Fläche von 3,3 cm² verwendet, die Gaszufuhrrate von Kohlendioxid auf Kathodenseite betrug 50 mL/min, und der Elektrolytfluss auf beiden Seiten 130 ml/min. Die Anode war Iridiumoxid auf einem Titanträger mit einer aktiven Fläche von 10 cm². Der Katholyt war eine 1M KHCO₃-Lösung mit KHCO₃ in einer 1M Konzentration, und der Anolyt war 1M KHCO₃, jeweils in deionisiertem Wasser (18 MΩ), jeweils in einer Menge von 100 mL, und die Temperatur betrug 25°C. Daneben wurde auch 0.5M K₂SO₄ als Katholyt und 2.5M KOH als Anolyt versucht.

Es konnte kein stabiler Elektrolysebetrieb aufgrund der starken Elektrolytdurchlässigkeit der Gasdiffusionselektrode gewährleistet werden.

### Beispiel 2: Herstellung einer zweischichtigen GDE aus hydrophober Grundschicht und hydrophiler Austauscherschicht mit pulverförmigem Kationenaustauscherharz und Katalysatorpulver (Vergleichsbeispiel)

42,5 g Kupferpulver (85 Gew.%) und 7,5 g PTFE Pulver Dyneon TF 1750 (15 Gew.%) werden in einer IKA A 10 Messermühle mit Hartmetallschlegel für 6 min vermischt. Nach 15 sec Mischen wird jeweils eine Pause von 15 sec eingehalten. Die Pulvermischung wird auf einen Stromverteiler (Kupfernetz mit einer Maschenweite von 0,375 mm und einer Drahtdicke von 0,14 mm) über eine 0,5 mm dicke Schablone ausgesiebt und das überschüssige Material mit einer Rakel entfernt. Das Netz mit der aufgesiebten Pulverschicht wird in einem 2-Walzen Kalander auf eine Dicke von 500 µm gewalzt. Vorzugweise werden die Walzen in diesem Schritt auf eine Temperatur von 60-80°C temperiert. In einem weiteren Schritt wird die Ionenaustauscherharz enthaltende Mischung aus Ausführungsbeispiel 1 auf die präparierte Grundschicht über eine 0,2 mm Schablone aufgesiebt und mittels Rakel kalibriert. Die Doppelschicht wird mittels 2-Walzen-Kalander mit einer Spaltbreite von 0,5 mm zu einer Elektrode verwalzt.

Der Zellaufbau zur Untersuchung der Produktselektivität entsprach dem von Beispiel 1, außer dass die entsprechend hergestellte GDE von Beispiel 2 als Kathode verwendet wurde.

Mit Hilfe der 2-Schicht Variante konnte die vollständige Durchflutung der GDE verhindert werden.

### Beispiel 3: Herstellung einer einschichtgen GDE aus Grundschicht und aufgesprühter Austauscherschicht mit Kationenaustauscherharz-Suspension (Vergleichsbeispiel)

42,5 g Kupferpulver (85 Gew.%) und 7,5 g PTFE Pulver Dyneon TF 1750 (15 Gew.%) werden in einer IKA A 10 Messermühle mit Hartmetallschlegel für 6 min vermischt. Nach 15 sec Mischen wird jeweils eine Pause von 15 sec eingehalten. Die Pulvermischung wird auf einen Stromverteiler (Kupfernetz mit einer Maschenweite von 0,375 mm und einer Drahtdicke von 0,14 mm) über eine 0,5 mm dicke Schablone ausgesiebt und das überschüssige Material mit einer Rakel entfernt. Das Netz mit der aufgesiebten Pulverschicht wird in einem 2-Walzen Kalander auf eine Dicke von 500 µm gewalzt.

Eine 20 Gew.%-ige Mirkodispersion von IRA 900 Ionenaustauscherharz (s. Beispiel 1) bzw. dem Ionomer Tokuyama AS4 (Tokuyama) wird auf die kalandrierte Gasdiffusionselektrode aufgesprüht, sodass ein dünner Film entsteht. Auf 40 cm² wurden insgesamt 10 ml aufgesprüht.

Der Zellaufbau zur Untersuchung der Produktselektivität entsprach dem von Beispiel 1, außer dass die entsprechend hergestellten GDE von Beispiel 3 als Kathode verwendet wurde.

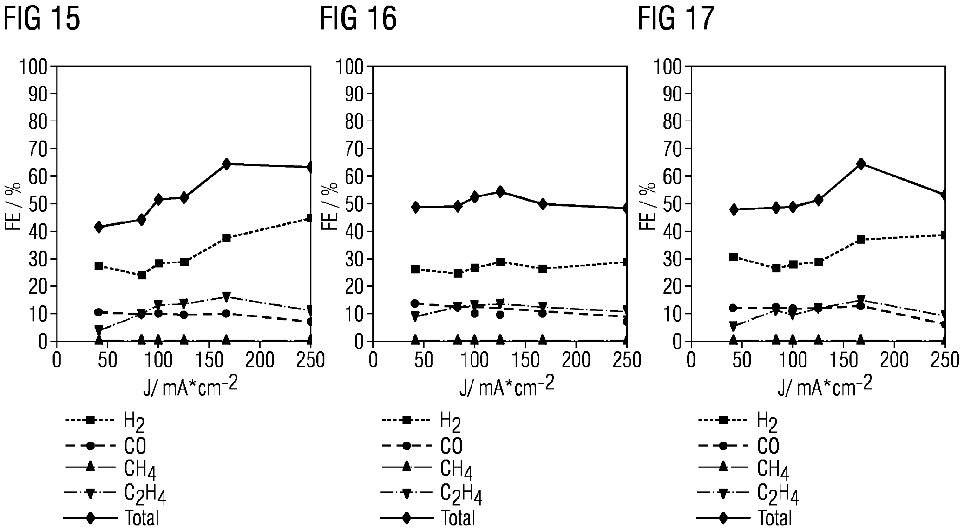

Fig. 15 zeigt die Ergebnisse einer reinen Kupfer-GDE als Vergleichselektrode, welche nicht mit der jeweiligen Dispersion besprüht wurde, Fig. 16 die Ergebnisse der mit Tokuyama AS4 imprägnierten GDE, und Fig. 17 die Ergebnisse der mit IRA 900 imprägnierten GDE. Angegeben ist in den Figuren jeweils die Faraday Effizienz (FE) in Abhängigkeit von der Stromdichte J. Der Vergleich der experimentellen Daten zeigt, dass die Verwendung von Ionenaustauscherharzen bzw. Ionomeren keinen negativen Einfluss auf die Ethylenselektivität aufweisen. Bei höheren Stromdichten wird zudem die Wasserstoffbildung im Vergleich zum reinen Kupferkatalysator leicht unterdrückt, s. Fig. 16 und 17 im Gegensatz zu Fig. 15.

### Beispiel 4: Beschichtung einer hydrophoben Grundschicht mit dem sauren Kationenaustauscher-Ionomer Poly(4-styrolsulfonsäure) (Vergleichsbeispiel)

In einem 4ml Schnappdeckelgläschen werden 60 mg detritischer Kupferkatalysator und 60 mg einer 18 Gew.% Suspension des Kationenaustauscher-Ionomer Poly(4-styrolsulfonsäure in Wasser eingewogen und mit 2ml Isopropanol verdünnt, und die Mischung für 15 min im Ultraschallbad homogenisiert. Die hergestellte Dispersion wird auf eine bereits hergestellte Grundschicht (4cmx10cm, Dicke 0,5 mm) aus 15 Gew.% PTFE und 85 Gew.% Kupferpulver mit einem Partikeldurchmesser der Kupferpartikel bei der Herstellung von 100-150 µm aufgetragen und im Argonstrom eingetrocknet und der Aufgießvorgang 3x wiederholt. Die Elektrode wird vor der Verwendung für 12h im Argonstrom getrocknet. Die Dicke veränderte sich nur unwesentlich.

Der Zellaufbau zur Untersuchung der Produktselektivität entsprach dem von Beispiel 1, außer dass die entsprechend hergestellte GDE von Beispiel 4 als Kathode verwendet wurde.

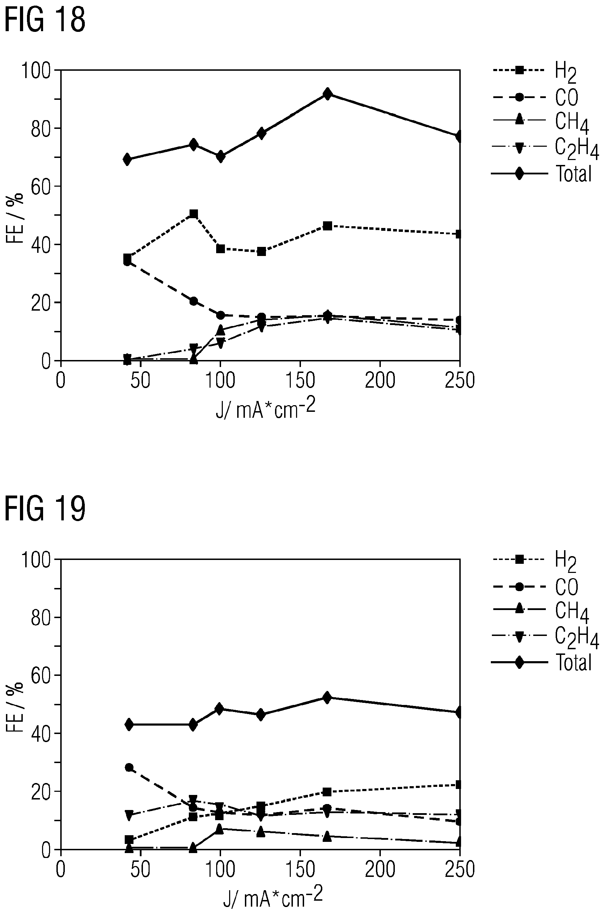

Fig. 18 zeigt die Ergebnisse hinsichtlich der Produktselektivität, die mit dieser Elektrode erhalten werden können, in Abhängigkeit von der Stromdichte. Wie in der Figur zu sehen fördert das saure Ionomer die Bildung von Methan (FE=15%). Die Faraday Effizienz für unerwünschtes H₂ liegt bei etwa 45%. Dies zeigt, dass saure Ionentauscher für die Bildung von CO und Kohlenwasserstoffe weniger geeignet sind. In Aufbauten mit einem direkten Kontakt zwischen einer sauren Nafionmembran und dem Katalysator können somit gewöhnlich kaum oder keine Kohlenwasserstoffe oder CO erhalten werden, sondern wird üblicherweise ausschließlich Wasserstoff gebildet.

### Beispiel 5: Beschichtung einer hydrophoben Grundschicht mit einer Mikroemulsion aus dem Anionenaustauscherharz IRA 900 (Me₄N⁺Cl⁻; Me = CH₃)

In einem 4ml Schnappdeckelgläschen werden 60 mg dentritscher Kupferkatalysatorpulver und 120 mg einer 16,7 Gew.%igen Mikroemulsion (20g IRA 900 (s. Beispiel 1) mit 80 g H₂O, 20 g Isopropanol) eingewogen, mit 2 ml Isopropanol verdünnt und die Mischung für 15 min im Ultraschallbad homogenisiert. Die hergestellte Dispersion wird auf eine bereits hergestellte Grundschicht (4cmx10cm) aus 15 Gew.% PTFE und 85 Gew.% Kupferpulver mit einem Partikeldurchmesser der Kupferpartikel bei der Herstellung von 100-150 µm aufgetragen und im Argonstrom eingetrocknet und der Aufgießvorgang 3x wiederholt. Die Elektrode wird vor der Verwendung für 12h im Argonstrom getrocknet.

Der Zellaufbau zur Untersuchung der Produktselektivität entsprach dem von Beispiel 1, außer dass die entsprechend hergestellte GDE von Beispiel 5 als Kathode verwendet wurde.

Fig. 19 zeigt die Ergebnisse hinsichtlich der Produktselektivität, die mit dieser Elektrode erhalten werden können, in Abhängigkeit von der Stromdichte. Wie in der Figur gezeigt unterdrückt das Anionenaustauscherharz die Bildung von Wasserstoff auf eine FE von ca. 20%. Die Bildung von Methan erfolgt mit einer FE von ungefähr 5%. Die Bildung von Flüssigprodukten wie Ethanol, Propanol wird intensiviert, wie aus der Abweichung vom der Summe gasförmiger Produkte von 100 % ersichtlich ist.

### Beispiel 6: Beschichtung einer hydrophoben Grundschicht mit einem Anionenaustauscher Ionomer mit R₄N⁺-Gruppen

In einem 4ml Schnappdeckelgläschen werden 60 mg dentritsches Kupferkatalysatorpulver und 120 mg einer 5 Gew.%igen Dispersion (FUMA Tech AS4, n-Propanol; FUMA Tech), eingewogen und mit 2ml n-Propanol verdünnt und die Mischung für 15 min im Ultraschallbad homogenisiert. Die hergestellte Dispersion wird auf eine bereits hergestellte Grundschicht (4cmx10cm) aus 15 Gew.% PTFE und 85 Gew.% Kupferpulver mit einem Partikeldurchmesser der Kupferpartikel bei der Herstellung von 100-150 µm aufgetragen und im Argonstrom eingetrocknet und der Aufgießvorgang 3x wiederholt. Die Elektrode wird vor der Verwendung für 12h im Argonstrom getrocknet.

Der Zellaufbau zur Untersuchung der Produktselektivität entsprach dem von Beispiel 1, außer dass die entsprechend hergestellte GDE von Beispiel 6 als Kathode verwendet wurde.

Der Zellaufbau zur Untersuchung der Produktselektivität entsprach dem von Beispiel 1, außer dass die entsprechend hergestellte GDE von Beispiel 6 als Kathode verwendet wurde.

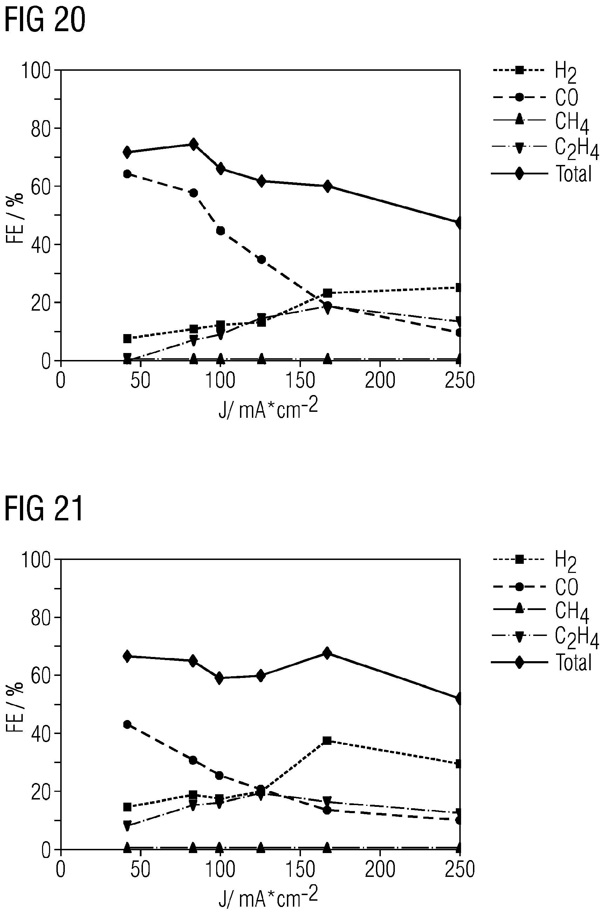

Fig. 20 zeigt die Ergebnisse hinsichtlich der Produktselektivität, die mit dieser Elektrode erhalten werden können, in Abhängigkeit von der Stromdichte. Wie in der Figur gezeigt unterdrückt das Anionenaustauscher-Ionomer die Bildung von Wasserstoff auf eine FE von ca. 10-20%. Die Bildung von Methan wird vollständig unterdrückt. Die Bildung von CO (FE=65-60%) wird bei niedrigen Stromdichten zwischen 40-80mA/cm² beobachtet und unterscheidet sich signifikant. Die Bildung von Ethylen ist ebenfalls gegenüber allen durchgeführten Experimenten selektiver bei höheren Stromdichten (J = ca.170mA/cm²).

### Beispiel 7: Beschichtung einer hydrophoben Grundschicht mit dem sauren Kationenaustauscher-Ionomer (Nafion) (Vergleichsbeispiel)

In einem 4ml Schnappdeckelgläschen werden 60 mg Kupferkatalysatorpulver und 60 mg einer 20 Gew.%igen Dispersion (Lösungsmittel: 34 Gew.% Wasser, Rest aliphatische Alkohole, Dupont) (Nafion, Aldrich)), eingewogen und mit 2ml Isopropanol verdünnt und die Mischung für 15 min im Ultraschallbad homogenisiert. Die hergestellte Dispersion wird auf eine bereits hergestellte Grundschicht (4cmx10cm) aus 15 Gew.% PTFE und 85 Gew.% Kupferpulver mit einem Partikeldurchmesser der Kupferpartikel bei der Herstellung von 100-150 µm aufgetragen und im Argonstrom eingetrocknet und der Aufgießvorgang 3x wiederholt. Die Elektrode wird vor der Verwendung für 12h im Argonstrom getrocknet.

Der Zellaufbau zur Untersuchung der Produktselektivität entsprach dem von Beispiel 1, außer dass die entsprechend hergestellte GDE von Beispiel 7 als Kathode verwendet wurde.

Fig. 21 zeigt die Ergebnisse hinsichtlich der Produktselektivität, die mit dieser Elektrode erhalten werden können, in Abhängigkeit von der Stromdichte. Wie in der Figur gezeigt fördert das saure Nafion-Ionomer die unerwünschte Bildung von Wasserstoff bei erhöhten Stromdichten mit FE = ca. 40%. Die Bildung von Methan wird vollständig unterdrückt. Die Bildung von CO (FE=45-35%) wird bei niedrigen Stromdichten zwischen 40-80mA/cm² beobachtet und unterscheidet sich signifikant.

### Beispiel 8: Referenzversuch gemäß US 2016/0251766A1 zur Herstellung von CO

Es wurde ein Versuch gemäß Beispiel 4 der US 2016/0251766A1 ohne Abwandlung durchgeführt.

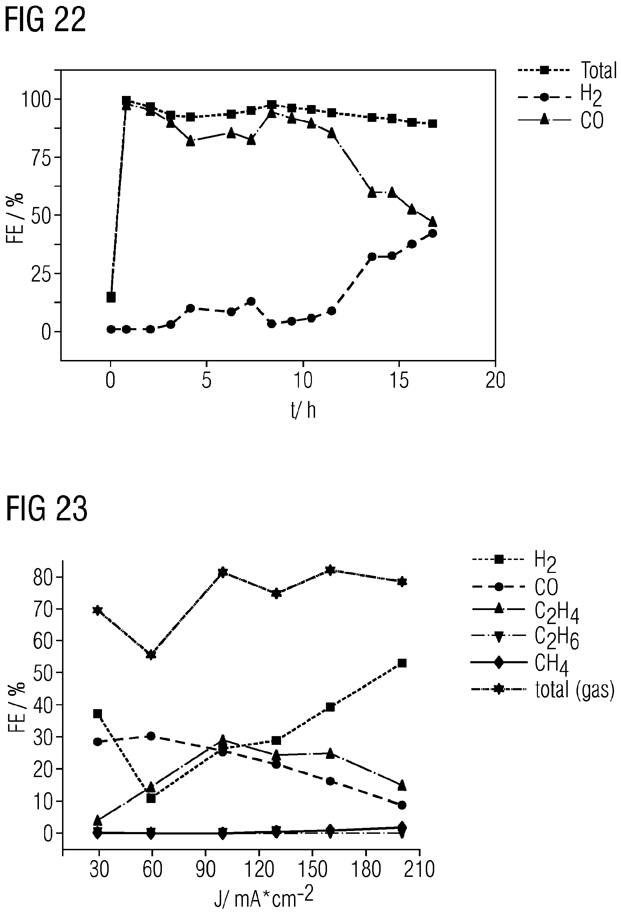

Fig. 22 zeigt die Verfolgung der Produkt-Faraday Effizienz von CO und H₂ über die Zeit bei einer konstanten Stromdichte von 50mA/cm². Nach 10 h Betriebsdauer zeigte der Aufbau in der MEA-Anordnung mit katalysatorbeschichteten Gasdiffusionslayern (Silberkathode, Iridiumoxid-Anode) eine Abnahme der CO-Herstellung. Nach 10h wurde eine Zerstörung der Anode beobachtet, da das Ionomer den oxidativen Bedingungen nicht standhält und zersetzt wird.

### Beispiel 9: Beschichtung einer hydrophoben Grundschicht mit einem Anionenaustauscher-Ionomer Tokuyama AS4 und unter zusätzlicher Verwendung einer Tokuyama AEM 207-Membran unter Verwendung eines Zellaufbaus mit Doppelmembran

Die GDE wurde entsprechend Beispiel 3 mit Tokuyama AS4 als Anionenaustauscher-Ionomer hergestellt.

Der Zellaufbau zur Untersuchung der Produktselektivität entsprach dem von Beispiel 3 mit der entsprechenden GDE mit Tokuyama AS4, außer dass zusätzlich eine Tokuyama AEM 207 Membran zusätzlich verwendet wurde, welche in direktem Kontakt mit der GDE war. Der Versuchsaufbau entspricht also dem in Fig. 13 dargestellten.

Fig. 23 zeigt die Ergebnisse hinsichtlich der Produktselektivität, die mit dieser Elektrode erhalten werden können, in Abhängigkeit von der Stromdichte. Wie in der Figur gezeigt unterdrückt das Anionenaustauscher-Ionomer Tokuyama AS4 die unerwünschte Bildung von Wasserstoff bei erhöhten Stromdichten. Der Zellaufbau ermöglicht eine Steigerung der Faraday-Effizienz für Ethylen um den Faktor 2 auf 30%. Die Bildung von Methan wird vollständig unterdrückt. Die Bildung von CO (FE=30%) wird bei niedrigen Stromdichten zwischen 40-80mA/cm² beobachtet und unterscheidet sich signifikant.

Die vorliegende Erfindung betrifft ein Verfahren und ein Elektrolysesystem zur elektrochemischen Kohlenstoffdioxid-Verwertung. Kohlenstoffdioxid (CO₂) kann in eine Elektrolysezelle eingeleitet und an einer Kathode mithilfe einer Gasdiffusionselektrode (GDE) auf der Kathodenseite reduziert werden. GDE sind poröse Elektroden, in denen flüssige, feste und gasförmige Phasen vorliegen und der elektrisch leitende Katalysator die elektrochemische Reaktion zwischen der flüssigen und der gasförmige Phase katalysiert. Zur elektrochemischen Kohlenstoffdioxid-Verwertung werden vorzugsweise katalysatorbasierte Gasdiffusionselektroden verwendet, die in ähnlicher Weise aus der großtechnischen Chloralkalielektrolyse bekannt sind. Die katalysatorbasierte Gasdiffusionselektrode kann zum einen mit einem flüssigen, z.B. salzhaltigen, Elektrolyt in Kontakt stehen, oder direkt an einer Separator-Membran anliegen. Für letzteren Fall ist eine ionische Anbindung der Katalysatorpartikel an die Membran vorteilhaft, da die Membran in dieser Betriebsweise als Festelektrolyt verwendet werden kann. Um eine Ionenleitfähigkeit zu ermöglichen, werden Ionenaustauschermaterialen in die Gasdiffusionselektrode integriert, die bevorzugt funktionelle Gruppen wie z.B. quaternäre Ammoniumgruppen aufweisen und somit als Anionentransporter fungieren.

Das Einbringen von pulverförmigen Ionentauschermaterialien, z.B. Austauscherharzen, z.B. Anionenaustauschermaterialien in eine katalysatorbasierte Gasdiffusionselektrode ist eine neue Methode, um das Prozessfenster der elektrochemischen Reduktion von CO₂ und/oder CO zu verbreitern. Die Modifikation bietet insbesondere Vorteile ab einer Stromdichte >150mA/cm², da die Erzeugung von Wasserstoff herabgesenkt werden kann. Es können beispielsweise erhöhte Faraday Effizienzen für CO bzw. Ethylen erhalten werden. Die Methode bietet des Weiteren die Möglichkeit der Erhöhung der ionischen Leitfähigkeit der Gasdiffusionselektrode, wodurch die Entstehung von Konzentrationsgradienten vermindert werden kann. Die Methode bietet darüber hinaus die Möglichkeit, eine katalysatorbasierte Gasdiffusionselektrode innerhalb eines Membran-Elektroden-Aufbaus, insbesondere MEA (Membrane Electrode Assembly)-Aufbaus, zu verwenden.

Es können formstabile Gasdiffusionselektroden auf Katalysatorpulverbasis hergestellt werden, die in einer großtechnischen Elektrolyseur-Anwendung im Rahmen der elektrochemischen CO₂ eingesetzt werden können und die eine verbesserte Langzeitstabilität des Elektrolysebetriebs ermöglichen. Der Einsatz von Ionenaustauschermaterialien, z.B. Anionenaustauschermaterialien, insbesondere von Anionenaustauscherharzen, in der Gasdiffusionelektrode bildet einen niederenergetischen Pfad zur Ableitung der entstehenden Hydroxid- und Hydrogencarbonatanionen, der gleichzeitig die Eindiffusion von beweglichen Kationen aus dem Elektrolyt aufgrund der positiven Polymerbackbonestruktur verhindern kann.

## Patentansprüche

1. Elektrolysezelle, umfassend eine Gasdiffusionselektrode, umfassend ein Metall M, das ausgewählt ist aus Ag, Au, Cu, Pd und Mischungen und/oder Legierungen und/oder Salzen davon, und mindestens einen Binder, als Kathode,
wobei die Gasdiffusionselektrode hydrophile und hydrophobe Poren und/oder Kanäle umfasst, wobei in den Poren und/oder Kanälen der Gasdiffusionselektrode zumindest teilweise ein Ionenaustauschermaterial enthalten ist, wobei das Ionenaustauschermaterial ein Anionenaustauschermaterial ist, wobei das Anionenaustauschermaterial keine Imidazolium-, Pyridinium- und β-Wasserstoff enthaltenden Gruppen aufweist.

2. Elektrolysezelle nach Anspruch 1, wobei das Ionenaustauschermaterial ein Ionenaustauscherharz ist.

3. Elektrolysezelle nach Anspruch 1 oder 2, wobei auf der Oberfläche der Gasdiffusionselektrode zumindest teilweise ein Ionenaustauschermaterial aufgebracht ist.

4. Elektrolysezelle nach Anspruch 1, wobei das Anionenaustauschermaterial bei einem pH von mehr als 7 stabil ist.

5. Elektrolysezelle nach einem der Ansprüche 1 bis 4, wobei das Anionenaustauschermaterial quaternäre Alkylammoniumgruppen aufweist.

6. Elektrolysezelle nach einem der Ansprüche 3 bis 5, wobei das Anionenaustauschermaterial zumindest teilweise fluoriert ist.

7. Elektrolysezelle nach einem der Ansprüche 3 bis 6, wobei das Anionenaustauschermaterial weiterhin OH-Gruppen und/oder NH₂-Gruppen aufweist.

8. Elektrolysezelle nach einem der vorigen Ansprüche, umfassend einen Träger, bevorzugt in Form eines Flächengebildes, und
eine Schicht umfassend das Metall M, das Ionenaustauschermaterial und den mindestens einen Binder, wobei die Schicht die hydrophilen und hydrophoben Poren und/oder Kanäle umfasst, wobei der Gewichtsanteil des Ionenaustauschermaterials in der Schicht bevorzugt größer ist als der Gewichtsanteil des Binders.

9. Elektrolysezelle nach einem der Ansprüche 1 bis 7, umfassend einen Träger, bevorzugt in Form eines Flächengebildes, und
eine erste Schicht umfassend das Metall M, das Ionenaustauschermaterial und optional mindestens einen Binder, wobei die erste Schicht hydrophile und optional hydrophobe Poren und/oder Kanäle umfasst,
weiter umfassend eine zweite Schicht umfassend das Metall M und mindestens einen Binder, wobei die zweite Schicht sich auf dem Träger befindet und die erste Schicht auf der zweiten Schicht, wobei der Gehalt an Binder in der ersten Schicht bevorzugt kleiner ist als in der zweiten Schicht, wobei die zweite Schicht hydrophobe Poren und/oder Kanäle umfasst, weiter bevorzugt wobei die zweite Schicht 3 - 30 Gew.% Binder, bevorzugt 10 - 30 Gew.% Binder, weiter bevorzugt 10 - 20 Gew.% Binder, bezogen auf die zweite Schicht, und die erste Schicht weiter bevorzugt 0 - 10 Gew.% Binder, bevorzugt 0,1 - 10 Gew.% Binder, weiter bevorzugt 1 - 7 Gew.% Binder, noch weiter bevorzugt 3 - 7 Gew.% Binder, bezogen auf die erste Schicht, aufweist.

10. Elektrolysezelle nach einem der Ansprüche 1 bis 9, weiter umfassend eine Anode und mindestens eine Membran und/oder mindestens ein Diaphragma zwischen der Kathode und Anode, bevorzugt mindestens eine Anionenaustauschermembran und/oder ein Anionaustauscherdiaphragma.

11. Elektrolysezelle nach Anspruch 10, wobei mindestens eine Membran und/oder ein Diaphragma, bevorzugt die Anionenaustauschermembran und/oder das Anionenaustauscherdiaphragma, nicht in Kontakt mit der Anode ist, weiter bevorzugt wobei zwischen der Anionenaustauschermembran und/oder dem Anionenaustauscherdiaphragma und der Anode mindestens eine weitere Membran und/oder ein weiteres Diaphragma vorgesehen ist.

12. Verfahren zur Elektrolyse von CO₂ und/oder CO, wobei Elektrolysezelle nach einem der Ansprüche 1 bis 11 verwendet wird.

13. Verwendung einer Elektrolysezelle nach einem der Ansprüche 1 bis 11 bei der Elektrolyse von CO₂ und/oder CO.

14. Verfahren zur Herstellung einer Gasdiffusionselektrode, umfassend ein Metall M, das ausgewählt ist aus Ag, Au, Cu, Pd und Mischungen und/oder Legierungen und/oder Salzen davon, und mindestens einen Binder, wobei die Gasdiffusionselektrode hydrophile und hydrophobe Poren und/oder Kanäle umfasst, wobei in den Poren und/oder Kanälen der Gasdiffusionselektrode zumindest teilweise ein Ionenaustauschermaterial enthalten ist, wobei das Ionenaustauschermaterial ein Anionenaustauschermaterial ist, wobei das Anionenaustauschermaterial keine Imidazolium-, Pyridinium- und β-Wasserstoff enthaltenden Gruppen aufweist; wobei das Verfahren umfasst:
- Herstellung einer Mischung umfassend zumindest das Metall M, das Ionenaustauschermaterial und den mindestens einen Binder,
- Auftragen der Mischung umfassend zumindest das Metall M, das Ionenaustauschermaterial und den mindestens einen Binder auf einen Träger, bevorzugt in Form eines Flächengebildes, und
- trockenes oder angefeuchtetes Aufwalzen der Mischung auf den Träger zum Bilden einer Schicht; oder
- Herstellung einer ersten Mischung umfassend zumindest das Metall M, das Ionenaustauschermaterial und optional mindestens einen Binder,
- Herstellen einer zweiten Mischung umfassend zumindest das Metall M und mindestens einen Binder,
- Auftragen der zweiten Mischung umfassend zumindest das Metall M und den mindestens einem Binder auf einen Träger, bevorzugt in Form eines Flächengebildes,
- Auftragen der ersten Mischung umfassend zumindest das Metall M, das Ionenaustauschermaterial und optional mindestens einem Binder auf die zweite Mischung,
- Optional Auftragen weiterer Mischungen auf die erste Mischung, und
- trockenes oder angefeuchtes Aufwalzen der zweiten und ersten Mischung und ggf. weiterer Mischungen auf den Träger zum Bilden einer zweiten und einer ersten Schicht und ggf. weiterer Schichten; oder
- Bereitstellen einer Gasdiffusionselektrode, umfassend das Metall M und den mindestens einen Binder, wobei die Gasdiffusionselektrode die hydrophilen und hydrophoben Poren und/oder Kanäle umfasst, und
- zumindest teilweise Einbringen des Ionenaustauschermaterials in die Poren und/oder Kanälen der Gasdiffusionselektrode.

15. Elektrolyseanlage, umfassend eine Elektrolysezelle nach einem der Ansprüche 1 bis 11.

## Claims

1. Electrolysis cell comprising a gas diffusion electrode comprising a metal M selected from Ag, Au, Cu, Pd and mixtures and/or alloys and/or salts thereof, and at least one binder, as cathode,
wherein the gas diffusion electrode comprises hydrophilic and hydrophobic pores and/or channels, wherein an ion exchange material is present at least to some degree in the pores and/or channels of the gas diffusion electrode, wherein the ion exchange material is an anion exchange material, wherein the anion exchange material does not have any imidazolium-, pyridinium- and β-hydrogen-containing groups.

2. Electrolysis cell according to Claim 1, wherein the ion exchange material is an ion exchange resin.

3. Electrolysis cell according to Claim 1 or 2, wherein an ion exchange material has been applied at least to some degree to the surface of the gas diffusion electrode.

4. Electrolysis cell according to Claim 1, wherein the anion exchange material is stable at a pH of more than 7.

5. Electrolysis cell according to any of Claims 1 to 4, wherein the anion exchange material has quaternary alkylammonium groups.

6. Electrolysis cell according to any of Claims 3 to 5, wherein the anion exchange material has been at least partly fluorinated.

7. Electrolysis cell according to any of Claims 3 to 6, wherein the anion exchange material also has OH groups and/or NH₂ groups.

8. Electrolysis cell according to any of the preceding claims, comprising a carrier, preferably in the form of a sheetlike structure, and
a layer comprising the metal M, the ion exchange material and the at least one binder, wherein the layer comprises the hydrophilic and hydrophobic pores and/or channels, wherein the proportion by weight of the ion exchange material in the layer is preferably greater than the proportion by weight of the binder.

9. Electrolysis cell according to any of Claims 1 to 7, comprising a carrier, preferably in the form of a sheetlike structure, and
a first layer comprising the metal M, the ion exchange material and optionally at least one binder, wherein the first layer comprises hydrophilic and optionally hydrophobic pores and/or channels,
further comprising a second layer comprising the metal M and at least one binder, wherein the second layer is present atop the carrier and the first layer atop the second layer, wherein the binder content in the first layer is preferably less than in the second layer, wherein the second layer comprises hydrophobic pores and/or channels, further preferably wherein the second layer includes 3-30% by weight of binder, preferably 10-30% by weight of binder, further preferably 10-20% by weight of binder, based on the second layer, and the first layer further preferably includes 0-10% by weight of binder, preferably 0.1-10% by weight of binder, further preferably 1-7% by weight of binder, even further preferably 3-7% by weight of binder, based on the first layer.

10. Electrolysis cell according to any of Claims 1 to 9, further comprising an anode and at least one membrane and/or at least one diaphragm between the cathode and anode, preferably at least one anion exchange membrane and/or one anion exchange diaphragm.

11. Electrolysis cell according to Claim 10, wherein at least one membrane and/or one diaphragm, preferably the anion exchange membrane and/or the anion exchange diaphragm, is not in contact with the anode, further preferably with provision of at least one further membrane and/or one further diaphragm between the anion exchange membrane and/or the anion exchange diaphragm and the anode.

12. Method of electrolysis of CO₂ and/or CO, wherein an electrolysis cell according to any of Claims 1 to 11 is used.

13. Use of an electrolysis cell according to any of Claims 1 to 11 in the electrolysis of CO₂ and/or CO.

14. Process for producing a gas diffusion electrode, comprising a metal M selected from Ag, Au, Cu, Pd and mixtures and/or alloys and/or salts thereof, and at least one binder, wherein the gas diffusion electrode comprises hydrophilic and hydrophobic pores and/or channels, wherein an ion exchange material is present at least to some degree in the pores and/or channels of the gas diffusion electrode, wherein the ion exchange material is an anion exchange material, wherein the anion exchange material does not have any imidazolium-, pyridinium- and β-hydrogen-containing groups; wherein the process comprises:
- production of a mixture comprising at least the metal M, the ion exchange material and the at least one binder,
- application of the mixture comprising at least the metal M, the ion exchange material and the at least one binder to a carrier, preferably in the form of a sheetlike structure, and
- dry or moistened rolling of the mixture onto the carrier to form a layer; or
- production of a first mixture comprising at least the metal M, the ion exchange material and optionally at least one binder,
- production of a second mixture comprising at least the metal M and at least one binder,
- application of the second mixture comprising at least the metal M and the at least one binder to a carrier, preferably in the form of a sheetlike structure,
- application of the first mixture comprising at least the metal M, the ion exchange material and optionally at least one binder to the second mixture,
- optional application of further mixtures to the first mixture, and
- dry or moistened rolling of the second and first mixture and any further mixtures onto the carrier to form a second and a first layer and optionally further layers; or
- provision of a gas diffusion electrode comprising the metal M and the at least one binder, wherein the gas diffusion electrode comprises the hydrophilic and hydrophobic pores and/or channels, and
- at least partial introduction of the ion exchange material into the pores and/or channels of the gas diffusion electrode.

15. Electrolysis system comprising an electrolysis cell according to any of Claims 1 to 11.

## Revendications

1. Cellule d'électrolyse, comprenant une électrode à diffusion de gaz, comprenant un métal M, qui est choisi parmi Ag, Au, Cu, Pd et leurs mélanges et/ou alliages et/ou sels, et au moins un liant, comme cathode,
l'électrode à diffusion de gaz comprenant des pores et/ou des canaux hydrophiles et hydrophobes, dans laquelle dans les pores et/ou les canaux de l'électrode à diffusion de gaz est contenu au moins en partie un matériau échangeur d'ions, le matériau échangeur d'ions étant un matériau échangeur d'anions, le matériau échangeur d'anions n'ayant pas de groupe imidazolium, pyridinium et contenant de l'hydrogène β.

2. Cellule d'électrolyse suivant la revendication 1, dans laquelle le matériau échangeur d'ions est une résine échangeuse d'ions.

3. Cellule d'électrolyse suivant la revendication 1 ou 2, dans laquelle un matériau échangeur d'ions est déposé au moins en partie à la surface de l'électrode à diffusion de gaz.

4. Cellule d'électrolyse suivant la revendication 1, dans laquelle le matériau échangeur d'anions est stable à un pH de plus de 7.

5. Cellule d'électrolyse suivant l'une des revendications 1 à 4, dans laquelle le matériau échangeur d'anions a un groupe alcoylammonium quaternaire.

6. Cellule d'électrolyse suivant l'une des revendications 3 à 5, dans laquelle le matériau échangeur d'anions est fluoré au moins en partie.

7. Cellule d'électrolyse suivant l'une des revendications 3 à 6, dans laquelle le matériau échangeur d'anions a en outre des groupes OH et/ou des groupes NH₂.

8. Cellule d'électrolyse suivant l'une des revendications précédentes comprenant un support, de préférence sous la forme d'une surface, et
une couche comprenant le métal M, le matériau échangeur d'ions et le au moins un liant, la couche comprenant les pores et/les canaux hydrophiles et/hydrophobes, la proportion en poids du matériau échangeur d'anions dans la couche étant de préférence plus grande que la proportion en poids du liant.

9. Cellule d'électrolyse suivant l'une des revendications 1 à 7, comprenant un support, de préférence sous la forme d'une surface, et
une première couche comprenant le métal M, le matériau échangeur d'ions et éventuellement un liant, la première couche comprenant les pores et/ou canaux hydrophiles et éventuellement hydrophobes,
comprenant en outre une deuxième couche comprenant le métal M et au moins un liant, la deuxième couche se trouvant sur le support et la première couche sur la deuxième couche, la teneur en liant de la première couche étant de préférence plus petite que dans la deuxième couche, la deuxième couche comprenant des pores et/ des canaux hydrophobes, d'une manière encore plus préférée la deuxième couche ayant de 3 à 30 % en poids de liant, d'une manière préférée de 10 à 30 % en poids de liant, d'une manière encore plus préférée de 10 à 20 % en poids de liant, rapportée à la deuxième couche, et la première couche ayant d'une manière plus préférée de 0 à 10 % en poids de liant, d'une manière encore plus préférée de 0,1 à 10 % en poids de liant, d'une manière encore plus préférée de 1 à 7 % en poids de liant, d'une manière encore plus préférée de 3 à 7 % en poids de liant, rapporté à la première couche.

10. Cellule d'électrolyse suivant l'une des revendications 1 à 9, comprenant en outre une anode et au moins une membrane et/ou au moins un diaphragme entre la cathode et l'anode, de préférence au moins une membrane échangeuse d'anions et/ou un diaphragme échangeur d'anions.

11. Cellule d'électrolyse suivant la revendication 10, dans laquelle au moins une membrane et/ou un diaphragme, de préférence la membrane échangeuse d'anions et/ou le diaphragme échangeur d'anions, n'est pas en contact avec l'anode, d'une manière encore préférée il est prévu, entre la membrane échangeuse d'anions et/ou le diaphragme échangeur d'anions et l'anode, au moins une autre membrane et/ou un autre diaphragme.

12. Procédé d'électrolyse de CO₂ et/ou de CO, dans lequel on utilise la cellule d'électrolyse suivant l'une des revendications 1 à 11.

13. Utilisation d'une cellule d'électrolyse suivant l'une des revendications 1 à 11 dans l'électrolyse de CO₂ et/ou CO.

14. Procédé de fabrication d'une électrode à diffusion de gaz comprenant un métal M, qui est choisi parmi Ag, Au, Cu, Pd et leurs mélanges et/ou alliages et/ou sels, et au moins un liant, comme cathode, l'électrode à diffusion de gaz comprenant des pores et/ou des canaux hydrophiles et hydrophobes, dans laquelle dans les pores et/ou les canaux de l'électrode à diffusion de gaz est contenu au moins en partie un matériau échangeur d'ions, le matériau échangeur d'ions étant un matériau échangeur d'anions, le matériau échangeur d'anions n'ayant pas de groupe imidazolium, pyridinium et contenant de l'hydrogène β ; dans lequel le procédé comprend :
- production d'un mélange comprenant au moins le métal M, le matériau échangeur d'ions et le au moins un liant,
- dépôt du mélange comprenant au moins le métal M, le matériau échangeur d'ions et le au moins un liant sur un support, de préférence sous la forme d'une surface, et
- laminage à sec ou à l'état humide du mélange sur le support pour la formation d'une couche ; ou
- production d'un premier mélange comprenant au moins le métal M, le matériau échangeur d'ions et éventuellement au moins un liant,
- production d'un deuxième mélange comprenant au moins le métal M et au moins un liant,
- dépôt du deuxième mélange comprenant au moins le métal M et le au moins un liant sur un support, de préférence sous la forme d'une surface,
- dépôt du premier mélange comprenant au moins le métal M, le matériau échangeur d'ions et éventuellement au moins un liant sur le deuxième mélange,
- dépôt éventuel d'autres mélanges sur le premier mélange, et
- laminage à sec ou à l'état humide du deuxième et du premier mélange et le cas échéant d'autres mélanges sur le support pour former une deuxième et une première couche, et le cas échéant d'autres couches, ou
- mise à disposition d'une électrode à diffusion de gaz, comprenant le métal M et le au moins un liant, l'électrode à diffusion de gaz comprenant les pores et/canaux hydrophiles et hydrophobes, et
- introduction au moins en partie du matériau échangeur d'ions dans les pores et/ou les canaux de l'électrode à diffusion de gaz.

15. Installation d'électrolyse comprenant une cellule d'électrolyse suivant l'une des revendications 1 à 11.
